# EUROPEAN PATENT APPLICATION

(11) **EP 4 224 901 A1**
(43) Date of publication of application: **09.08.2023**
(21) Application number: 21888400.5
(22) Date of filing: 20.10.2021
(51) Int. Cl.: H04W 12/06, H04W 88/04

(54) **COMMUNICATION METHOD AND APPARATUS**

(30) Priority: 05.11.2020 CN 202011222778; 15.12.2020 CN 202011478279
(71) Applicant: Huawei Technologies Co., Ltd., Shenzhen, Guangdong 518129 (CN)
(72) Inventor: YAO, Chuting, Shenzhen, Guangdong 518129 (CN); XU, Haibo, Shenzhen, Guangdong 518129 (CN)
(74) Representative: Gill Jennings & Every LLP
(86) International application number: PCT/CN2021/125070
(87) International publication number: WO 2022/095703

(57) **Abstract**

This application relates to a communication method and apparatus. A first network device receives first information from a second terminal device or a third network device, where the first information includes an identifier of a first terminal device, and the third network device is a network device on which the second terminal device camps. The first network device sends the identifier of the first terminal device to a second network device, where the identifier of the first terminal device is used to determine whether the first terminal device is authorized to provide a relay service. The first network device receives second information from the second network device, where the second information is used to indicate that the first terminal device is authorized to provide a relay service, or indicate that the first terminal device is not authorized to provide a relay service. Even if the first terminal device is in an RRC non-connected state, the first network device may determine, by using the second network device, whether the first terminal device is authorized to provide a relay service, so that a network access success rate of the second terminal device can be improved.

## Description

### CROSS REFERENCE

This application claims priority to Chinese Patent Application No. 202011222778.9, filed with the China National Intellectual Property Administration on November 5, 2020 and entitled "PATH SWITCH METHOD WHEN RELAY UE IS IDLE OR INACTIVE", and priority to Chinese Patent Application No. 202011478279.6, filed with the China National Intellectual Property Administration on December 15, 2020 and entitled "COMMUNICATION METHOD AND APPARATUS", which are incorporated herein by reference in their entireties.

### TECHNICAL FIELD

This application relates to the field of communication technologies, and in particular, to a communication method and apparatus.

### BACKGROUND

In a currently proposed user equipment (user equipment, UE) relay (relay) technology, there is a relay manner in which remote (remote) UE can be visible to a radio access network (radio access network, RAN). In this relay manner, the remote UE can implement path switch (path switch) or link (link) switch. For example, the remote UE may be switched from a direct link (direct link) between the remote UE and a base station to an indirect link (indirect link) on which the remote UE indirectly communicates with the base station. The direct link herein is a link for communication between the UE and the base station through a Uu interface. The indirect link is a relay link. In other words, the remote UE is connected to a network by using relay UE.

In the current technology, it is mainly considered that the relay UE is in a radio resource control (radio resource control, RRC) connected (connected) state, so that the remote UE can be switched from the direct link to the indirect link. However, before the remote UE is switched to communicate with the network by using the relay UE, the relay UE is likely to be in an RRC idle (idle) state or an RRC inactive (inactive) state. Some UEs are authorized to provide a relay service, but some UEs are not authorized to provide a relay service. Accordingly, the UEs that are not authorized to provide a relay service cannot provide a relay service. If the relay UE is in the RRC connected state, the base station can determine whether the relay UE is authorized to provide a relay service. If it is determined that the relay UE is authorized to provide a relay service, the base station then allows the remote UE to be switched to communicate with the network by using the relay UE. However, if the relay UE is in the RRC idle state or the RRC inactive state, the base station cannot determine whether the relay UE is authorized to provide a relay service. If the remote UE attempts to access the network by using the UE that is not authorized to provide a relay service, the remote UE fails to access the network.

### SUMMARY

Embodiments of this application provide a communication method and apparatus, to determine whether UE in an RRC non-connected state is authorized to provide a relay service, thereby improving a network access success rate of remote UE.

According to a first aspect, a first communication method is provided. The method may be performed by a first network device, or may be performed by a chip system. The chip system may implement a function of the first network device. For example, the first network device is an access network device, for example, a base station. The method includes: The first network device receives first information from a second terminal device or a third network device, where the first information includes an identifier of a first terminal device, and the third network device is a network device on which the second terminal device camps; the first network device sends the identifier of the first terminal device to a second network device, where the identifier of the first terminal device is used to determine whether the first terminal device is authorized to provide a relay service; and the first network device receives second information from the second network device, where the second information is used to indicate that the first terminal device is authorized to provide a relay service, or indicate that the first terminal device is not authorized to provide a relay service.

In this embodiment of this application, even if the first terminal device is in an RRC non-connected state (for example, an RRC idle state or an RRC inactive state), the first network device may determine, by using the second network device, whether the first terminal device is authorized to provide a relay service. In this way, when it is determined that the first terminal device is authorized to provide a relay service, another terminal device can be allowed to access a network by using the first terminal device, so that a network access success rate of the another terminal device is improved.

With reference to the first aspect, in a first optional implementation of the first aspect, the first information further includes state information of the first terminal device, and the state information of the first terminal device is used to indicate that the first terminal device is in the RRC inactive state or the RRC idle state.

The first information sent by the second terminal device or the third network device to the first network device may include the state information of the first terminal device, so that the first network device can determine a state of the first terminal device based on the state information of the first terminal device. For example, the first network device can determine whether the first terminal device is in the RRC idle state or the RRC inactive state. In this way, the first network device does not need to determine the state of the first terminal device in another manner, and implementation is simple.

With reference to the first aspect or the first optional implementation of the first aspect, in a second optional implementation of the first aspect, when the second information is used to indicate that the first terminal device is authorized to provide a relay service, the method further includes: The first network device sends a first RRC message, where the first RRC message includes first configuration information, and the first configuration information is used to configure the second terminal device to access a network by using the first terminal device. If the first terminal device is authorized to provide a relay service, the first network device may configure the second terminal device. For example, the first network device may configure the second terminal device by sending first configuration information.

With reference to the second optional implementation of the first aspect, in a third optional implementation of the first aspect, the first RRC message further includes first indication information, and the first indication information is used to indicate to trigger the first terminal device to enter an RRC connected state. The first network device learns that the first terminal device is in the RRC non-connected state. However, if the second terminal device needs to access the network by using the first terminal device, the first terminal device needs to enter the RRC connected state. Therefore, the first network device may indicate the second terminal device to trigger the first terminal device to enter the RRC connected state, so that the first terminal device can normally provide a relay service.

With reference to the first aspect or any one of the first optional implementation of the first aspect to the third optional implementation of the first aspect, in a fourth optional implementation of the first aspect, the second information is a context of the first terminal device, or the second information is information used to indicate whether the first terminal device is authorized to provide a relay service. For example, the second information is indication information, and the indication information may indicate whether the first terminal device is authorized to provide a relay service. In this way, an information amount of the second information can be reduced, and signaling overheads can be reduced. For another example, the second information is not indication information, but includes the context of the first terminal device. Authorization information of whether a terminal device is authorized to provide a relay service is recorded in a context of the terminal device. Therefore, whether the terminal device is authorized to provide a relay service can be determined by obtaining the context of the terminal device. Alternatively, the second network device may send the context of the first terminal device to the first network device, so that the first network device can determine whether the first terminal device is authorized to provide a relay service.

With reference to the first aspect or any one of the first optional implementation of the first aspect to the fourth optional implementation of the first aspect, in a fifth optional implementation of the first aspect, when the first terminal device is in the RRC inactive state, the second network device is an anchor network device of the first terminal device; and when the first terminal device is in the RRC idle state, the second network device is a core network device.

If the first terminal device is in the RRC inactive state, the context of the first terminal device may be stored in the anchor network device of the first terminal device. Therefore, the first network device may determine, by using the anchor network device of the first terminal device, whether the first terminal device is authorized to provide a relay service. Alternatively, if the first terminal device is in the RRC idle state, the context of the first terminal device may be stored in the core network device (for example, an AMF, an SMF, or a PCF). Therefore, the first network device may determine, by using the core network device, whether the first terminal device is authorized to provide a relay service.

With reference to the first aspect or the first optional implementation of the first aspect or the second optional implementation of the first aspect, in a sixth optional implementation of the first aspect, the method further includes: The first network device generates a paging message, where the paging message is used to page the first terminal device; and the first network device sends the paging message. According to the solution in this embodiment of this application, if the first network device determines that the first terminal device is authorized to provide a relay service, the first network device may indicate the second terminal device to trigger the first terminal device to enter the RRC connected state, or the first network device may page the first terminal device, so that the first terminal device enters the RRC connected state. If the first network device pages the first terminal device, the second terminal device does not need to trigger the first terminal device to enter the RRC connected state. This reduces operations that need to be performed by the second terminal device, so that the technical solution in this embodiment of this application can be applied to a terminal device having a lower capability.

With reference to the sixth optional implementation of the first aspect, in a seventh optional implementation of the first aspect, when the state of the first terminal device is the RRC inactive state, the paging message includes an I-RNTI of the first terminal device; or when the state of the first terminal device is the RRC idle state, the paging message includes a 5G-S-TMSI of the first terminal device. If the first network device pages the first terminal device, the first network device may add different information to the paging message, to distinguish between first terminal devices in different states.

With reference to the sixth optional implementation of the first aspect or the seventh optional implementation of the first aspect, in an eighth optional implementation of the first aspect, the first information further includes an identifier of a cell in which the first terminal device is located, and that the first network device sends the paging message includes: The first network device sends the paging message in the cell corresponding to the identifier of the cell. The first network device may perform paging in a cell on which the first terminal device camps, and does not need to perform paging within a larger range. In this way, a quantity of paging messages is reduced, transmission overheads are reduced, and paging efficiency is improved.

According to a second aspect, a second communication method is provided. The method may be performed by a second terminal device, or may be performed by a chip system. The chip system may implement a function of the second terminal device. The method includes: The second terminal device measures a first terminal device and determines a state of the first terminal device, where the state of the first terminal device is an RRC connected state, an RRC inactive state, or an RRC idle state; the second terminal device sends third information to a third network device, where the third information includes state information of the first terminal device, and the state information of the first terminal device is used to indicate the state of the first terminal device; and the second terminal device receives a first RRC message from the third network device, where the first RRC message includes first configuration information, and the first configuration information is used to configure the second terminal device to access a network by using the first terminal device.

With reference to the second aspect, in a first optional implementation of the second aspect, the first RRC message further includes first indication information, and the first indication information is used to indicate to trigger the first terminal device to enter the RRC connected state.

With reference to the second aspect or the first optional implementation of the second aspect, in a second optional implementation of the second aspect, the third information further includes a measurement report of the first terminal device, or the third information further includes an identifier of the first terminal device. The second terminal device may send the measurement report of the first terminal device to the third network device, and a network device (for example, the third network device) determines a specific terminal device to be selected for the second terminal device to provide a relay service. Alternatively, the second terminal device may select a terminal device that provides a relay service. For example, the second terminal device selects the first terminal device. In this case, the second terminal device may send the identifier of the first terminal device to the third network device, and a network device does not need to perform selection.

With reference to the second aspect or the first optional implementation of the second aspect or the second optional implementation of the second aspect, in a third optional implementation of the second aspect, the method further includes: The second terminal device receives a discovery message from the first terminal device, where the discovery message includes the state information of the first terminal device. The second terminal device may determine the state of the first terminal device in a plurality of determining manners. For example, in a determining manner, the first terminal device includes the state information of the first terminal device in the discovery message, and the second terminal device can determine the state of the first terminal device by receiving the discovery message from the first terminal device.

With reference to the third optional implementation of the second aspect, in a fourth optional implementation of the second aspect, the state information of the first terminal device is included in a message body or a message header of the discovery message, or the state information of the first terminal device is indicated by using a layer-2 destination identifier included in the discovery message. The state information of the first terminal device may be included in the discovery message in different manners. This is not limited.

With reference to the second aspect or the first optional implementation of the second aspect or the second optional implementation of the second aspect, in a fifth optional implementation of the second aspect, the method further includes: The second terminal device receives a discovery message from the first terminal device; and the second terminal device determines the state of the first terminal device based on the identifier of the first terminal device included in the discovery message. The second terminal device may determine the state of the first terminal device in a plurality of determining manners. For example, in another determining manner, the first terminal device may indicate the state of the first terminal device based on the identifier of the first terminal device included in the discovery message. In this case, the second terminal device can determine the state of the first terminal device by receiving, from the first terminal device, the discovery message including the identifier of the first terminal device.

With reference to the fifth optional implementation of the second aspect, in a sixth optional implementation of the second aspect, that the second terminal device determines the state of the first terminal device based on the identifier of the first terminal device included in the discovery message includes the following: When the identifier of the first terminal device included in the discovery message is a C-RNTI, the second terminal device determines that the state of the first terminal device is the RRC connected state; when the identifier of the first terminal device included in the discovery message is a resume identifier or an I-RNTI, the second terminal device determines that the state of the first terminal device is the RRC inactive state; or when the discovery message does not include the identifier of the first terminal device or the identifier of the first terminal device included in the discovery message is a 5G-S-TMSI, the second terminal device determines that the state of the first terminal device is the RRC idle state. The several cases herein are merely examples, and are not intended to limit the solutions of this application.

With reference to the second aspect or the first optional implementation of the second aspect or the second optional implementation of the second aspect, in a seventh optional implementation of the second aspect, the method further includes: The second terminal device receives a discovery message from the first terminal device by using a first resource pool, where the first resource pool is used by a terminal device in the RRC inactive state or the RRC idle state; and the second terminal device determines, based on the first resource pool, whether the first terminal device is in an RRC active state or the RRC idle state. The second terminal device may determine the state of the first terminal device in a plurality of determining manners. For example, in still another determining manner, when the first terminal device is in different states, the first terminal device may send the discovery message by using different resource pools, so that the second terminal device can determine the state of the first terminal device based on a resource pool of the received discovery message. In this manner, the second terminal device can determine the state of the first terminal device without parsing the discovery message from the first terminal device. Therefore, implementation is simpler and efficiency is high.

With reference to the second aspect or the first optional implementation of the second aspect or the second optional implementation of the second aspect, in an eighth optional implementation of the second aspect, the method further includes: The second terminal device receives a system message from the first terminal device, where the system message includes the state information of the first terminal device. The second terminal device may determine the state of the first terminal device in a plurality of determining manners. For example, in yet another determining manner, the first terminal device may include the state information of the first terminal device in the system message, and the second terminal device can determine the state of the first terminal device based on the system message received from the first terminal device. For example, the system message is a MIB. In this manner, the first terminal device can indicate the state of the first terminal device without additionally sending a discovery message, so that signaling overheads can be reduced.

For technical effects brought by the second aspect or the optional implementations of the second aspect, refer to the descriptions of the technical effects brought by the first aspect or the corresponding implementations.

According to a third aspect, a third communication method is provided. The method may be performed by a first terminal device, or may be performed by a chip system. The chip system may implement a function of the first terminal device. The method includes: A first terminal device sends a second message, where the second message is used to indicate a state of the first terminal device, and the state of the first terminal device is an RRC connected state, an RRC inactive state, or an RRC idle state.

With reference to the third aspect, in a first optional implementation of the third aspect, that a first terminal device sends a second message includes: The first terminal device broadcasts the second message, or the first terminal device sends the second message to a second terminal device. The first terminal device may send the second message in a broadcast or unicast manner.

With reference to the third aspect or the first optional implementation of the third aspect, in a second optional implementation of the second aspect, the second message is a discovery message, where the discovery message includes the state information of the first terminal device.

With reference to the second optional implementation of the third aspect, in a third optional implementation of the third aspect, the state information of the first terminal device is included in a message body or a message header of the discovery message, or the state information of the first terminal device is indicated by using a layer-2 destination identifier included in the discovery message.

With reference to the third aspect or the first optional implementation of the third aspect, in a fourth optional implementation of the third aspect, the second message is a discovery message, and the discovery message indicates the state of the first terminal device based on an identifier of the first terminal device included in the discovery message.

With reference to the fourth optional implementation of the third aspect, in a fifth optional implementation of the third aspect, when the identifier of the first terminal device included in the discovery message is a C-RNTI, it indicates that the state of the first terminal device is the RRC connected state; when the identifier of the first terminal device included in the discovery message is a resume identifier or an I-RNTI, it indicates that the state of the first terminal device is the RRC inactive state; or when the discovery message does not include the identifier of the first terminal device or the identifier of the first terminal device included in the discovery message is a 5G-S-TMSI, it indicates that the state of the first terminal device is the RRC idle state.

With reference to the third aspect or the first optional implementation of the third aspect, in a sixth optional implementation of the third aspect, the second message is a discovery message, and the discovery message indicates the state of the first terminal device by using a resource pool used for sending the discovery message.

With reference to the third aspect or the first optional implementation of the third aspect, in a seventh optional implementation of the second aspect, the second message is a system message, and the system message includes the state information of the first terminal device.

For technical effects brought by the third aspect or the optional implementations of the third aspect, refer to the descriptions of the technical effects brought by the first aspect or the corresponding implementations, and/or refer to the descriptions of the technical effects brought by the second aspect or the corresponding implementations.

According to a fourth aspect, a communication apparatus is provided. The communication apparatus may be the first network device according to any one of the first to the third aspects. The communication apparatus has a function of the first network device. The first network device is, for example, a base station, or a baseband apparatus in a base station. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit. When the transceiver unit implements the receiving function, the transceiver unit may be referred to as a receiving unit. The sending unit and the receiving unit may be a same functional module, the functional module is referred to as the transceiver unit, and the functional module can implement a sending function and a receiving function. Alternatively, the sending unit and the receiving unit may be different functional modules, and the transceiver unit is a general term for these functional modules.

The receiving unit is configured to receive first information from a second terminal device or a third network device, where the first information includes an identifier of a first terminal device, and the third network device is a network device on which the second terminal device camps.

The sending unit is configured to send the identifier of the first terminal device to a second network device, where the identifier of the first terminal device is used to determine whether the first terminal device is authorized to provide a relay service.

The receiving unit is further configured to receive second information from the second network device, where the second information is used to indicate that the first terminal device is authorized to provide a relay service, or indicate that the first terminal device is not authorized to provide a relay service.

Alternatively, it is as follows:
The processing unit is configured to receive first information from a second terminal device or a third network device by using the transceiver unit, where the first information includes an identifier of a first terminal device, and the third network device is a network device on which the second terminal device camps.

The processing unit is configured to send the identifier of the first terminal device to a second network device by using the transceiver unit, where the identifier of the first terminal device is used to determine whether the first terminal device is authorized to provide a relay service.

The processing unit is further configured to receive second information from the second network device by using the transceiver unit, where the second information is used to indicate that the first terminal device is authorized to provide a relay service, or indicate that the first terminal device is not authorized to provide a relay service.

In still another optional implementation, the communication apparatus includes a storage unit and a processing unit. The processing unit is configured to: couple to the storage unit, and execute a program or instructions in the storage unit, to enable the communication apparatus to perform the function of the first network device.

According to a fifth aspect, a communication apparatus is provided. The communication apparatus may be the second terminal device according to any one of the first to the third aspects. The communication apparatus has a function of the second terminal device. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the description in the fourth aspect.

The processing module is configured to: measure a first terminal device, and determine a state of the first terminal device, where the state of the first terminal device is an RRC connected state, an RRC inactive state, or an RRC idle state.

The transceiver unit is configured to send third information to a third network device, where the third information includes state information of the first terminal device, and the state information of the first terminal device is used to indicate the state of the first terminal device.

The transceiver unit is configured to receive a first RRC message from the third network device, where the first RRC message includes first configuration information, and the first configuration information is used to configure the second terminal device to access a network by using the first terminal device.

Alternatively, it is as follows:
The processing module is configured to: measure a first terminal device, and determine a state of the first terminal device, where the state of the first terminal device is an RRC connected state, an RRC inactive state, or an RRC idle state.

The sending unit is configured to send third information to a third network device, where the third information includes state information of the first terminal device, and the state information of the first terminal device is used to indicate the state of the first terminal device.

The receiving unit is configured to receive a first RRC message from the third network device, where the first RRC message includes first configuration information, and the first configuration information is used to configure the second terminal device to access a network by using the first terminal device.

Alternatively, it is as follows:
The processing module is configured to: measure a first terminal device, and determine a state of the first terminal device, where the state of the first terminal device is an RRC connected state, an RRC inactive state, or an RRC idle state.

The processing module is further configured to send third information to a third network device by using the transceiver unit, where the third information includes state information of the first terminal device, and the state information of the first terminal device is used to indicate the state of the first terminal device.

The processing module is further configured to receive a first RRC message from the third network device by using the transceiver unit, where the first RRC message includes first configuration information, and the first configuration information is used to configure the second terminal device to access a network by using the first terminal device.

In still another optional implementation, the communication apparatus includes a storage unit and a processing unit. The processing unit is configured to: couple to the storage unit, and execute a program or instructions in the storage unit, to enable the communication apparatus to perform the function of the second terminal device.

According to a sixth aspect, a communication apparatus is provided. The communication apparatus may be the first terminal device according to any one of the first to the third aspects. The communication apparatus has a function of the first terminal device. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the description in the fourth aspect.

The sending unit is configured to send a second message, where the second message is used to indicate a state of the first terminal device, and the state of the first terminal device is an RRC connected state, an RRC inactive state, or an RRC idle state.

Alternatively, it is as follows:
The processing unit is configured to send a second message by using the transceiver unit, where the second message is used to indicate a state of the first terminal device, and the state of the first terminal device is an RRC connected state, an RRC inactive state, or an RRC idle state.

In still another optional implementation, the communication apparatus includes a storage unit and a processing unit. The processing unit is configured to: couple to the storage unit, and execute a program or instructions in the storage unit, to enable the communication apparatus to perform the function of the first terminal device.

According to a seventh aspect, a computer-readable storage medium is provided. The computer-readable storage medium is configured to store a computer program or instructions. When the computer program is run or the instructions are run, the methods performed by the terminal device or the network device in the foregoing aspects are implemented.

According to an eighth aspect, a computer program product including instructions is provided. When the computer program product runs on a computer, the methods according to the foregoing aspects are implemented.

### BRIEF DESCRIPTION OF DRAWINGS

FIG. 1A to FIG. 1D are diagrams of several scenarios in which a remote terminal device performs path switch;
FIG. 2 is a flowchart of switching a remote terminal device from a direct link to an indirect link;
FIG. 3 to FIG. 17 are flowcharts of several communication methods according to embodiments of this application;
FIG. 18 is a schematic block diagram of a communication apparatus according to an embodiment of this application;
FIG. 19 is a schematic block diagram of a terminal device according to an embodiment of this application; and
FIG. 20 is a schematic block diagram of a network device according to an embodiment of this application.

### DESCRIPTION OF EMBODIMENTS

To make objectives, technical solution, and advantages of embodiments of this application clearer, the following further describes embodiments of this application in detail with reference to accompanying drawings.

The following describes some terms in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, including but not limited to the following scenarios: cellular communication, device-to-device (device-to-device, D2D) communication, vehicle to everything (vehicle to everything, V2X), machine-to-machine/machine-type communication (machine-to-machine/machine-type communication, M2MMTC), internet of things (internet of things, loT), virtual reality (virtual reality, VR), augmented reality (augmented reality, AR), industrial control (industrial control), self driving (self driving), remote medical (remote medical), smart grid (smart grid), smart furniture, smart office, smart wearable, smart transportation, smart city (smart city), drone, robot, and the like. The terminal device may be sometimes referred to as user equipment (user equipment, UE), a terminal, an access station, a UE station, a remote station, a wireless communication device, a user apparatus, or the like. For ease of description, in embodiments of this application, an example in which the terminal device is UE is used for description. The remote UE refers to UE that requires another UE to provide a relay service, to access a network. The relay UE refers to UE that provides a relay service for another UE.

The network device in embodiments of this application includes, for example, an access network device and/or a core network device. The access network device is a device having a wireless transceiver function, and is configured to communicate with the terminal device. The access network device includes but is not limited to a base station (BTS, NodeB, eNodeB/eNB, or gNodeB/gNB) in the foregoing communication system, a transmission reception point (transmission reception point, TRP), a base station evolved after the 3rd generation partnership project (3rd generation partnership project, 3GPP), and an access node, a wireless relay node, a wireless backhaul node, or the like in a wireless fidelity (wireless fidelity, Wi-Fi) system. The base station may be a macro base station, a micro base station, a picocell base station, a small cell, a relay station, or the like. A plurality of base stations may support the foregoing networks using a same access technology, or may support the foregoing networks using different access technologies. The base station may include one or more co-site or non-co-site transmission reception points. The network device may alternatively be a radio controller, a central unit (centralized unit, CU), and/or a distributed unit (distributed unit, DU) in a cloud radio access network (cloud radio access network, CRAN) scenario. The network device may alternatively be a server, a wearable device, a vehicle-mounted device, or the like. For example, a network device in a vehicle to everything (vehicle to everything, V2X) technology may be a road side unit (road side unit, RSU). The following provides descriptions by using an example in which the access network device is a base station. The base station may communicate with a terminal device, or may communicate with a terminal device via a relay station. The terminal device may communicate with a plurality of base stations in different access technologies. The core network device is configured to implement functions such as mobility management, data processing, session management, and policy and charging. In systems using different access technologies, names of devices implementing the functions of the core network may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of a network device may be a network device, or may be an apparatus, for example, a chip system, that can support the network device in implementing the function. The apparatus may be installed in the network device. In the technical solutions provided in embodiments of this application, the technical solutions provided in embodiments of this application are described by using an example in which the apparatus configured to implement the function of the network device is the network device.

In embodiments of this application, unless otherwise specified, a quantity of nouns represents "a singular noun or a plural noun", that is, "one or more". "At least one" means one or more, and "a plurality of" means two or more. The term "and/or" describes an association relationship for describing associated objects and represents that three relationships may exist. For example, A and/or B may represent the following three cases: Only A exists, both A and B exist, and only B exists. A and B each may be singular or plural. The character "/" generally represents an "or" relationship between the associated objects. For example, A/B represents A or B. "At least one of the following items (pieces)" or a similar expression thereof refers to any combination of these items, including any combination of singular items (pieces) or plural items (pieces). For example, at least one item (piece) of a, b, or c represents: a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance degrees, or the like of the plurality of objects. For example, first information and second information may be a same piece of information, or may be different pieces of information. In addition, such names do not indicate different sending sequences, information amounts, content, priorities, importance degrees, or the like of the two pieces of information. In addition, step numbers in embodiments described in this application are merely used to distinguish between different steps, but are not used to limit a sequence of the steps. For example, step S301 may occur before step S302, may occur after step S302, or may occur simultaneously with step S302.

In a currently proposed UE relay technology, there is a relay manner in which remote UE can be visible to a RAN. In this relay manner, the remote UE can implement path switch.

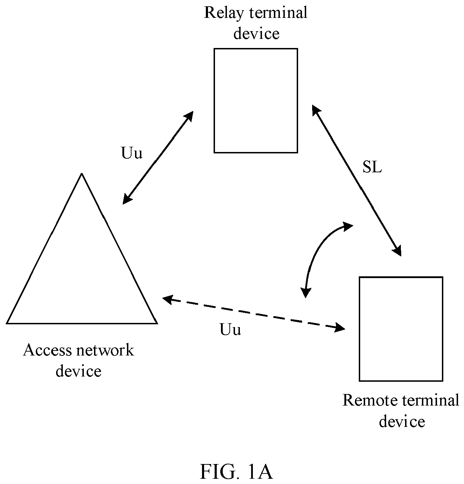

A path switch process of the remote UE includes a process of switching from a direct link to an indirect link, a process of switching from an indirect link to a direct link, and a process of switching from an indirect link to an indirect link. Reference may be made to FIG. 1A to FIG. 1D. FIG. 1A shows a scenario in which the remote UE is switched from an indirect link to a direct link, or a scenario in which the remote UE is switched from a direct link to an indirect link. For example, the remote UE is a smart watch. An (embedded subscriber identity module, eSIM) card may be installed on the smart watch, and the smart watch can directly communicate with an access network device by using the eSIM card. A user goes out running with the smart watch instead of a mobile phone. In this case, when the user is outdoor, the smart watch may directly communicate with the access network device through a Uu interface. When the user finishes running and goes home, the smart watch detects existence of the mobile phone through a sidelink (sidelink, SL), and the smart watch may be automatically switched from a direct link between the smart watch and the access network device to an indirect link on which relay is performed by using the mobile phone. Alternatively, the smart watch may be switched, based on a user operation, from a direct link between the smart watch and the access network device to an indirect link on which relay is performed by using the mobile phone. In this way, the mobile phone is used as relay UE, and communication with a network is performed by using the mobile phone, so that power consumption of the smart watch is reduced.

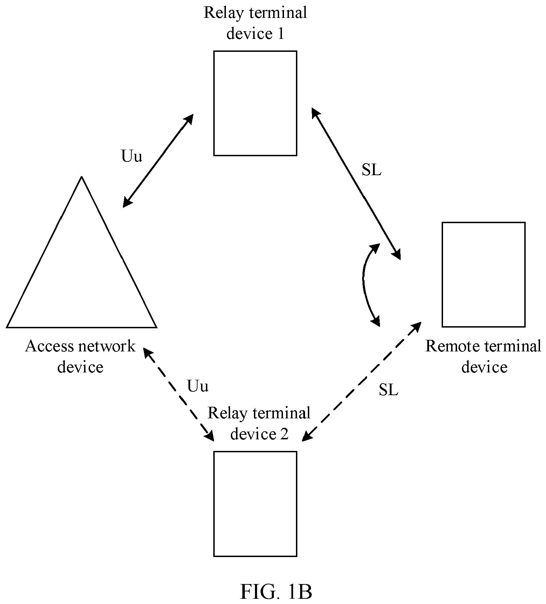

FIG. 1B shows a scenario in which the remote UE is switched from an indirect link to an indirect link. For example, the remote UE is a smart watch, and the user carries the smart watch and the mobile phone. At first, the mobile phone is relay UE of the smart watch, and provides a relay service for the smart watch. After the user enters a vehicle, the smart watch may be switched from an indirect link on which relay is performed by using the mobile phone to an indirect link on which relay is performed by using the vehicle. In this way, the vehicle is used as new relay UE, and communication with a network is performed by using the vehicle, so that power consumption of the smart watch is reduced, and power consumption of the mobile phone can also be reduced.

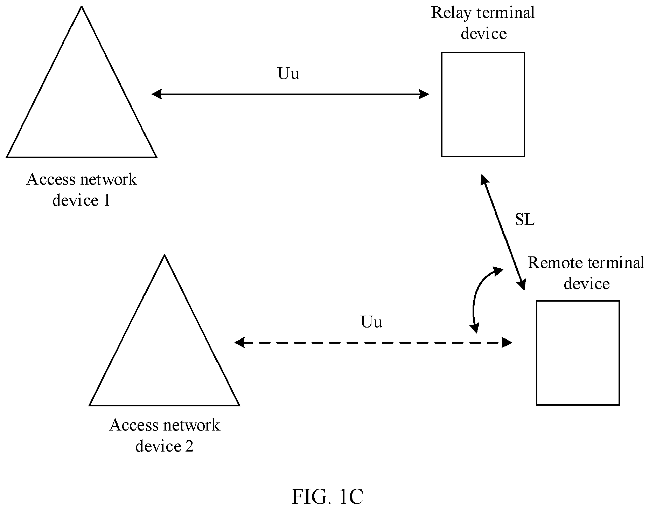

FIG. 1C shows a scenario in which the remote UE is switched from an indirect link to a direct link, or a scenario in which the remote UE is switched from a direct link to an indirect link. For example, the remote UE is a smart watch. When the user moves outdoors, because an eSIM card is installed on the smart watch, the smart watch may directly communicate with an access network device A by using the eSIM card. Then, the user enters the vehicle, and the vehicle travels to another city. In a traveling process of the vehicle, the smart watch is switched automatically (or based on a user operation) from a direct link on which the smart watch directly communicates with the access network device A to an indirect link on which relay is performed by using the vehicle, to reduce power consumption of the smart watch. Because the vehicle is in a traveling state, an access network device B and the access network device A that are connected to the vehicle may be different access network devices.

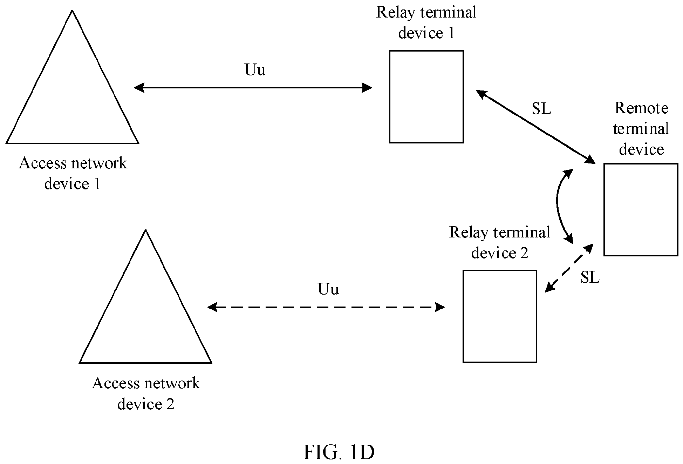

FIG. 1D shows a scenario in which the remote UE is switched from an indirect link to an indirect link. For example, the remote UE is a smart watch. The user takes a vehicle A to a place. After the user enters a vehicle 1, the smart watch may establish a connection to the vehicle 1, and use the vehicle 1 as the relay UE of the smart watch, to communicate with a network by using the vehicle 1. Midway, the user changes the vehicle and enters a vehicle 2. In a traveling process of the vehicle 2, quality of communication between the smart watch and the vehicle 1 gradually deteriorates. In this case, the smart watch may be switched automatically (or based on a user operation) from an indirect link on which relay is performed by using the vehicle 1 to an indirect link on which relay is performed by using the vehicle 2, to improve communication quality of the smart watch. In addition, the vehicle 2 is in a traveling state, and the vehicle 1 may also be in a traveling state. Therefore, an access network device serving the vehicle 1 and an access network device serving the vehicle 2 may be different access network devices.

Scenarios shown in FIG. 1A and FIG. 1B are intra-gNB (intra-gNB) switch scenarios, and scenarios shown in FIG. 1C and FIG. 1D are inter-gNB (inter-gNB) switch scenarios.

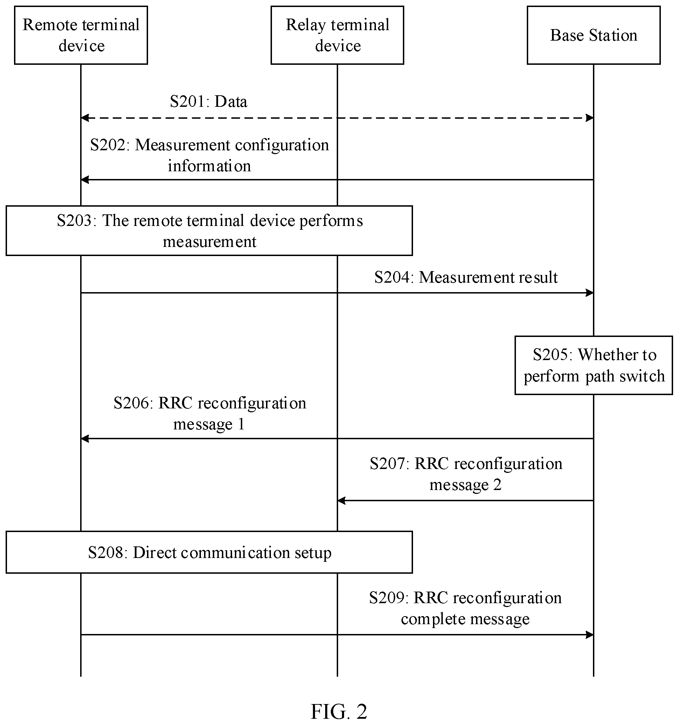

For a case of switching to an indirect link (including switching from a direct link to an indirect link, or switching from an indirect link to an indirect link), a currently discussed mainstream solution is as follows: A base station is configured with remote UE to perform measurement, and the remote UE performs measurement based on a discovery message (discovery message) from another UE. The remote UE sends a measurement result to the base station, and the base station determines whether the remote UE performs path switch. If the base station determines that the remote UE needs to perform path switch, the base station separately sends configuration information to the remote UE and the relay UE, to configure the path switch. For example, for a process of switching the remote UE from a direct link to an indirect link, refer to a process shown in FIG. 2.

S201: Remote UE performs data transmission with a base station.

S202: The base station sends an RRC message to the remote UE, and the remote UE receives the RRC message from the base station. For example, the RRC message includes measurement configuration (measurement configuration) information, and the measurement configuration information is used by the remote UE to measure another UE or select another UE.

S203: The remote UE measures or selects another UE. For example, the remote UE may trigger the another UE to send a discovery message, so that the remote UE may measure the discovery message from the another UE, to complete measurement or selection for the another UE.

S204: The remote UE sends a measurement result to the base station, and the base station receives the measurement result from the remote UE; or the remote UE sends a selection result to the base station, and the base station receives the selection result from the remote UE. In FIG. 2, an example in which the measurement result is sent is used.

The measurement result is, for example, a measurement report (measurement report). The selection result is, for example, a result of selecting relay UE by the remote UE, and includes ID information of the relay UE.

S205: The base station determines, based on the measurement result or the selection result, whether the remote UE performs path switch. If the base station determines that the remote UE performs path switch, S206 and S207 are performed; or if the base station determines that the remote UE does not perform path switch, S206 and S207 are not performed.

S206: The base station sends an RRC reconfiguration message to the remote UE, and the remote UE receives the RRC reconfiguration message from the base station. To distinguish from another RRC reconfiguration message, the RRC reconfiguration message in S206 is referred to as an RRC reconfiguration message 1.

The RRC reconfiguration message 1 may include information configured by the base station for the remote UE, for example, include configuration information of a Uu interface and configuration information of the sidelink (sidelink, SL). After receiving the RRC reconfiguration message 1, the remote UE may perform configuration based on the information included in the RRC reconfiguration message 1, for example, may configure a Uu link and a sidelink.

Optionally, the RRC reconfiguration message 1 may further include a path switch command (path switch command), and the path switch command is used to indicate the remote UE to perform path switch. In addition, optionally, the RRC reconfiguration message 1 may further include an ID of the relay UE. The relay UE is relay UE determined by the base station for the remote UE. In other words, the base station indicates the remote UE to switch to accessing a network by using the relay UE.

S207: The base station sends an RRC reconfiguration (reconfiguration) message to the relay UE, and the relay UE receives the RRC reconfiguration message from the base station. To distinguish from another RRC reconfiguration message, the RRC reconfiguration message in S207 is referred to as an RRC reconfiguration message 2.

The RRC reconfiguration message 2 may include information configured by the base station for the relay UE, for example, include configuration information of a Uu interface and configuration information of a sidelink. The sidelink is a link between the remote UE and the relay UE. The relay UE provides a relay service for the remote UE through the sidelink. After receiving the RRC reconfiguration message 2, the relay UE may perform configuration based on the information included in the RRC reconfiguration message 2, for example, may configure a Uu link and a sidelink.

S206 may occur before S207, or S206 may occur after S207, or S206 and S207 may simultaneously occur.

S208: The remote UE and the relay UE perform direct communication setup (direct communication setup).

S209: The remote UE sends an RRC reconfiguration complete (RRC reconfiguration complete) message to the base station by using the relay UE, and the base station receives the RRC reconfiguration complete message from the remote UE by using the relay UE.

After the remote UE completes configuration based on the RRC reconfiguration message 1, the remote UE may send the RRC reconfiguration complete message to the base station, to indicate that the remote UE has completed path switch.

In the current technology, it is mainly considered that the relay UE is in an RRC connected state, so that the remote UE can be switched from a direct link to an indirect link. However, before the remote UE is switched to communicate with the network by using the relay UE, the relay UE may be in an RRC idle state or an RRC inactive state. Some UEs are authorized to provide a relay service, and some UEs are not authorized to provide a relay service. Accordingly, the UE that is not authorized to provide a relay service cannot provide a relay service. If the relay UE is in the RRC connected state, the base station can determine, based on a context of the relay UE, whether the relay UE is authorized to provide a relay service. If it is determined that the relay UE is authorized to provide a relay service, the base station then allows the remote UE to be switched to communicate with the network by using the relay UE. However, if the relay UE is in the RRC idle state or the RRC inactive state, the base station cannot obtain the context of the relay UE, and therefore cannot determine whether the relay UE is authorized to provide a relay service. If the remote UE attempts to access the network by using the UE that is not authorized to provide a relay service, the remote UE fails to access the network.

In view of this, the technical solutions in embodiments of this application are provided. In this embodiment of this application, even if the first terminal device is in an RRC non-connected state (for example, the RRC idle state or the RRC inactive state), the first network device may determine, by using the second network device, whether the first terminal device is authorized to provide a relay service. In this way, when it is determined that the first terminal device is authorized to provide a relay service, another terminal device can be allowed to access a network by using the first terminal device, so that a network access success rate of the another terminal device is improved.

The technical solutions provided in embodiments of this application may be applied to a fourth generation (the 4th generation, 4G) mobile communication technology system, for example, a long term evolution (long term evolution, LTE) system; may be applied to a 5G system, for example, a new radio (new radio, NR) system; or may be further applied to a next-generation mobile communication system or another similar communication system. This is not specifically limited. In addition, the technical solutions provided in embodiments of this application may be applied to a device-to-device (device-to-device, D2D) scenario, for example, an NR-D2D scenario, or may be applied to a V2X scenario, for example, an NR-V2X scenario, or may be applied to the internet of vehicles, for example, V2X, vehicle-to-vehicle (vehicle-to-vehicle, V2V), or may be applied to fields such as intelligent driving, assisted driving, or intelligent connected vehicles.

Several path switch scenarios are described above. For an application scenario of this embodiment of this application, mainly refer to FIG. 1A or FIG. 1C. The access network device in any one of FIG. 1A to FIG. 1D is, for example, a base station. The access network device corresponds to different devices in different systems. For example, the access network device may correspond to an eNB in a 4G system, and correspond to a 5G access network device such as a gNB in a 5G system. Certainly, the technical solutions provided in this embodiment of this application may also be applied to a future mobile communication system. Therefore, the access network device in any one of FIG. 1A to FIG. 1D may correspond to an access network device in the future mobile communication system. In FIG. 1A to FIG. 1D, an example in which the access network device is the base station is used. Actually, with reference to the foregoing descriptions, the access network device may alternatively be a device such as an RSU.

With reference to the accompanying drawings, the following describes the method provided in embodiments of this application. In the accompanying drawings corresponding to embodiments of this application, all steps represented by dashed lines are optional steps.

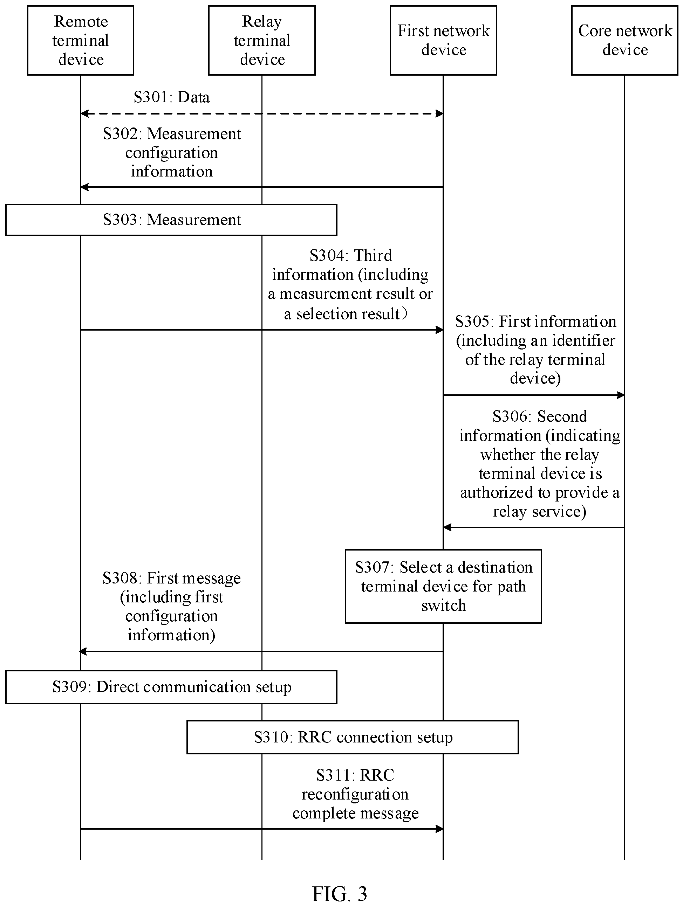

An embodiment of this application provides a first communication method. FIG. 3 is a flowchart of the method. The method relates to a process of switching from a direct link to an indirect link. In the following description process, an example in which the method is applied to the network architecture shown in FIG. 1A is used.

If the technical solutions provided in embodiments of this application are applied to the network architecture shown in FIG. 1A, a second terminal device described below may be the remote terminal device shown in FIG. 1A, a first terminal device described below may be the relay terminal device in FIG. 1A, and a first network device described below may be the access network device in FIG. 1A. For example, a second network device described below is the core network device not shown in FIG. 1A, for example, an AMF, an SMF, or a PCF in a 5G system. In addition, the following uses an example in which the second terminal device is remote UE and the first terminal device is relay UE for description.

S301: Remote UE performs data transmission with a first network device. For example, a third network device is a network device accessed by the remote UE, and the first network device is a network device on which relay UE camps. However, in this embodiment of this application, the first network device and the third network device are a same network device.

S302: The first network device sends an RRC message to the remote UE, and correspondingly, the remote UE receives the RRC message from the first network device. For example, the RRC message includes measurement configuration information, and the measurement configuration information is used by the remote UE to measure another UE or select another UE.

Alternatively, the first network device may send broadcast information to the remote UE, and correspondingly, the remote UE receives the broadcast information from the first network device. For example, the broadcast information is included in a system message, or included in another broadcast message. The broadcast information may include related information used by the remote UE to select the relay UE. For example, the broadcast information may include measurement configuration information, and the measurement configuration information is used to configure measurement performed by the remote UE for selecting the relay UE.

S303: The remote UE performs measurement or selection on one or more UEs. For example, the remote UE may trigger the one or more UEs to send a discovery message, so that the remote UE may measure the discovery message from the one or more UEs, to complete measurement or selection for the one or more UEs. In FIG. 3, an example in which the remote UE performed measurement on the one or more UEs is used. In addition, the relay UE shown in FIG. 3 is, for example, one of the one or more UEs.

The remote UE may measure another UE by measuring a discovery message from the another UE, or may measure other information from the another UE, for example, measure a data signal from the another UE. This is not limited herein. The remote UE may select another UE based on a measurement result.

In addition, the remote UE may further learn a state of the another UE. A state of one UE means that the UE is in an RRC connected state, an RRC idle state, or an RRC inactive state. The remote UE may learn a state of one UE in a plurality of manners. The following uses an example for description. In the following description process, an example in which the remote UE obtains a state of relay UE is used. The relay UE is the relay UE shown in FIG. 3, and is one UE measured by the remote UE.
1. Manner 1: The relay UE indicates the state of the relay UE by using a discovery message.

The relay UE sends the discovery message in a broadcast manner, where the discovery message includes state information (or referred to as state indication information or the like, and a name is not limited) of the relay UE. The state information of the relay UE can indicate that the state of the relay UE is the RRC connected state, the RRC idle state, or the RRC inactive state. After receiving the discovery message from the relay UE, the remote UE can obtain the state information of the relay UE, or can determine the state of the relay UE.

For example, the state information of the relay UE is included in a message header of the discovery message, or included in a message body of the discovery message. For example, an indicator bit is added to the message header or the message body of the discovery message, and the indicator bit may carry the state information of the relay UE. The message header of the discovery message is, for example, a media access control (media access control, MAC) header.

Alternatively, the state information of the relay UE may be indicated by using an L2 destination ID (L2 destination ID) filled in by the relay UE when the relay UE sends the discovery message. For example, discovery messages sent by UEs in different states have different L2 destination IDs. For example, an L2 destination ID filled in by UE in the RRC connected state is 0000 0000, an L2 destination ID filled in by UE in the RRC idle state is 0000 0001, and an L2 destination ID filled by UE in the RRC inactive state is 0000 0011. In this case, the remote UE can determine, by using the L2 destination ID of the received discovery message, the state of the UE that sends the discovery message.

2. Manner 2: The relay UE indicates the state of the relay UE based on an identifier of the relay UE included in a discovery message.

The relay UE sends the discovery message in a broadcast manner, and the discovery message may indicate the state of the relay UE based on the identifier of the relay UE included in the discovery message. After receiving the discovery message from the relay UE, the remote UE can determine the state of the relay UE based on the identifier of the relay UE included in the discovery message. The identifier of the relay UE is, for example, an ID of the relay UE. The ID of the UE is, for example, a 5G-service-temporary mobile subscription identifier (5G serving-temporary mobile subscription identifier, 5G-S-TMSI) of the UE, a cell-radio network temporary identifier (cell-radio network temporary identifier, C-RNTI), a 5G globally unique temporary UE identity (5G globally unique temporary UE identity, 5G-GUTI), an L2 destination ID, a resume (resume) ID, an inactive radio network temporary identifier (inactive RNTI, I-RNTI), a short inactive radio network temporary identifier (short inactive RNTI, short-I-RNTI), or the like. The resume ID includes some bits of the I-RNTI.

For example, if the relay UE is in the RRC connected state, the discovery message may include the C-RNTI of the relay UE. If the relay UE is in the RRC inactive state, the discovery message may include the resume ID, the I-RNTI, or the I-RNTI and the 5G-S-TMSI of the relay UE. If the relay UE is in the RRC idle state, the discovery message may not include the identifier of the relay UE, or the discovery message may include the 5G-S-TMSI of the relay UE.

3. Manner 3: The relay UE indicates the state of the relay UE by using a resource pool for sending a discovery message.

UEs in different states send discovery messages by using different resource pools. For example, a first resource pool is used by UE in the RRC non-connected state. If the relay UE is in the RRC idle state or the RRC inactive state, the relay UE may send the discovery message by using the first resource pool. If the remote UE obtains, through listening, the discovery message from the relay UE in the first resource pool, the remote UE may determine that the relay UE is in the RRC non-connected state.

The first resource pool is, for example, configured by the first network device by using a broadcast message, and the broadcast message is, for example, a system message. Optionally, the broadcast message may be further used to configure a second resource pool, and the second resource pool may be used by UE in the RRC connected state. Alternatively, optionally, the second resource pool is used by UE in the RRC connected state. The first network device may configure a second resource pool for UE in the RRC connected state by using a unicast message. In addition, second resource pools configured for different UEs may be the same or may be different.

4. Manner 4: The relay UE broadcasts the state of the relay UE by using a system message.

For example, the relay UE sends a system message, where the system message may include state information of the relay UE. After receiving the system message from the relay UE, the remote UE can obtain the state information of the relay UE, or can determine the state of the relay UE. For example, the system message is a master information block (master information block, MIB). For example, an indication bit is added to the MIB, and the indication bit may carry the state information of the relay UE.

The remote UE may determine the state of the relay UE in one or more of the foregoing manners, or the remote UE may determine the state of the relay UE in another manner other than the foregoing manners. A manner used by the remote UE may be configured by the first network device, or may be specified in a protocol.

In addition, the relay UE may alternatively determine a state of the remote UE in any one of the foregoing manners. In other words, the remote UE in the foregoing manners may be replaced with the relay UE, and the relay UE may be replaced with the remote UE. The relay UE may alternatively obtain the state of the remote UE. After the remote UE and the relay UE obtain the state of each other, subsequent proper processing is facilitated. For example, if the relay UE learns that the remote UE is in the RRC connected state, the relay UE may immediately enter the RRC connected state, so that an access delay of the remote UE is reduced. For another example, after learning that the relay UE is in the RRC idle state or the RRC inactive state, the remote UE may not select the relay UE to provide a relay service. It should be noted that the solution herein may be applicable to all discovery processes of the remote UE and the relay UE, and is not limited to a discovery process performed when the remote UE performs path switch. In other words, the solution herein may be applied in combination with the embodiment shown in FIG. 3, or may be applied independently.

S304: The remote UE sends third information to the first network device, and correspondingly, the first network device receives the third information from the remote UE.

The third information includes, for example, a measurement result or a selection result. The measurement result is, for example, a measurement report (measurement report) obtained by the remote UE by measuring one or more UEs. The selection result is, for example, a result of selecting relay UE by the remote UE, and includes an ID of the relay UE. The selection result may include an ID of one UE, or may include IDs of a plurality of UEs. UE corresponding to an ID included in the selection result is, for example, selected by the remote UE based on the measurement report obtained by the remote UE by measuring the one or more UEs. For example, the relay UE shown in FIG. 3 is one of the one or more UEs.

In addition, the third information may further indicate states of the one or more UEs. The one or more UEs are UEs corresponding to the measurement result or UEs corresponding to the selection result. For a manner in which the remote UE determines the states of the one or more UEs, refer to the description in S303. In this embodiment of this application, the remote UE may notify the first network device of the state of the relay UE, so that the first network device can learn the state of the relay UE. For example, in this embodiment of this application, the relay UE is in the RRC idle state.

The third information indicates a state of one UE (for example, the relay UE). For example, in an indication manner, the third information includes the state information of the relay UE. Alternatively, if the third information includes the selection result, in another indication manner, the third information may indicate the state of the relay UE by using the ID of the relay UE. For example, if the ID of the relay UE included in the third information is an L2 destination ID of the relay UE, it indicates that the relay UE is in the RRC idle state; if the ID of the relay UE included in the third information is an I-RNTI or a resume ID of the relay UE, it indicates that the relay UE is in the RRC inactive state; or if the ID of the relay UE included in the third information is a C-RNTI of the relay UE, it implicitly indicates that the relay UE is in the RRC connected state.

Optionally, the third information may further include identifiers of cells in which the one or more UEs are located, for example, IDs of the cells. For example, if a serving cell of the remote UE is the same as a serving cell of one of the one or more UEs, the third information may not include an identifier of the cell to which the UE belongs. Alternatively, if a serving cell of the remote UE is different from a serving cell of one of the one or more UEs, the third information may include an identifier of the cell to which the UE belongs.

S305: The first network device sends first information to a second network device, and correspondingly, the second network device receives the first information from the first network device.

The first information is obtained by the first network device based on the third information, and the first information may include identifiers of the one or more UEs. An identifier of UE included in the first information is, for example, an ID of the UE, and the ID of the UE is, for example, a 5G-S-TMSI or a 5G globally unique temporary UE identity (5G globally unique temporary UE identity, 5G-GUTI). The one or more UEs are UEs corresponding to the third information. The relay UE shown in FIG. 3 is one of the one or more UEs. For example, if the third information includes the measurement result, the first network device may obtain identifiers of UEs corresponding to the measurement result, and the first information may include one or more of the identifiers. Alternatively, if the third information includes the selection result, the first network device may include, in the first information, one or more of IDs of UEs included in the selection result. In this case, it is also considered that the first network device obtains the first information in a manner of receiving the first information from the remote UE. In this embodiment of this application, the first information may be understood as being used to request to determine whether the one or more UEs are authorized to provide a relay service.

S306: The second network device sends second information to the first network device, and correspondingly, the first network device receives the second information from the second network device. The second information may indicate whether the one or more UEs are authorized to provide a relay service. In the one or more UEs, some UEs may be authorized to provide a relay service, and some UEs are not authorized to provide a relay service. In this case, the second information may separately indicate the one or more UEs.

For example, the second information is indication information, and the indication information may be used to indicate whether the one or more UEs are authorized to provide a relay service. For example, the second information may include one or more pieces of sub-indication information, and a quantity of the pieces of sub-indication information is the same as a quantity of UEs that need to be indicated. One piece of sub-indication information indicates whether one UE is authorized to provide a relay service. For example, the second information includes sub-indication information used to indicate the relay UE. The sub-indication information may indicate that the relay UE is authorized to provide a relay service, or indicate that the relay UE is not authorized to provide a relay service.

For another example, the second information is not indication information, but includes contexts of the one or more UEs. Authorization information of whether one UE is authorized to provide a relay service is recorded in a context of the UE. Therefore, whether the UE is authorized to provide a relay service can be determined by obtaining the context of the UE. Alternatively, the second network device may send the contexts of the one or more UEs to the first network device, so that the first network device can determine whether the one or more UEs are authorized to provide a relay service.

In this embodiment of this application, if the relay UE requested by the remote UE is in the RRC non-connected state, the first network device may request the second network device to determine whether the relay UE is authorized to provide a relay service. When determining that the relay UE is authorized to provide a relay service, the first network device selects destination UE for path switch performed by the remote UE, to avoid a case in which the remote UE is switched to UE that is not authorized to provide a relay service, and improve a network access success rate of the remote UE.

S307: The first network device selects the destination UE for path switch performed by the remote UE. In other words, the first network device determines UE to which the remote UE needs to be switched.

If the second information indicates that one UE is authorized to provide a relay service (for example, the second information indicates only the UE, or the second information indicates a plurality of UEs, but UEs other than the UE are not authorized to provide a relay service), or the second information includes a context of one UE, and the context of the UE indicates that the UE is authorized to provide a relay service (for example, the second information includes only the context of the UE, or the second information includes contexts of a plurality of UEs, but contexts of UEs other than the context of the UE indicate that all the other UEs are not authorized to provide a relay service), the first network device may determine that the UE is used as the destination UE for path switch performed by the remote UE.

Alternatively, if the second information indicates that a plurality of UEs are authorized to provide a relay service, or the second information includes contexts of a plurality of UEs, and some or all of the contexts of the plurality of UEs indicate that some or all of the plurality of UEs are authorized to provide a relay service, the first network device may determine, from the plurality of UEs, one UE as the destination UE for path switch performed by the remote UE.

However, if all the UEs indicated by the second information are not provided with the relay service, or if all the contexts of the UEs included in the second information indicate that the UEs are not provided with the relay service, the first network device cannot perform S307. In this case, the first network device may not perform S307 and subsequent steps, but may send a message to the remote UE. The message may indicate the remote UE to continue performing measurement, indicate that the relay UE fails to be selected, or the like.

The destination UE selected by the first network device is, for example, the relay UE shown in FIG. 3. The relay UE may be in the RRC non-connected state.

S308: The first network device sends a first message to the remote UE, and correspondingly, the remote UE receives the first message from the first network device. The first message is, for example, an RRC message. Therefore, the first message may alternatively be referred to as a first RRC message. For example, the first message is an RRC reconfiguration message.

The first message may include first configuration information, and the first configuration information may configure the remote UE to access a network by using the relay UE. For example, the first configuration information may further include the ID of the relay UE. For example, the first configuration information may include configuration information of a second relay link. The second relay link includes, for example, a sidelink between the remote UE and the relay UE. The remote UE is connected to the relay UE through the sidelink, to access a network by using the relay UE. After receiving the first message, the remote UE may perform configuration based on the first configuration information. Optionally, the first configuration information may further include configuration information of a sidelink of the relay UE, to be specific, configuration information required for communication between the relay UE and the remote UE through the PC5 interface. The remote UE may send the configuration information of the sidelink of the relay UE to the relay UE based on the first configuration information, so that the relay UE performs configuration on a PC5 side. In this case, the network device does not need to send the configuration information of the sidelink of the relay UE to the relay UE, so that air interface signaling overheads can be reduced.

Optionally, the first message may further include first indication information, and the first indication information may indicate to trigger the relay UE to enter the RRC connected state. The first network device learns that the relay UE is in the RRC non-connected state (for example, the relay UE is in the RRC idle state in this embodiment of this application). However, if the remote UE needs to access a network by using the relay UE, the relay UE needs to enter the RRC connected state. Therefore, the first network device may indicate the remote UE to trigger the relay UE to enter the RRC connected state, so that the relay UE can normally provide a relay service.

S309: The remote UE sets up direct communication with the relay UE.

After completing configuration based on the first configuration information, the remote UE may set up direct communication with the relay UE.

Alternatively, before receiving the first configuration information, the remote UE and the relay UE have set up a direct communication connection. In this case, the existing direct communication connection is reused. Step S309 may occur before step S304, and a sequence of step S309 and step S308 is not limited.

S310: The relay UE establishes an RRC connection to the first network device.

For example, in a process of setting up direct communication with the relay UE, the remote UE may trigger the relay UE to enter the RRC connected state. For example, if the remote UE needs to set up direct communication with the relay UE, the remote UE may first send a direct communication request (direct communication request, DCR) message to the relay UE. The DCR message is used to request to establish a direct connection. After receiving the DCR message, the relay UE may send a security setup request message to the remote UE. The security setup request message is used to request the remote UE to perform an operation related to security verification. After receiving the security setup request message, the remote UE may perform corresponding security verification. If the security verification succeeds, the remote UE may send a security setup complete message to the relay UE, to indicate that the security verification is completed. After receiving the security setup complete message, the relay UE may send a direct communication setup complete message (or referred to as a DCR response (response) message) to the remote UE, to indicate that setup of direct communication between the remote UE and the relay UE is completed. After receiving the direct communication setup complete message, the remote UE may access a network by using the relay UE. Certainly, a process of setting up direct communication between two UEs may further involve another corresponding message. This is merely an example for description herein. If the process is used, optionally, the remote UE may trigger, by using a DCR message or a security setup complete message, the relay UE to enter the RRC connected state. For example, the remote UE may add trigger information to the DCR message or the security setup complete message, and the trigger information may be used to trigger the relay UE to enter the RRC connected state. For another example, after receiving the DCR message or a security setup complete response message, the remote UE may trigger the relay UE to enter the RRC connected state because the remote UE receives the message.

Alternatively, after the relay UE sets up direct communication (or sets up a PC5-signaling (signaling, S) connection) with the remote UE, the remote UE may trigger, by using a PC5-RRC message, the relay UE to enter the RRC connected state. For example, the remote UE may add trigger information to the PC5-RRC message, and the trigger information may be used to trigger the relay UE to enter the RRC connected state.

Alternatively, after the relay UE establishes a PC5-S connection to the remote UE, the remote UE sends, to the relay UE, a first RRC message used to establish a connection to the first network device; or after the relay UE establishes a PC5-S connection to the remote UE, the remote UE sends, to the relay UE, a first RRC message used to notify the first network device that the connection is completed. After receiving the RRC message, the relay UE can determine that the relay UE needs to enter the RRC connected state. The RRC message is, for example, sent by the remote UE by using a first signaling radio bearer (signaling radio bearer, SRB) between the remote UE and the relay UE. The first SRB is, for example, an SRB 0 or an SRB 1, or may be another SRB.

After the relay UE is triggered, the relay UE may initiate random access after setup of direct communication between the relay UE and the remote UE is completed, or may initiate random access before setup of direct communication between the relay UE and the remote UE is completed, to enter the RRC connected state.

The relay UE enters the RRC connected state after the random access succeeds. After the random access succeeds, the first network device may send configuration information to the relay UE. For example, the configuration information is referred to as second configuration information. The second configuration information may be used to configure the relay UE to provide a relay service for the remote UE. The second configuration information includes, for example, the configuration information of the second relay link. The second relay link includes, for example, an air interface link between the relay UE and the first network device, and may further include the sidelink between the relay UE and the remote UE. This may be understood as follows: The second configuration information includes configuration information of a Uu interface and configuration information of the sidelink, where the sidelink is a link between the remote UE and the relay UE, and the relay UE provides the relay service for the remote UE through the sidelink.

S311: The remote UE sends an RRC reconfiguration complete message to the relay UE, and correspondingly, the relay UE receives the RRC reconfiguration complete message from the remote UE; and the relay UE sends the RRC reconfiguration complete message to the first network device, and correspondingly, the first network device receives the RRC reconfiguration complete message from the relay UE. In other words, the remote UE sends the RRC reconfiguration complete message to the first network device by using the relay UE. The RRC reconfiguration complete message may indicate that the remote UE completes path switch.

In the foregoing process, the remote UE completes path switch, and is switched from communicating with the first network device through the Uu interface to communicating with the first network device by using the relay UE. In this embodiment of this application, even if the relay UE is in the RRC idle state, the first network device can still determine, by using a core network device, whether the relay UE is authorized to provide a relay service. In this way, when it is determined that the relay UE is authorized to provide a relay service, the remote UE may be allowed to access a network by using the relay UE, so that a network access success rate of the remote UE is improved.

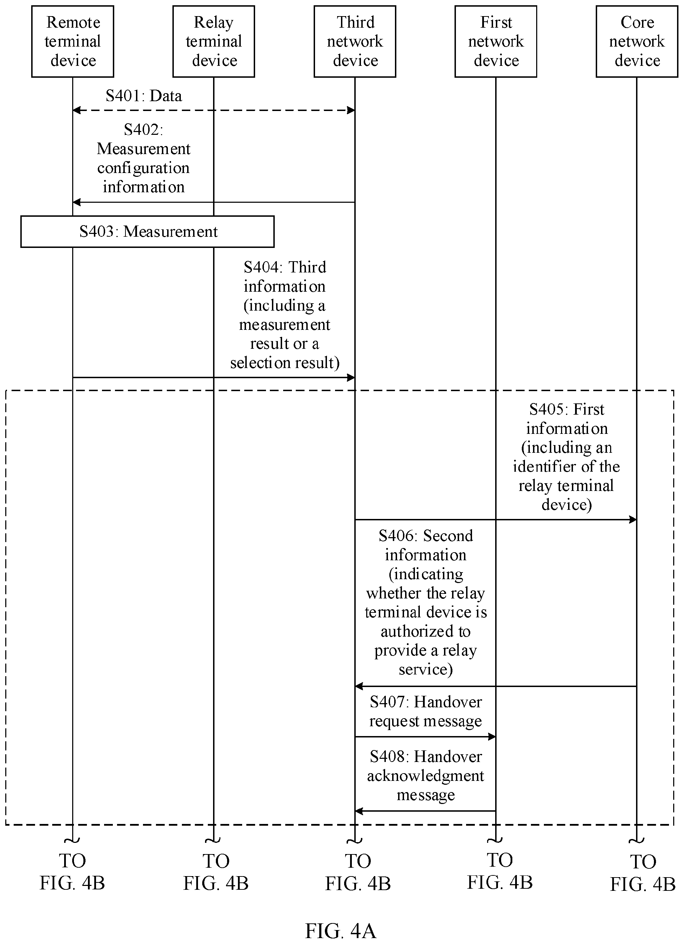

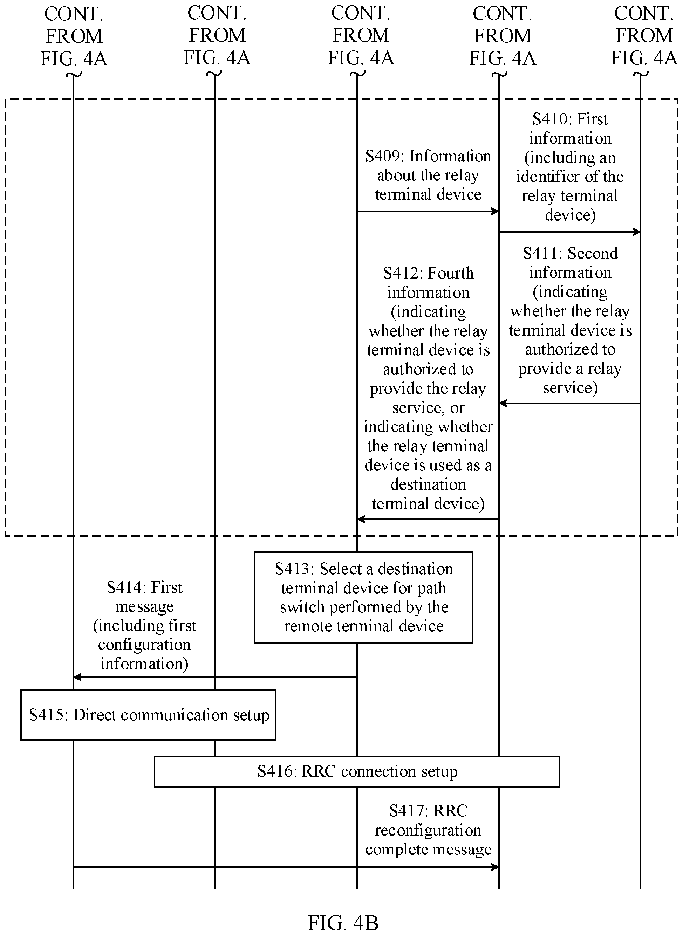

In the embodiment shown in FIG. 3, the network device accessed by the remote UE and the network device on which the relay UE camps are a same network device. The following describes a second communication method according to an embodiment of this application. The method relates to a process of switching from a direct link to an indirect link. FIG. 4A and FIG. 4B are a flowchart of the method. In the method, a network device accessed by remote UE and a network device on which relay UE camps are different network devices.

The technical solution provided in this embodiment of this application may be applied to the network architecture shown in FIG. 1C. If the technical solutions provided in embodiments of this application are applied to the network architecture shown in FIG. 1C, a second terminal device described below may be the remote terminal device shown in FIG. 1C, a first terminal device described below may be the relay terminal device in FIG. 1C, a first network device described below may be the access network device 1 in FIG. 1C, and a third network device described below may be the access network device 2 in FIG. 1C. For example, a second network device described below is the core network device not shown in FIG. 1C, for example, an AMF, an SMF, or a PCF in a 5G system. In addition, the following uses an example in which the second terminal device is remote UE and the first terminal device is relay UE for description.

S401: Remote UE performs data transmission with a third network device. For example, the third network device is a network device accessed by the remote UE, and a first network device is a network device on which relay UE camps. In this embodiment of this application, the first network device and the third network device are different network devices.

S402: The third network device sends an RRC message to the remote UE, and correspondingly, the remote UE receives the RRC message from the third network device. For example, the RRC message includes measurement configuration information, and the measurement configuration information is used by the remote UE to measure another UE or select another UE.

For more content in S402, refer to S302 in the embodiment shown in FIG. 3.

S403: The remote UE performs measurement or selection on one or more UEs. For example, the remote UE may trigger the one or more UEs to send a discovery message, so that the remote UE may measure the discovery message from the one or more UEs, to complete measurement or selection for the one or more UEs. In FIG. 4A and FIG. 4B, an example in which the remote UE performs measurement on the one or more UEs is used. In addition, the relay UE shown in FIG. 4A and FIG. 4B is, for example, one of the one or more UEs.

For more content in S403, refer to S303 in the embodiment shown in FIG. 3.

S404: The remote UE sends third information to the third network device, and correspondingly, the third network device receives the third information from the remote UE.

For more content in S404, refer to S304 in the embodiment shown in FIG. 3.

S405: The third network device sends first information to a second network device, and correspondingly, the second network device receives the first information from the third network device.

The first information is obtained by the first network device based on the third information, and the first information may include identifiers of the one or more UEs. The third network device may request the second network device to determine whether one or more UEs related to the third information are authorized to provide a relay service. For more content in S405, refer to S305 in the embodiment shown in FIG. 3.

S406: The second network device sends second information to the third network device, and correspondingly, the third network device receives the second information from the second network device. The second information may indicate whether the one or more UEs are authorized to provide a relay service.

For more content in S406, refer to S306 in the embodiment shown in FIG. 3.

S407: The third network device sends a handover request (handover request) message to the first network device, and correspondingly, the first network device receives the handover request message from the third network device. The handover request message may be used to request to switch the remote UE to the first network device. Certainly, the handover request message is actually used to switch the remote UE to the relay UE served by the first network device.

S408: The first network device sends a handover acknowledgment (handover acknowledge) message to the third network device, and correspondingly, the third network device receives the handover acknowledgment message from the first network device. The handover acknowledgment message may be used to acknowledge that the remote UE is switched to the first network device.

Optionally, the handover acknowledgment message may further include configuration information. For example, the configuration information is referred to as first configuration information. The first configuration information may configure the remote UE to access a network by using the relay UE. For example, the first configuration information may include configuration information of a second relay link. The second relay link includes, for example, a sidelink between the remote UE and the relay UE. The remote UE is connected to the relay UE through the sidelink, to access a network by using the relay UE.

S409: The third network device sends information about the relay UE to the first network device, and correspondingly, the third network device receives the information about the relay UE from the third network device. For example, the third network device may send a handover request message to the first network device, and add the information about the relay UE to the handover request message. The handover request message may be used to request to switch the remote UE to the first network device, or may be used to request to switch the remote UE to the relay UE served by the first network device.

In the manner described in S405, the third network device requests the second network device to determine whether the one or more UEs related to the third information are authorized to provide a relay service. In another manner described in S409, the third network device may determine network devices on which the one or more UEs related to the third information camp, and send information about the one or more UEs to the network devices on which these UEs camp, so that the network devices on which these UEs camp determine whether the corresponding UEs are authorized to provide a relay service. If the network devices on which the one or more UEs camp are a same network device, the third network device may send the third information to the network device. However, if the network devices on which the one or more UEs camp are different network devices, the third network device needs to respectively send the information about the one or more UEs to the network devices on which the one or more UEs camp.

For example, if the relay UE camps on the first network device, the third network device may send the information about the relay UE to the first network device. The information about the relay UE includes, for example, an identifier of the relay UE, or includes a measurement result of the relay UE.

S410: The first network device sends first information to a second network device, and correspondingly, the second network device receives the first information from the third network device.

The first information is obtained by the first network device based on the information from the third network device. For example, if the first network device receives the identifier of the relay UE from the first network device, the first information may include the identifier of the relay UE. The identifier of the relay UE is, for example, a 5G-S-TMSI or a 5G-GUTI of the relay UE.

S411: The second network device sends second information to the first network device, and correspondingly, the first network device receives the second information from the second network device.

In this case, the second information may indicate that the relay UE is authorized to provide a relay service, or indicate that the relay UE is not authorized to provide a relay service. For example, the second information includes indication information used to indicate whether the relay UE is provided with an authorization service; or the second information includes a context of the relay UE, and the context of the relay UE indicates whether the relay UE is provided with an authorization service.

S412: The first network device sends fourth information to the third network device, and correspondingly, the third network device receives the fourth information from the first network device. For example, the first network device sends a handover acknowledgment message to the third network device, and adds the fourth information to the handover acknowledgment message. The handover acknowledgment message may be used to acknowledge that the remote UE is switched to the first network device, or may be used to acknowledge that the remote UE is switched to the relay UE served by the first network device.

For example, if the third network device selects the destination UE for path switch performed by the remote UE, the fourth information and the second information may be the same information. In this case, the fourth information may indicate that the relay UE is authorized to provide a relay service, or indicate that the relay UE is not authorized to provide a relay service. For another example, if the first network device selects the destination UE for path switch performed by the remote UE, the fourth information and the second information may be different information, and the fourth information may be obtained based on the second information. For example, the fourth information may indicate that the relay UE is the destination UE, or indicate that the relay UE cannot serve as the destination UE.

Optionally, the handover acknowledgment message may further include configuration information. For example, the configuration information is referred to as first configuration information. The first configuration information may configure the remote UE to access a network by using the relay UE. For example, the first configuration information may include configuration information of a second relay link. The second relay link includes, for example, a sidelink between the remote UE and the relay UE. The remote UE is connected to the relay UE through the sidelink, to access a network by using the relay UE.

S405 to S408 and S409 to S412 are two optional solutions, and only one of the two solutions needs to be performed. In other words, whether the relay UE is authorized to provide a relay service may be determined by the third network device accessed by the remote UE, or may be determined by the first network device on which the relay UE camps.

S413: The first network device or the third network device selects the destination UE for path switch performed by the remote UE; or the first network device or the third network device determines the UE to which the remote UE needs to be switched. In FIG. 4A and FIG. 4B, an example in which the third network device selects the destination UE for path switch performed by the remote UE is used.

If S405 to S408 are performed, S413 may be performed by the third network device. In other words, the third network device selects the destination UE for path switch performed by the remote UE. In this case, for more content in S413, refer to S307 in the embodiment shown in FIG. 3.

If S409 to S412 are performed, S413 may be performed by the third network device. In other words, the third network device selects the destination UE for path switch performed by the remote UE. Alternatively, S413 may be performed by the first network device. In other words, the first network device selects the destination UE for path switch performed by the remote UE. For example, if the UEs related to the third information in S404 camp on different network devices, that is, for the UEs related to the third information, the first network devices on which the UEs camp are different, all the different first network devices send the fourth information to the third network device. In this case, it is reasonable that the third network device selects the destination UE for path switch performed by the remote UE. However, if the UEs related to the third information in S404 camp on a same network device, that is, for the UEs related to the third information, the first network devices on which the UEs camp are a same device, either the third network device or the first network device may select the destination UE for path switch performed by the remote UE.

S414: The third network device sends a first message to the remote UE, and correspondingly, the remote UE receives the first message from the third network device. The first message is, for example, an RRC message. Therefore, the first message may alternatively be referred to as a first RRC message. For example, the first message is an RRC reconfiguration message.

The first message may include the first configuration information. It can be learned from the foregoing description that the first configuration information may be transparently transmitted by the first network device, or may be configured by the first network device. The first configuration information may be used to configure the remote UE to access a network by using the relay UE. The first configuration information may further include the ID of the relay UE. For example, the first configuration information may include the configuration information of the second relay link. Optionally, the first configuration information may further include an ID of the remote UE after the remote UE is switched to the relay UE. For example, the ID is a C-RNTI used by the remote UE after the remote UE is switched to the relay UE. After receiving the first message, the remote UE may perform configuration based on the first configuration information. Optionally, the first configuration information may further include configuration information of a sidelink of the relay UE, to be specific, configuration information required for communication between the relay UE and the remote UE through the PC5 interface. The remote UE may send the configuration information of the sidelink of the relay UE to the relay UE based on the first configuration information, so that the relay UE performs configuration on a PC5 side. In this case, the network device does not need to send the configuration information of the sidelink of the relay UE to the relay UE, so that air interface signaling overheads can be reduced.

Optionally, the first message may further include first indication information, and the first indication information may indicate to trigger the relay UE to enter the RRC connected state. The first network device learns that the relay UE is in the RRC non-connected state (for example, the relay UE is in the RRC idle state in this embodiment of this application). However, if the remote UE needs to access a network by using the relay UE, the relay UE needs to enter the RRC connected state. Therefore, the first network device may indicate the remote UE to trigger the relay UE to enter the RRC connected state, so that the relay UE can normally provide the relay service.

S415: The remote UE sets up direct communication with the relay UE.

After completing configuration based on the first configuration information, the remote UE may set up direct communication with the relay UE.

Alternatively, before receiving the first configuration information, the remote UE and the relay UE have set up a direct communication connection. In this case, the existing direct communication connection is reused. Step S415 may occur before step S404, and a sequence of step S309 and step S414 is not limited.

S416: The relay UE establishes an RRC connection to the first network device.

For more content in S416, refer to S310 in the embodiment shown in FIG. 3.

S417: The remote UE sends an RRC reconfiguration complete message to the relay UE, and correspondingly, the relay UE receives the RRC reconfiguration complete message from the remote UE; and the relay UE sends the RRC reconfiguration complete message to the first network device, and correspondingly, the first network device receives the RRC reconfiguration complete message from the relay UE. In other words, the remote UE sends the RRC reconfiguration complete message to the first network device by using the relay UE. The RRC reconfiguration complete message may indicate that the remote UE completes path switch.

In the foregoing process, the remote UE completes path switch, and is switched from communicating with the first network device through the Uu interface to communicating with the first network device by using the relay UE. In this embodiment of this application, even if the relay UE is in the RRC non-connected state, the first network device can still determine, by using the second network device, whether the relay UE is authorized to provide a relay service. In this way, when it is determined that the relay UE is authorized to provide a relay service, the remote UE may be allowed to access a network by using the relay UE, so that a network access success rate of the remote UE is improved. In addition, the third network device accessed by the remote UE may determine whether the relay UE is authorized to provide a relay service, or the first network device on which the relay UE camps may determine whether the relay UE is authorized to provide a relay service. A manner is flexible.

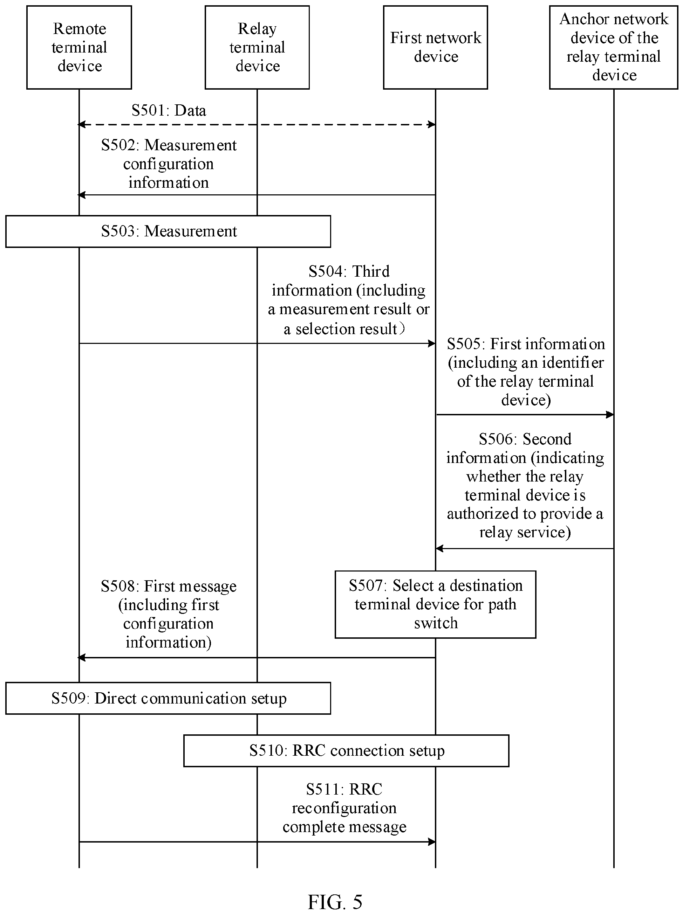

In the embodiment shown in FIG. 3 or FIG. 4A and FIG. 4B, an example in which the relay UE is in the RRC idle state is used. The following describes a third communication method according to an embodiment of this application. In the method, an example in which relay UE is in an RRC inactive state is used. The method relates to a process of switching from a direct link to an indirect link. FIG. 5 is a flowchart of the method.

The technical solution provided in this embodiment of this application may be applied to the network architecture shown in FIG. 1A. For a correspondence between each device described below and a device in the network architecture shown in FIG. 1A, refer to the description in the embodiment shown in FIG. 3. A difference lies in that the second network device in the embodiment shown in FIG. 3 is a core network device, but a second network device in this embodiment of this application is an anchor network device of the relay UE.

S501: Remote UE performs data transmission with a first network device. For example, the third network device is a network device accessed by the remote UE, and a first network device is a network device on which relay UE camps. In this embodiment of this application, the first network device and the third network device are a same network device.

S502: The first network device sends an RRC message to the remote UE, and correspondingly, the remote UE receives the RRC message from the first network device. For example, the RRC message includes measurement configuration information, and the measurement configuration information is used by the remote UE to measure another UE or select another UE.

For more content in S502, refer to S302 in the embodiment shown in FIG. 3.

S503: The remote UE performs measurement or selection on one or more UEs. For example, the remote UE may trigger the one or more UEs to send a discovery message, so that the remote UE may measure the discovery message from the one or more UEs, to complete measurement or selection for the one or more UEs. In FIG. 5, an example in which the remote UE performs measurement on the one or more UEs is used. In addition, the relay UE shown in FIG. 5 is, for example, one of the one or more UEs.

For more content in S503, refer to S303 in the embodiment shown in FIG. 3.

S504: The remote UE sends third information to the first network device, and correspondingly, the first network device receives the third information from the remote UE.

For more content in S504, refer to S304 in the embodiment shown in FIG. 3.

S505: The first network device sends first information to a second network device, and correspondingly, the second network device receives the first information from the first network device.

For example, if one or more UEs related to the third information is in an RRC inactive state, the first network device may determine anchor network devices of these UEs based on the one or more I-RNTIs or resume IDs, and then send the first information to the corresponding anchor network devices. For example, if the relay UE is one of the one or more UEs, and the first network device determines, based on an I-RNTI or a resume ID of the relay UE, that the second network device is an anchor network device of the relay UE, the first network device sends the first information to the second network device.

In this embodiment of this application, the first information is obtained by the first network device based on the third information, and the first information may include identifiers of the one or more UEs. The first information may be used to request to obtain a context of the relay UE, or used to request to confirm whether the relay UE is authorized to provide a relay service. A context stored by the relay UE in the RRC inactive state and a context stored by the anchor network device of the relay UE may include authorization information indicating whether the relay UE can provide a relay service. For more content in S505, for example, content included in the first information, refer to S305 in the embodiment shown in FIG. 3. Certainly, if the one or more UEs have different anchor network devices, the first network device needs to send the first information to the different anchor network devices. In this case, the first information sent by the first network device to the different anchor network devices may be different. For example, the first information sent to one anchor network device may include an identifier of UE of the anchor network device, and the first information sent to the second network device may include the identifier of the relay UE.

S506: The second network device sends second information to the first network device, and correspondingly, the first network device receives the second information from the second network device.

If only the anchor network device of the relay UE in the UEs related to the third information is the second network device, the first network device may add the identifier of the relay UE to the first information and send the first information to the second network device. In this case, the second information may indicate whether the relay UE is authorized to provide a relay service. Alternatively, if anchor network devices of at least two UEs in the UEs related to the third information are the second network device, the first network device may add identifiers of the at least two UEs to the first information, and send the first information to the second network device. In this case, the second information may indicate whether the at least two UEs are authorized to provide a relay service, and the at least two UEs include the relay UE. In the at least two UEs, some UEs may be authorized to provide a relay service, and some UEs are not authorized to provide a relay service. In this case, the second information may separately indicate the at least two UEs.

For more content in S506, for example, content included in the second information, refer to S306 in the embodiment shown in FIG. 3. It should be noted that if the second network device sends the context of the relay UE to the first network device, the second network device may further trigger a core network device (for example, an AMF) to perform path switch. The path switch herein means that the core network device switches a path for sending data to the relay UE from the second network device to the first network device. After the core network device performs path switch, if the core network device has downlink data that needs to be sent to the relay UE, the core network device no longer sends the downlink data to the second network device, but sends the downlink data to the first network device.

S507: The first network device selects the target UE for path switch performed by the remote UE. In other words, the first network device determines UE to which the remote UE needs to be switched.

If the anchor network devices of the one or more UEs related to the third information are different, the first network device may receive pieces of second information from different second network devices. The first network device may select, based on these pieces of second information, the destination UE for path switch performed by the remote UE. Alternatively, if the anchor network devices of the one or more UEs related to the third information are a same device, the first network device may receive the second information from the second network device. The first network device may select, based on the second information, the destination UE for path switch performed by the remote UE. In conclusion, the first network device may select, based on one or more pieces of second information, the destination UE for path switch performed by the remote UE.

If the one or more pieces of second information indicate that one UE is authorized to provide a relay service (for example, one of the one or more pieces of second information indicates that the UE is authorized to provide a relay service, and all other UEs indicated by other pieces of second information are not authorized to provide a relay service), or if the one or more pieces of second information include contexts of the UEs, only a context of one UE in the contexts of these UEs indicates that the UE is authorized to provide a relay service, and contexts of other UEs all indicate that the other UEs are not authorized to provide a relay service, the first network device may determine that the UE is used as the destination UE for path switch performed by the remote UE.

Alternatively, if the one or more pieces of second information indicate that a plurality of UEs are authorized to provide a relay service, or if in the contexts of the UEs included in the one or more pieces of second information, contexts of a plurality of UEs indicate that the plurality of UEs are authorized to provide a relay service, the first network device may determine, from the plurality of UEs, one UE as the destination UE for path switch performed by the remote UE.

However, if all the UEs indicated by the one or more pieces of second information are not provided with the relay service, or if all the contexts of the UEs included in the one or more pieces of second information indicate that the UEs are not provided with the relay service, the first network device cannot perform S507. In this case, the first network device may not perform S507 and subsequent steps, but may send a message to the remote UE. The message may indicate the remote UE to continue performing measurement, indicate that the relay UE fails to be selected, or the like.

The destination UE selected by the first network device is, for example, the relay UE shown in FIG. 5. The relay UE may be in the RRC non-connected state.

S508: The first network device sends a first message to the remote UE, and correspondingly, the remote UE receives the first message from the first network device. The first message is, for example, an RRC message. Therefore, the first message may alternatively be referred to as a first RRC message. For example, the first message is an RRC reconfiguration message.

For more content in S508, refer to S308 in the embodiment shown in FIG. 3.

S509: The remote UE sets up direct communication with the relay UE.

After completing configuration based on the first configuration information, the remote UE may set up direct communication with the relay UE.

Alternatively, before receiving the first configuration information, the remote UE and the relay UE have set up a direct communication connection. In this case, the existing direct communication connection is reused. Step S509 may occur before step S504, and a sequence of step S509 and step S508 is not limited.

S510: The relay UE establishes an RRC connection to the first network device.

It should be noted that if the second information includes the context of the relay UE, in a process of performing S510, the first network device does not need to request to obtain the context of the relay UE from the second network device. However, if the second information does not include the context of the relay UE, but includes the indication information used to indicate whether the relay UE is authorized to provide a relay service, in a process of performing S510, the first network device may request to obtain the context of the relay UE from the second network device.

For more content in S510, refer to S310 in the embodiment shown in FIG. 3.

S511: The remote UE sends an RRC reconfiguration complete message to the relay UE, and correspondingly, the relay UE receives the RRC reconfiguration complete message from the remote UE; and the relay UE sends the RRC reconfiguration complete message to the first network device, and correspondingly, the first network device receives the RRC reconfiguration complete message from the relay UE. In other words, the remote UE sends the RRC reconfiguration complete message to the first network device by using the relay UE. The RRC reconfiguration complete message may indicate that the remote UE completes path switch.

In the foregoing process, the remote UE completes path switch, and is switched from communicating with the first network device through the Uu interface to communicating with the first network device by using the relay UE. In this embodiment of this application, even if the relay UE is in the RRC inactive state, the first network device can still determine, by using the anchor network device of the relay UE, whether the relay UE is authorized to provide a relay service. In this way, when it is determined that the relay UE is authorized to provide a relay service, the remote UE may be allowed to access a network by using the relay UE, so that a network access success rate of the remote UE is improved.

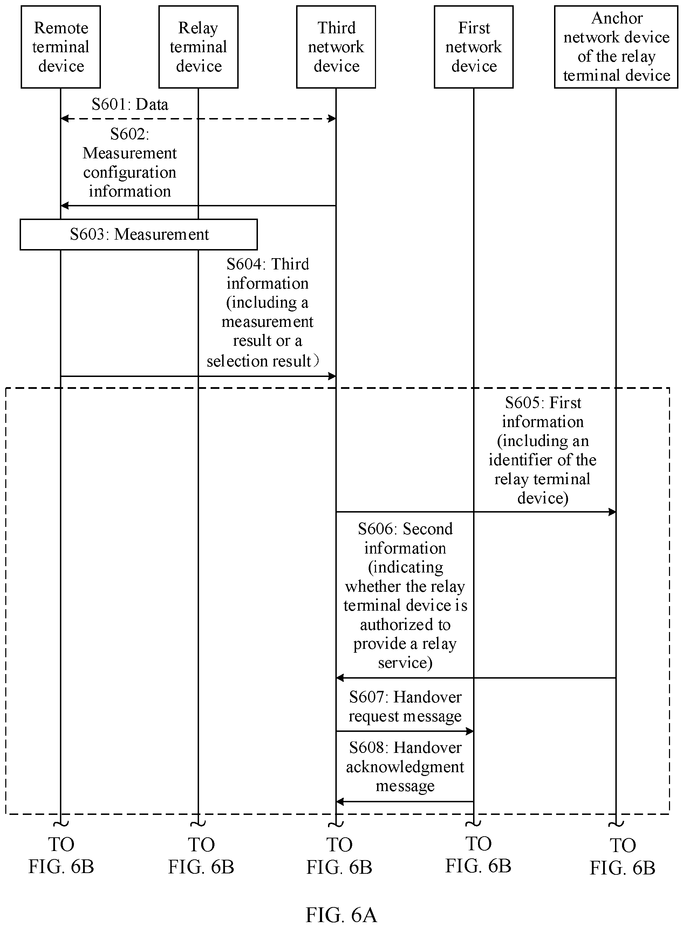

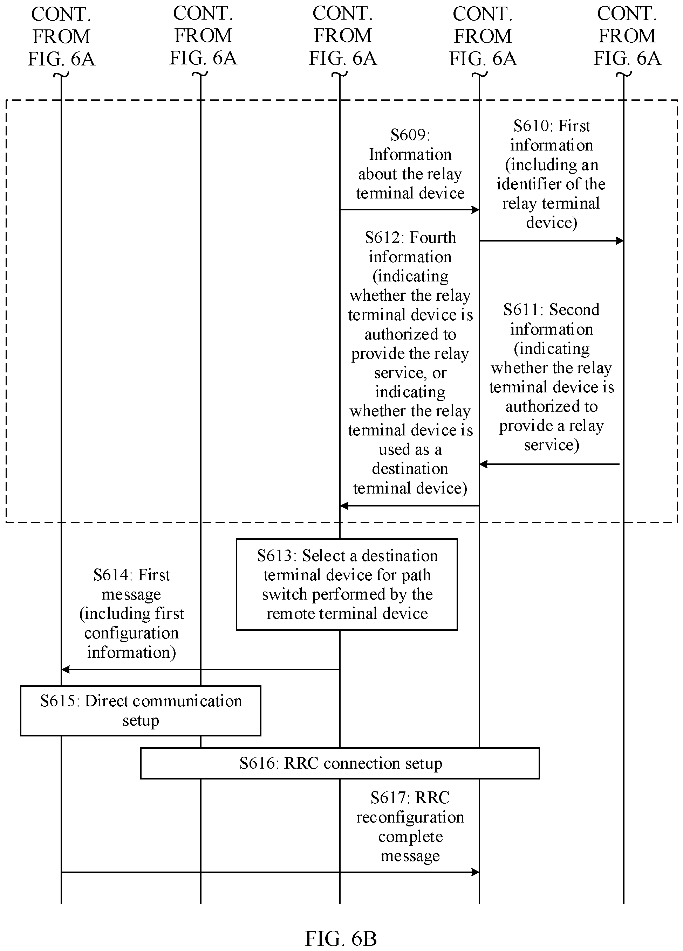

In the embodiment shown in FIG. 5, the network device accessed by the remote UE and the network device on which the relay UE camps are a same network device. The following describes a fourth communication method according to an embodiment of this application. The method relates to a process of switching from a direct link to an indirect link. FIG. 6A and FIG. 6B are a flowchart of the method. In the method, a network device accessed by remote UE and a network device on which relay UE camps are different network devices.

The technical solution provided in this embodiment of this application may be applied to the network architecture shown in FIG. 1C. For a correspondence between each device described below and a device in the network architecture shown in FIG. 1C, refer to the description in the embodiment shown in FIG. 4A and FIG. 4B. A difference lies in that the second network device in the embodiment shown in FIG. 4A and FIG. 4B is a core network device, but a second network device in this embodiment of this application is an anchor network device of the relay UE.

S601: The remote UE performs data transmission with a third network device. For example, the third network device is a network device accessed by the remote UE, and the third network device is a network device on which the relay UE camps. In this embodiment of this application, the first network device and the third network device are different network devices.

S602: The third network device sends an RRC message to the remote UE, and correspondingly, the remote UE receives the RRC message from the third network device. For example, the RRC message includes measurement configuration information, and the measurement configuration information is used by the remote UE to measure another UE or select another UE.

For more content in S602, refer to S302 in the embodiment shown in FIG. 3.

S603: The remote UE performs measurement or selection on one or more UEs. For example, the remote UE may trigger the one or more UEs to send a discovery message, so that the remote UE may measure the discovery message from the one or more UEs, to complete measurement or selection for the one or more UEs. In FIG. 6A and FIG. 6B, an example in which the remote UE performs measurement on the one or more UEs is used. In addition, the relay UE shown in FIG. 6A and FIG. 6B is, for example, one of the one or more UEs.

For more content in S603, refer to S303 in the embodiment shown in FIG. 3.

S604: The remote UE sends third information to the third network device, and correspondingly, the third network device receives the third information from the remote UE.

For more content in S604, refer to S304 in the embodiment shown in FIG. 3.

S605: The third network device sends first information to a second network device, and correspondingly, the second network device receives the first information from the third network device.

The first information is obtained by the first network device based on the third information, and the first information may include identifiers of the one or more UEs. The third network device may request the second network device to determine whether one or more UEs related to the third information are authorized to provide a relay service. For more content in S605, refer to S505 in the embodiment shown in FIG. 5.

S606: The second network device sends second information to the third network device, and correspondingly, the third network device receives the second information from the second network device.

For more content in S606, refer to S506 in the embodiment shown in FIG. 5.

S607: The third network device sends a handover request message to the first network device, and correspondingly, the first network device receives the handover request message from the third network device. The handover request message may be used to request to switch the remote UE to the first network device. Certainly, the handover request message is actually used to switch the remote UE to the relay UE served by the first network device.

S608: The first network device sends a handover acknowledgment message to the third network device, and correspondingly, the third network device receives the handover acknowledgment message from the first network device. The handover acknowledgment message may be used to acknowledge that the remote UE is switched to the first network device.

Optionally, the handover acknowledgment message may further include configuration information. For example, the configuration information is referred to as first configuration information. The first configuration information may configure the remote UE to access a network by using the relay UE. For example, the first configuration information may include configuration information of a second relay link. The second relay link includes, for example, a sidelink between the remote UE and the relay UE. The remote UE is connected to the relay UE through the sidelink, to access a network by using the relay UE.

S609: The third network device sends information about the relay UE to the first network device, and correspondingly, the third network device receives the information about the relay UE from the third network device. For example, the third network device may send a handover request message to the first network device, and add the information about the relay UE to the handover request message. The handover request message may be used to request to switch the remote UE to the first network device, or may be used to request to switch the remote UE to the relay UE served by the first network device.

In the manner described in S605, the third network device requests the second network device to determine whether the one or more UEs related to the third information are authorized to provide a relay service. In another manner described in S609, the third network device may determine network devices on which the one or more UEs related to the third information camp, and send information about the one or more UEs to the network devices on which these UEs camp, so that the network devices on which these UEs camp determine whether the corresponding UEs are authorized to provide a relay service. If the network devices on which the one or more UEs camp are a same network device, the third network device may send the third information to the network device. However, if the network devices on which the one or more UEs camp are different network devices, the third network device needs to respectively send the information about the one or more UEs to the network devices on which the one or more UEs camp.

For example, if the relay UE camps on the first network device, the third network device may send the information about the relay UE to the first network device. The information about the relay UE includes, for example, an identifier of the relay UE. The identifier of the relay UE is, for example, an I-RNTI or a resume ID of the relay UE, so that the first network device determines the anchor network device of the relay UE.

S610: The first network device sends first information to a second network device, and correspondingly, the second network device receives the first information from the third network device.

The first information is obtained by the first network device based on the information from the third network device. For example, if the first network device receives the identifier of the relay UE from the first network device, the first information may include the identifier of the relay UE. The identifier of the relay UE is, for example, a 5G-S-TMSI or a 5G-GUTI of the relay UE. For example, if the relay UE is in the RRC inactive state, and the first network device determines, based on an I-RNTI or a resume ID of the relay UE, that the second network device is the anchor network device of the relay UE, the first network device sends the first information to the second network device.

S611: The second network device sends second information to the first network device, and correspondingly, the first network device receives the second information from the second network device.

In this case, the second information may indicate that the relay UE is authorized to provide a relay service, or indicate that the relay UE is not authorized to provide a relay service. For example, the second information includes indication information used to indicate whether the relay UE is provided with an authorization service; or the second information includes a context of the relay UE, and the context of the relay UE indicates whether the relay UE is provided with an authorization service.

It should be noted that if the second network device sends the context of the relay UE to the first network device, the second network device may further trigger a core network device (for example, an AMF) to perform path switch. The path switch herein means that the core network device switches a path for sending data to the relay UE from the second network device to the first network device. After the core network device performs path switch, if the core network device has downlink data that needs to be sent to the relay UE, the core network device no longer sends the downlink data to the second network device, but sends the downlink data to the first network device.

S612: The first network device sends fourth information to the third network device, and correspondingly, the third network device receives the fourth information from the first network device. For example, the first network device sends a handover acknowledgment message to the third network device, and adds the fourth information to the handover acknowledgment message. The handover acknowledgment message may be used to acknowledge that the remote UE is switched to the first network device, or may be used to acknowledge that the remote UE is switched to the relay UE served by the first network device.

For example, if the third network device selects the destination UE for path switch performed by the remote UE, the fourth information and the second information may be the same information. In this case, the fourth information may indicate that the relay UE is authorized to provide a relay service, or indicate that the relay UE is not authorized to provide a relay service. For another example, if the first network device selects the destination UE for path switch performed by the remote UE, the fourth information and the second information may be different information, and the fourth information may be obtained based on the second information. For example, the fourth information may indicate that the relay UE is the destination UE, or indicate that the relay UE cannot serve as the destination UE.

Optionally, the handover acknowledgment message may further include configuration information. For example, the configuration information is referred to as first configuration information. The first configuration information may configure the remote UE to access a network by using the relay UE. For example, the first configuration information may include configuration information of a second relay link. The second relay link includes, for example, a sidelink between the remote UE and the relay UE. The remote UE is connected to the relay UE through the sidelink, to access a network by using the relay UE.

S605 to S608 and S609 to S612 are two optional solutions, and only one of the two solutions needs to be performed. In other words, whether the relay UE is authorized to provide a relay service may be determined by the third network device accessed by the remote UE, or may be determined by the first network device on which the relay UE camps.

S613: The first network device or the third network device selects the destination UE for path switch performed by the remote UE; or the first network device or the third network device determines the UE to which the remote UE needs to be switched. In FIG. 6A and FIG.6B, an example in which the first network device selects the destination UE for path switch performed by the remote UE is used.

If S605 to S608 are performed, S613 may be performed by the third network device. In other words, the third network device selects the destination UE for path switch performed by the remote UE. In this case, for more content in S613, refer to S307 in the embodiment shown in FIG. 3.

If S609 to S612 are performed, S613 may be performed by the third network device. In other words, the third network device selects the destination UE for path switch performed by the remote UE. Alternatively, S613 may be performed by the first network device. In other words, the first network device selects the path switch destination UE for the remote UE. For example, if the UEs related to the third information in S604 camp on different network devices, that is, for the UEs related to the third information, the first network devices on which the UEs camp are different, all the different first network devices send the fourth information to the third network device. In this case, it is reasonable that the third network device selects the destination UE for path switch performed by the remote UE. However, if the UEs related to the third information in S604 camp on a same network device, that is, for the UEs related to the third information, the first network devices on which the UEs camp are a same device, either the third network device or the first network device may select the destination UE for path switch performed by the remote UE.

S614: The third network device sends a first message to the remote UE, and correspondingly, the remote UE receives the first message from the first network device. The first message is, for example, an RRC message. Therefore, the first message may alternatively be referred to as a first RRC message. For example, the first message is an RRC reconfiguration message.

For content included in the first message, refer to S414 in the embodiment shown in FIG. 4B.

S615: The remote UE sets up direct communication with the relay UE.

After completing configuration based on the first configuration information, the remote UE may set up direct communication with the relay UE.

Alternatively, before receiving the first configuration information, the remote UE and the relay UE have set up a direct communication connection. In this case, the existing direct communication connection is reused. Step S615 may occur before step S604, and a sequence of step S309 and step S614 is not limited.

S616: The relay UE establishes an RRC connection to the first network device.

For more content in S616, refer to S310 in the embodiment shown in FIG. 3.

S617: The remote UE sends an RRC reconfiguration complete message to the relay UE, and correspondingly, the relay UE receives the RRC reconfiguration complete message from the remote UE; and the relay UE sends the RRC reconfiguration complete message to the first network device, and correspondingly, the first network device receives the RRC reconfiguration complete message from the relay UE. In other words, the remote UE sends the RRC reconfiguration complete message to the first network device by using the relay UE. The RRC reconfiguration complete message may indicate that the remote UE completes path switch.

In the foregoing process, the remote UE completes path switch, and is switched from communicating with the first network device through the Uu interface to communicating with the first network device by using the relay UE. In this embodiment of this application, even if the relay UE is in the RRC non-connected state, the first network device can still determine, by using the anchor network device of the relay UE, whether the relay UE is authorized to provide a relay service. In this way, when it is determined that the relay UE is authorized to provide a relay service, the remote UE may be allowed to access a network by using the relay UE, so that a network access success rate of the remote UE is improved. In addition, the third network device accessed by the remote UE may determine whether the relay UE is authorized to provide a relay service, or the first network device on which the relay UE camps may determine whether the relay UE is authorized to provide a relay service. A manner is flexible.

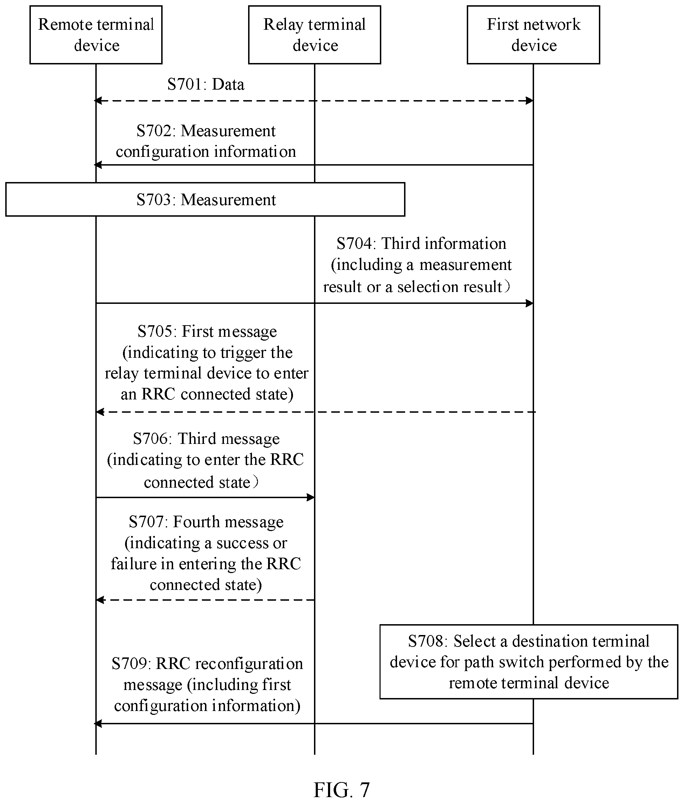

In the foregoing embodiment, that the remote UE may trigger the relay UE to enter the RRC connected state is described. The following describes a fifth communication method according to an embodiment of this application. According to the method, how remote UE triggers relay UE to enter an RRC connected state is described. The method relates to a process of switching from a direct link to an indirect link. FIG. 7 is a flowchart of the method.

The technical solution provided in this embodiment of this application may be applied to the network architecture shown in FIG. 1A. For a correspondence between each device described below and a device in the network architecture shown in FIG. 1A, refer to the description in the embodiment shown in FIG. 3.

S701: Remote UE performs data transmission with a first network device. For example, the third network device is a network device accessed by the remote UE, and a first network device is a network device on which relay UE camps. However, in this embodiment of this application, an example in which the first network device and the third network device are a same network device is used.

S702: The first network device sends an RRC message to the remote UE, and correspondingly, the remote UE receives the RRC message from the first network device. For example, the RRC message includes measurement configuration information, and the measurement configuration information is used by the remote UE to measure another UE or select another UE.

For more content in S702, refer to S302 in the embodiment shown in FIG. 3.

S703: The remote UE performs measurement or selection on one or more UEs. For example, the remote UE may trigger the one or more UEs to send a discovery message, so that the remote UE may measure the discovery message from the one or more UEs, to complete measurement or selection for the one or more UEs. In FIG. 7, an example in which the remote UE performs measurement on the one or more UEs is used. In addition, the relay UE shown in FIG. 7 is, for example, one of the one or more UEs.

For more content in S703, refer to S303 in the embodiment shown in FIG. 3.

S704: The remote UE sends third information to the first network device, and correspondingly, the first network device receives the third information from the remote UE.

For more content in S704, refer to S304 in the embodiment shown in FIG. 3.

S705: The first network device sends a first message to the remote UE, and correspondingly, the remote UE receives the first message from the first network device. The first message is, for example, an RRC message. Therefore, the first message may alternatively be referred to as a first RRC message. For example, the first message is an RRC reconfiguration message.

The first message may include first indication information, and the first indication information may be used to indicate to trigger some or all UEs related to the third information to enter the RRC connected state. For example, the relay UE shown in FIG. 7 is one of the UEs that are indicated by the first indication information to be triggered.

In other words, after obtaining the third information, the first network device may indicate the remote UE to trigger UEs that may provide a relay service for the remote UE to enter the RRC connected state. If this manner is used, the first network device may obtain contexts of these UEs according to a normal process after these UEs enter the RRC connected state, to determine whether these UEs are authorized to provide a relay service, and does not need to additionally determine, because these UEs are in the RRC non-connected state, whether these UEs are authorized to provide a relay service, so that a process performed by the first network device is more easily compatible with a current technology.

S705 is an optional step.

S706: The remote UE sends a third message, and correspondingly, the relay UE receives the third message from the remote UE. The third message may indicate to enter the RRC connected state.

The first message in S705 may indicate the remote UE to trigger the one or more UEs to enter the RRC connected state. The remote UE triggers these UEs in similar manners. Therefore, an example in which the remote UE triggers the relay UE to enter the RRC connected state is used herein. In addition, if one UE is triggered to enter the RRC connected state, the remote UE only needs to send the third message to the UE. For example, the third message may carry an L2 destination ID of the UE. In this case, the third message may be considered as a unicast message. If a plurality of UEs need to be triggered to enter the RRC connected state, the remote UE may separately unicast the third message to different UEs, or the remote UE may broadcast the third message, to reduce a sending process of the remote UE.

Optionally, the third message is a PC5-S message, an RRC message, or a PC5-RRC message. The PC5-RRC message is a message transmitted after direct communication between the remote UE and the relay UE is set up. The PC5-S message is, for example, a message transmitted before direct communication between the remote UE and the relay UE is set up. The PC5-S message that may be used as the third message includes, for example, a discovery message, a DCR message, or a security setup complete message, or may include another message in a process of setting up direct communication between the remote UE and the relay UE, or may include another message other than a message related to a process of setting up direct communication, or may be a newly added message in this embodiment of this application.

For example, if the third message is the PC5-S message, the third message needs to indicate to enter the RRC connected state. In an indication manner, the third message includes second indication information, and the second indication information may be used to indicate to enter the RRC connected state. In this case, the relay UE that receives the third message may determine, based on the second indication information, to enter the RRC connected state. For example, the second indication information may be included in a message body of the third message, or may be included in a MAC header of the third message.

For another example, if the third message is the PC5-S message, the third message needs to indicate to enter the RRC connected state. In another indication manner, the third message includes no second indication information, and including no second indication information is used to indicate to enter the RRC connected state. In this case, if the third message includes the second indication information, including the second indication information is used to indicate not to enter the RRC connected state. For example, if the remote UE performs relay by using the relay UE, the relay UE is expected to monitor paging (paging) for the remote UE. In this case, the relay UE may not need to enter the RRC connected state, and can also monitor paging for the remote UE. Therefore, the third message may include the second indication information, to indicate not to enter the RRC connected state. Alternatively, if the remote UE performs relay by using the relay UE to perform path switch, that is, the remote UE needs to communicate with a network by using the relay UE, the relay UE needs to enter the RRC connected state. In this case, the third message may not include the second indication information, to indicate to enter the RRC connected state.

For another example, if the third message is the PC5-S message, the third message needs to indicate to enter the RRC connected state. In still another indication manner, the third message indicates, by using an identifier of the remote UE included in the third message, to enter the RRC connected state. For example, if the third message includes a C-RNTI of the remote UE, it indicates that the remote UE needs to perform path switch, or it may be considered as implicitly indicating to enter the RRC connected state. Alternatively, if the third message does not include the identifier of the remote UE, it indicates that the remote UE needs to access a network for the first time by using the relay UE, or it may be considered as implicitly indicating to enter the RRC connected state. Alternatively, if the third message includes a 5G-S-TMSI of the remote UE, it indicates that the remote UE needs to monitor paging by using the relay UE, or it may be considered as implicitly indicating not to enter the RRC connected state.

For another example, if the third message is an RRC message, in an implementation, the third message is a first RRC message that is sent by the remote UE to the relay UE after the relay UE establishes a PC5-S connection to the remote UE and that is used to establish a connection to the first network device. After receiving the RRC message, the relay UE can determine that the relay UE needs to enter the RRC connected state. The RRC message is, for example, sent by the remote UE by using a first SRB between the remote UE and the relay UE. The first SRB is, for example, an SRB 0 or an SRB 1, or may be another SRB.

For another example, if the third message is a PC5-RRC message, the third message may include indication information. For example, the indication information is referred to as third indication information. The third indication information may be used to indicate to enter the RRC connected state.

In addition to the foregoing implementations, the third message may have another implementation. This is not limited in this embodiment of this application, provided that the third message can be used to trigger the relay UE to enter the RRC connected state.

S707: The relay UE sends a fourth message to the remote UE, and correspondingly, the remote UE receives the fourth message from the relay UE. After receiving the third message, the relay UE may enter the RRC connected state. After entering the RRC connected state, the relay UE may send the fourth message to the remote UE, where the fourth message may indicate that the relay UE has entered the RRC connected state. Alternatively, if the relay UE fails to enter the RRC connected state, the relay UE may also send the fourth message to the remote UE. In this case, the fourth message may indicate that the relay UE fails to enter the RRC connected state. In this embodiment of this application, an example in which the fourth message indicates that the relay UE has entered the RRC connected state is used.

The fourth message is, for example, a PC5-S message, or may be a PC5-RRC message. Alternatively, the fourth message may further be a data packet. The PC5-S message that may be used as the fourth message includes, for example, a discovery message, a DCR response message, or a security setup request message, or may include another message in a process of setting up direct communication between the remote UE and the relay UE, or may include another message other than a message related to a process of setting up direct communication, or may be a newly added message in this embodiment of this application. The PC5-RRC message that may be used as the fourth message includes, for example, a PC5 configuration message (RRC reconfiguration sidelink), a PC5 configuration complete message (RRC reconfiguration complete sidelink), a PC5 capability exchange message (UE capability enquiry sidelink, UE capability information sidelink), a master information block (master information block, MIB) on a PC5, or the like. For example, the fourth message may include indication information. For example, the indication information is referred to as fourth indication information. The fourth indication information may be used to indicate that the relay UE has entered the RRC connected state, or indicate that the relay UE fails to enter the RRC connected state. The fourth indication information may be carried in a message header (for example, a MAC header) of the fourth message, or may be carried in a message body of the fourth message. For example, the discovery message includes an indication of a state of the UE, indicating, for example, that the UE has entered the RRC connected state. For another example, the state of the UE may be indicated by using a MIB on an SL.

Then, for example, the remote UE may further send an RRC reconfiguration complete message to the first network device, to indicate whether the remote UE succeeds, fails, or the like in performing path switch.

The relay UE does not necessarily send the fourth message to the remote UE, that is, the fourth message may not be sent. Therefore, S707 is an optional step.

S708: The first network device selects the destination UE for path switch performed by the remote UE.

Alternatively, S705 may not be performed in this embodiment of this application. In this case, after S704 is performed, S305 and S306 in the embodiment shown in FIG. 3 may be performed. To be specific, if the UE related to the third information is not triggered to enter the RRC connected state, the first network device may determine whether the UEs related to the third information are authorized to provide a relay service. In addition, if S705 is not performed, S706 and S707 may occur after S709.

If S705 is performed, the first network device may obtain contexts of the UEs related to the third information. The first network device can determine, based on the contexts of these UEs, whether these UEs are authorized to provide a relay service, so that the first network device can select the destination UE for the remote UE from UEs that are authorized to provide a relay service.

If S705 is not performed, but S305 and S306 are performed, the first network device also determines whether the UEs related to the third information are authorized to provide a relay service, so that the first network device may select the destination UE for the remote UE from UEs that are authorized to provide a relay service. For how the first network device performs selection in this case, refer to S307 in the embodiment shown in FIG. 3.

The destination UE selected by the first network device is, for example, the relay UE shown in FIG. 7. The relay UE may be in the RRC non-connected state.

S709: The first network device sends an RRC reconfiguration message to the remote UE, and correspondingly, the remote UE receives the RRC reconfiguration message from the first network device.

If S705 is performed, the first network device sends a common RRC reconfiguration message to the remote UE in S709. The RRC reconfiguration message may include first configuration information. The first configuration information may configure the remote UE to access a network by using the relay UE. For example, the first configuration information may include configuration information of a second relay link. The second relay link includes, for example, a sidelink between the remote UE and the relay UE. The remote UE is connected to the relay UE through the sidelink, to access a network by using the relay UE. After receiving the RRC reconfiguration message, the remote UE may perform configuration based on the first configuration information.

If S705 is not performed, but S305 and S306 are performed, the RRC reconfiguration message in S709 may alternatively be referred to as a first message. The first message is, for example, an RRC message. Therefore, the first message may alternatively be referred to as a first RRC message. The RRC reconfiguration message is only an implementation of the first message. In this case, the first message may also include the first configuration information. In addition, optionally, the first message in this case may further include first indication information, and the first indication information may indicate to trigger the relay UE (that is, the destination UE selected by the first network device in S708) to enter the RRC connected state. The first network device learns that the relay UE is in the RRC non-connected state (for example, the relay UE is in the RRC idle state or the RRC inactive state). However, if the remote UE needs to access a network by using the relay UE, the relay UE needs to enter the RRC connected state. Therefore, the first network device may indicate the remote UE to trigger the relay UE, so that the relay UE can normally provide the relay service.

If S705 is performed, the foregoing steps may be performed, for example, in a sequence of S701-S702-S703-S704-S705-S706-S707-S708-S709. If S705 is not performed, the foregoing steps may be performed, for example, in a sequence of S701-S702-S703-S704-S708-S709-S706-S707. Certainly, before S708 is performed, S305 and S306 may be further performed.

In this embodiment of this application, the remote UE may trigger the relay UE to enter the RRC connected state, to facilitate the relay UE to be configured to provide a relay service. In addition, if the process is performed before the first network device selects the destination UE for the remote UE, the first network device may be helped to select the destination UE from a plurality of UEs that are in the RRC connected state. The first network device does not need to additionally determine whether these UEs are authorized to provide a relay service, so that an execution process of the first network device is reduced.

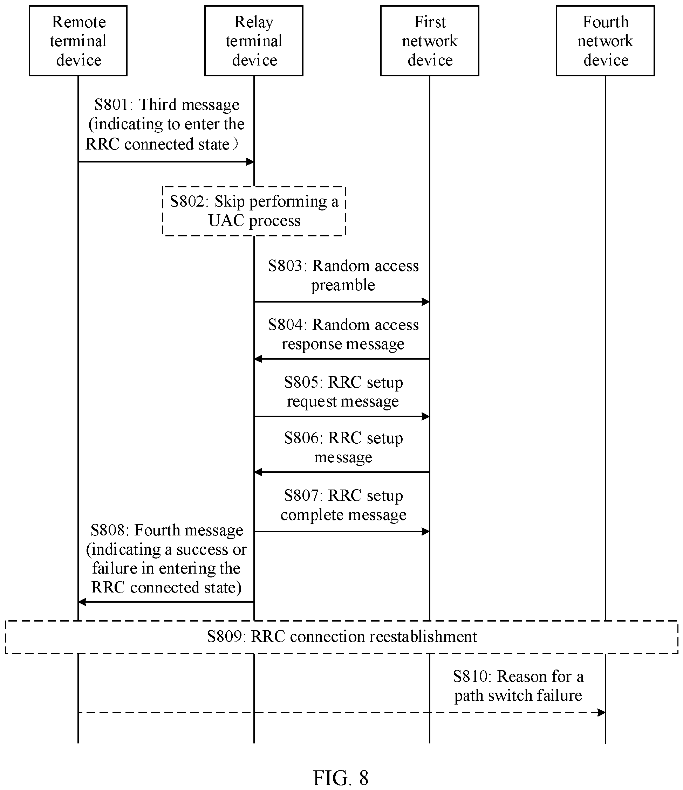

In the foregoing, that the remote UE may trigger the relay UE to enter the RRC connected state is described. However, the relay UE may successfully enter the RRC connected state or may fail to enter the RRC connected state. Therefore, the following describes a sixth communication method according to an embodiment of this application. The method is used to describe a processing manner for a case in which the relay UE fails to enter the RRC connected state. The method relates to a process of switching from a direct link to an indirect link. FIG. 8 is a flowchart of the method.

The technical solution provided in this embodiment of this application may be applied to the network architecture shown in FIG. 1A. For a correspondence between each device described below and a device in the network architecture shown in FIG. 1A, refer to the description in the embodiment shown in FIG. 3.

S801: The remote UE sends a third message, and correspondingly, the relay UE receives the third message from the remote UE. The third message may indicate to enter an RRC connected state. Optionally, the third message may further indicate a reason for which the remote UE requests to establish a connection to the relay UE. For example, the reason is that the remote UE needs to access a network for the first time by using the relay UE, that the remote UE needs to perform path switch, or that the remote UE needs to monitor paging by using the relay UE.

S801 may be equivalent to S706 in the embodiment shown in FIG. 7. Therefore, for more descriptions of S801, refer to S706. Correspondingly, for a step that occur before S801, refer to the embodiment shown in FIG. 7.

S802: The relay UE does not perform a unified access control (unified access control, UAC) process, or the relay UE performs a UAC process, and sets an access category (access category) to "0".

The UAC process means that when the relay UE has a service and expects to enter the RRC connected state from an RRC idle state, the relay UE needs to perform a UAC process in a cell on which the relay UE camps. The UAC process is as follows: UE determines an access category and access identity (access identity) based on a service, and a base station configures access control parameters for different access categories by using broadcast messages. The UE randomly generates a random number between 0 and 1 based on an access category to which the UE belongs. If the generated random number is within a range determined based on the access control parameter, the UE may initiate random access. If the generated random number is not within a range determined based on the access control parameter, the UE cannot initiate random access temporarily, but needs to wait for a period of time before generating a random number again, to determine whether random access can be initiated.

For example, the relay UE may directly access a network based on a service of the remote UE without performing UAC access control. To be specific, if resumption or setup of an RRC connection of the relay UE is triggered by the service of the remote UE, it is considered that access is allowed.

For another example, if the third message indicates that the reason for which the remote UE establishes a connection to the relay UE is that the remote UE needs to access a network for the first time by using the relay UE, that the remote UE needs to perform path switch, or the like, the relay UE may not perform the UAC process, to save time and improve random access efficiency of the relay UE. Alternatively, regardless of the reason indicated by the third message to explain why the remote UE establishes a connection to the relay UE, or if the third message does not indicate the reason for which the remote UE establishes a connection to the relay UE, the relay UE may not perform the UAC process.

For another example, the relay UE may set the access category of the remote UE to 0 based on the service of the remote UE. To be specific, if resumption or setup of an RRC connection of the relay UE is triggered by the service of the remote UE, an RRC sets the access category to 0.

For another example, based on the service of remote UE, a non-access stratum (non-access stratum, NAS) of the relay UE may set the access category to 0 or allocate a new access category, so that the relay UE performs unified access control. To be specific, if resumption or setup of an RRC connection of the relay UE is triggered by the service of the remote UE, an indication of an upper layer (for example, a NAS layer) is received, and the access category is set, for example, to a value of 0.

S802 is an optional step, and the relay UE may optionally perform S802.

S803: The relay UE sends a random access preamble (preamble) to a first network device, and correspondingly, the first network device receives the preamble from the relay UE. The first network device is a network device on which relay UE camps.

The preamble may be a common preamble, or the preamble may be preset. For example, in a preset manner, the first network device configures the preamble by using broadcast information, or a preset manner is specified in a protocol. If the preamble is preset, the preamble may be used to indicate a reason for which the relay UE enters the RRC connected state. For example, the reason is for another UE to perform path switch, the reason is for another UE to access a network for the first time, or the reason is for another UE to monitor paging and request a resource that needs to reply to a connection setup request or a discovery message.

S804: The first network device sends a random access response (random access response, RAR) message to the relay UE, and correspondingly, the relay UE receives the RAR message from the first network device.

S805: The relay UE sends an RRC setup request (RRC setup request) message to the first network device, and correspondingly, the first network device receives the RRC setup request message from the relay UE. Alternatively, the relay UE sends an RRC resume request (RRC resume request) message to the first network device, and correspondingly, the first network device receives the RRC resume request message from the relay UE. In FIG. 8, an example in which the message is the RRC setup request message is used. The RRC setup request message or the RRC resume request message is also a third message (Msg3) in a random access process. It should be noted that the third message in S801 does not refer to the third message in the random access process. Therefore, the Msg3 herein and the third message in S801 are not a same message.

Optionally, the Msg3 may include reason information, and the reason information is used to indicate the reason for which the relay UE enters the RRC connected state. For example, the reason is for another UE to perform path switch, or the reason is for another UE to access a network for the first time, or the reason is for another UE to monitor paging and request to obtain a resource for communicating with another UE. For example, if the preamble is preconfigured, the Msg3 does not include the reason information; or if the preamble is a common preamble and is not used to indicate the reason for which the relay UE enters the RRC connected state, the Msg3 may include the reason information. For another example, regardless of whether the preamble is preconfigured, the Msg3 may include the reason information.

If the relay UE performs random access to enter the RRC connected state from an RRC idle state, the Msg3 may be the RRC setup request (RRC setup request) message, and S805 is used as an example. If the relay UE performs random access to enter the RRC connected state from an RRC inactive state, the Msg3 may be the RRC resume request (RRC resume request) message, or the Msg3 may be another RRC message. If the relay UE performs random access to resume the RRC connection to the first network device, that is, the relay UE is in a connection resume state, the Msg3 may be an RRC reestablishment request (RRC reestablishment request) message.

S806: If the relay UE sends the RRC setup request message to the first network device in S805, the first network device sends an RRC setup (RRC setup) message to the relay UE, and correspondingly, the relay UE receives the RRC setup message from the first network device. Alternatively, if the relay UE sends the RRC resume request message to the first network device in S805, the first network device sends an RRC resume (RRC resume) message to the relay UE, and correspondingly, the relay UE receives the RRC resume message from the first network device. In FIG. 8, an example in which the message is the RRC setup message is used. The RRC setup message or the RRC resume message may indicate that the RRC connection is successfully set up. If the first network device refuses to establish the RRC connection, S806 may be replaced with the following: The first network device sends an RRC reject (RRC reject) message to the relay UE, and correspondingly, the relay UE receives the RRC reject message from the first network device, where the RRC reject message may indicate that the RRC connection fails to be set up, or indicate that setup of the RRC connection is rejected. If the relay UE receives the RRC reject message, it is determined that the RRC connection fails to be set up. The RRC reject message may further carry time information, to indicate duration for which the relay UE needs to wait.

S807: If the relay UE receives the RRC setup message from the first network device in S806, the relay UE sends an RRC setup complete (RRC setup complete) message to the first network device, and correspondingly, the first network device receives the RRC setup complete message from the relay UE. Alternatively, if the relay UE receives the RRC resume message from the first network device in S806, the relay UE sends an RRC resume complete (RRC resume complete) message to the first network device, and correspondingly, the first network device receives the RRC resume complete message from the relay UE. In FIG. 8, an example in which the message is the RRC setup complete message is used. The RRC setup complete message may indicate that the RRC connection is set up, or the RRC resume complete message indicates that the RRC connection is resumed. The RRC setup complete message or the RRC resume complete message may alternatively be understood as a fifth message (Msg5) in the random access process.

S808: The relay UE sends a fourth message to the remote UE, and correspondingly, the remote UE receives the fourth message from the relay UE. The fourth message may indicate that the relay UE enters the RRC connected state (or indicate that the relay UE has entered the RRC connected state), or indicate that the relay UE fails to enter the RRC connected state. If the fourth message indicates that the relay UE fails to enter the RRC connected state, optionally, the fourth message may further indicate a reason for which the relay UE fails to enter the RRC connected state, or the fourth message may further include time information, used to indicate duration for which the relay UE needs to wait when attempting to access again. If the remote UE accesses a network for the first time by using the relay UE or requests the relay UE to monitor paging, the remote UE may choose, based on the information, to continue waiting, or the remote UE triggers relay UE reselection.

For example, an RRC layer of the relay UE may send an indication to a PC5-S layer of the relay UE, to indicate that the relay UE successfully enters the RRC connected state or fails to enter the RRC connected state. After receiving the indication, the PC5-S layer of the relay UE may send the fourth message to a PC5-S layer of the remote UE. For example, the fourth message is a PC5-S message or a PC5-RRC message, or the fourth message may be a data packet. The PC5-S message that may be used as the fourth message is, for example, a discovery message or a DCR response message.

If the fourth message indicates that the relay UE has entered the RRC connected state, for corresponding content, refer to the description in the embodiment shown in FIG. 7. However, if the fourth message indicates that the relay UE fails to enter the RRC connected state, the relay UE may continue to perform the following steps.

S809: The remote UE reestablishes an RRC connection. The remote UE may have received the first configuration information from the first network device (for a description of this step, refer to the embodiment shown in FIG. 7), and the first configuration information is used to configure the remote UE to access a network by using the relay UE. However, the relay UE fails to enter the RRC connected state, and cannot provide the relay service for the remote UE. Therefore, it is equivalent that the remote UE cannot continue to apply the first configuration information. In this case, the remote UE may initiate RRC connection reestablishment. For example, the remote UE may initiate RRC connection reestablishment under a fourth network device. The fourth network device and the first network device are, for example, a same network device, or the fourth network device and the first network device may be different network devices. In other words, the remote UE may initiate RRC connection reestablishment under a network device accessed by the remote UE, or may initiate RRC connection reestablishment under a new network device. For another example, the remote UE may trigger relay reselection, and initiate RRC connection reestablishment to the network by using newly selected relay UE.

S810: The remote UE sends a failure reason to the fourth network device, and correspondingly, the fourth network device receives the failure reason from the remote UE. The failure reason may indicate a reason for which the remote UE fails to perform path switch, for example, a connection setup failure of the relay UE. Alternatively, the reason is a reason for which the relay UE fails to enter the RRC connected state. In other words, the reason is learned by the remote UE by using the fourth message. In FIG. 8, an example in which the fourth network device and the first network device are a same network device is used.

The failure reason may be sent by the remote UE to the fourth network device in an RRC connection reestablishment process. For example, the remote UE may add the failure reason to an RRC reestablishment request (RRC reestablishment request) message and send the RRC reestablishment request message to the fourth network device. Alternatively, the failure reason may be sent by the remote UE to the fourth network device after the remote UE completes RRC connection reestablishment.

Alternatively, the remote UE may not perform S809, but directly send the failure reason to the fourth network device. Alternatively, the remote UE may not send the failure reason to the fourth network device. Therefore, both S809 and S810 are optional steps.

This embodiment of this application provides a processing manner for a case in which the relay UE fails to enter the RRC connection state. In addition, in this embodiment of this application, the first network device can learn a reason for which the relay UE enters the RRC connected state, so that the relay UE can quickly enter the RRC connected state, and communication continuity of the remote UE is improved.

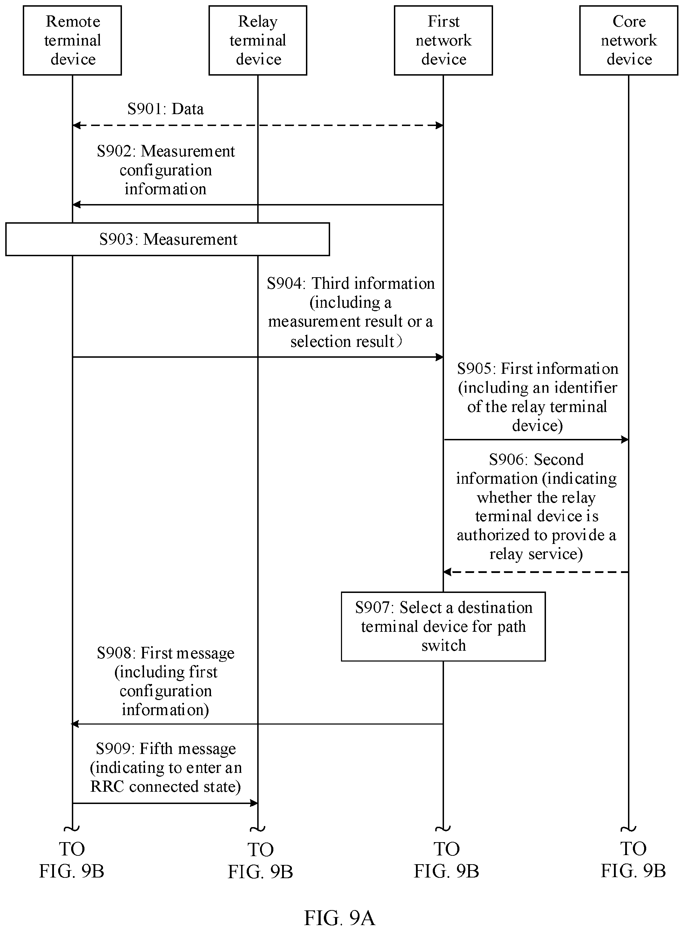

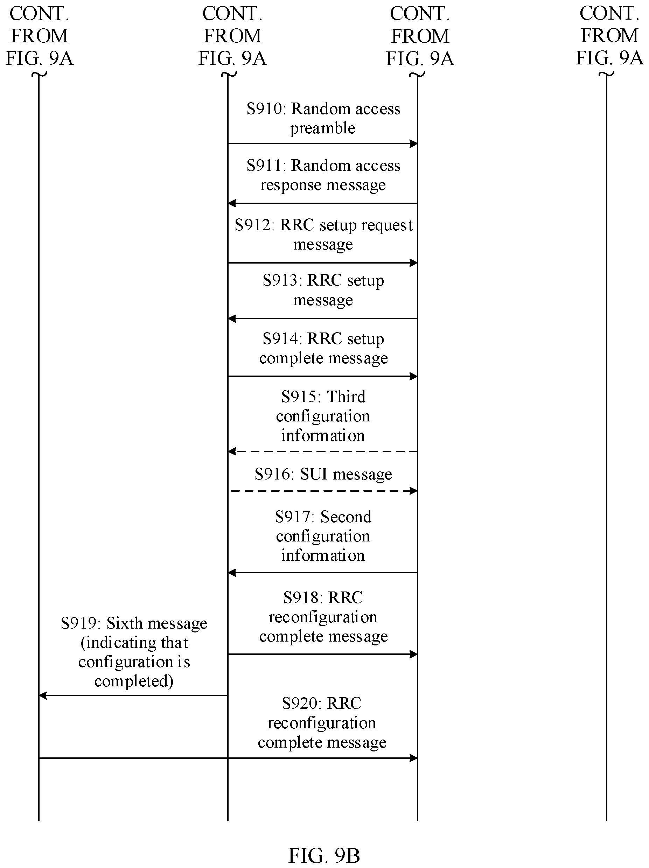

It can be learned from the embodiment shown in any one of FIG. 3 to FIG. 6A and FIG. 6B that the remote UE may send the RRC reconfiguration complete message to the first network device by using the relay UE, to indicate the remote UE to complete path switch. However, the remote UE cannot learn whether the relay UE has completed configuration based on the configuration information from the first network device. Therefore, if the remote UE sends the RRC reconfiguration complete message to the first network device before the relay UE completes configuration, the relay UE may fail to forward the RRC reconfiguration complete message to the first network device. Therefore, the following describes a seventh communication method according to an embodiment of this application. According to the method, remote UE may send an RRC reconfiguration complete message to a first network device after learning that relay UE has completed configuration. The method relates to a process of switching from a direct link to an indirect link. FIG. 9A and FIG. 9B are a flowchart of the method.

The technical solution provided in this embodiment of this application may be applied to the network architecture shown in FIG. 1A. For a correspondence between each device described below and a device in the network architecture shown in FIG. 1A, refer to the description in the embodiment shown in FIG. 3.

S901: Remote UE performs data transmission with a first network device. For example, the third network device is a network device accessed by the remote UE, and a first network device is a network device on which relay UE camps. In this embodiment of this application, the first network device and the third network device are a same network device.

S902: The first network device sends an RRC message to the remote UE, and correspondingly, the remote UE receives the RRC message from the first network device. For example, the RRC message includes measurement configuration information, and the measurement configuration information is used by the remote UE to measure another UE or select another UE.

For more content in S902, refer to S302 in the embodiment shown in FIG. 3.

S903: The remote UE performs measurement or selection on one or more UEs. For example, the remote UE may trigger the one or more UEs to send a discovery message, so that the remote UE may measure the discovery message from the one or more UEs, to complete measurement or selection for the one or more UEs. In FIG. 9A and FIG. 9B, an example in which the remote UE performs measurement on the one or more UEs is used. In addition, the relay UE shown in FIG. 9A and FIG. 9B is, for example, one of the one or more UEs.

For more content in S903, refer to S303 in the embodiment shown in FIG. 3.

S904: The remote UE sends third information to the first network device, and correspondingly, the first network device receives the third information from the remote UE.

For more content in S904, refer to S304 in the embodiment shown in FIG. 3.

S905: The first network device sends first information to a second network device, and correspondingly, the second network device receives the first information from the first network device.

The first information is obtained by the first network device based on the third information, and the first information may include identifiers of the one or more UEs. The first network device may request the second network device to determine whether one or more UEs related to the third information are authorized to provide a relay service. For more content in S905, refer to S305 in the embodiment shown in FIG. 3.

S906: The second network device sends second information to the first network device, and correspondingly, the first network device receives the second information from the second network device. The second information may indicate whether the one or more UEs are authorized to provide a relay service.

For more content in S906, refer to S306 in the embodiment shown in FIG. 3.

In this embodiment of this application, S905 and S906 are optional steps.

S907: The first network device selects the destination UE for path switch performed by the remote UE.

For more content in S907, refer to S307 in the embodiment shown in FIG. 3.

S908: The first network device sends a first message to the remote UE, and correspondingly, the remote UE receives the first message from the first network device. The first message is, for example, an RRC message. Therefore, the first message may alternatively be referred to as a first RRC message. For example, the first message is an RRC reconfiguration message.

For more content in S908, refer to S308 in the embodiment shown in FIG. 3.

S909: The remote UE sends a fifth message to the relay UE, and correspondingly, the relay UE receives the fifth message from the remote UE. After completing configuration based on the first configuration information, the remote UE may send the fifth message to the relay UE, where the fifth message may indicate to enter the RRC connected state. In addition, after receiving the fifth message, the relay UE can also determine that the remote UE has completed configuration of a second relay link.

The fifth message is, for example, a PC5-S message, and the PC5-S message that may be used as the fifth message is, for example, a DCR message or a security setup complete message, or may be another PC5-S message.

S910: The relay UE sends a preamble to a first network device, and correspondingly, the first network device receives the preamble from the relay UE.

For more content in S910, refer to S803 in the embodiment shown in FIG. 8.

S911: The first network device sends an RAR message to the relay UE, and correspondingly, the relay UE receives the RAR message from the first network device.

S912: The relay UE sends an RRC setup request message to the first network device, and correspondingly, the first network device receives the RRC setup request message from the relay UE. Alternatively, the relay UE sends an RRC resume request message to the first network device, and correspondingly, the first network device receives the RRC resume request message from the relay UE. In FIG. 9A and FIG. 9B, an example in which the message is the RRC setup request message is used. The RRC setup request message or the RRC resume request message is also an Msg3 in a random access process.

For more content in S912, refer to S805 in the embodiment shown in FIG. 8.

S913: If the relay UE sends the RRC setup request message to the first network device in S912, the first network device sends an RRC setup message to the relay UE, and correspondingly, the relay UE receives the RRC setup message from the first network device; or if the relay UE sends the RRC resume request message to the first network device in S912, the first network device sends an RRC resume (RRC resume) message to the relay UE, and correspondingly, the relay UE receives the RRC resume message from the first network device. In FIG. 9A and FIG. 9B, an example in which the message is the RRC setup message is used. The RRC setup message or the RRC resume message may indicate that the RRC connection is successfully set up. If the first network device refuses to establish the RRC connection, S906 may be replaced with the following: The first network device sends an RRC reject (RRC reject) message to the relay UE, and correspondingly, the relay UE receives the RRC reject message from the first network device, where the RRC reject message may indicate that the RRC connection fails to be set up, or indicate that setup of the RRC connection is rejected. If the relay UE receives the RRC reject message, it is determined that the RRC connection fails to be set up.

S914: If the relay UE receives the RRC setup message from the first network device in S913, the relay UE sends an RRC setup complete message to the first network device, and correspondingly, the first network device receives the RRC setup complete message from the relay UE. Alternatively, if the relay UE receives the RRC resume message from the first network device in S913, the relay UE sends an RRC resume complete message to the first network device, and correspondingly, the first network device receives the RRC resume complete message from the relay UE. In FIG. 9A and FIG. 9B, an example in which the message is the RRC setup complete message is used. The RRC setup complete message may indicate that the RRC connection is set up, or the RRC resume complete message indicates that the RRC connection is resumed. The RRC setup complete message or the RRC resume complete message may alternatively be understood as a fifth message (Msg5) in the random access process. It should be noted that the Msg5 and the fifth message in S909 are not a same message.

S915: The first network device sends third configuration information to the relay UE, and correspondingly, the relay UE receives the third configuration information from the first network device.

If the preamble in S910 does not indicate a reason for which the relay UE requests to enter the RRC connected state, and the RRC setup request message in S912 does not include the reason information, the first network device may not learn, by using the random access process of the relay UE, the reason for which the relay UE enters the RRC connected state. In this case, the first network device may normally configure the relay UE. For example, the first network device sends the third configuration information to the relay UE, where the third configuration information may include a Uu configuration between the relay UE and the first network device. The third configuration information is used to configure communication between the relay UE and the first network device, but is not used to configure the relay UE to provide a relay service for another UE.

S916: The relay UE sends a sidelink UE information (sidelink UE information, SUI) message to the first network device, and correspondingly, the first network device receives the SUI message from the relay UE.

If the preamble in S910 does not indicate a reason for which the relay UE requests to enter the RRC connected state, and the RRC setup request message in S912 does not include the reason information, the first network device may not learn, by using the random access process of the relay UE, the reason for which the relay UE enters the RRC connected state. To enable the first network device to learn the reason for which the relay UE enters the RRC connected state, the relay UE may send the SUI message to the first network device. The SUI message may include an identifier of the remote UE. For example, the SUI message includes a C-RNTI of the remote UE. Optionally, the SUI message may further request to configure a sidelink between the remote UE and the relay UE, to support the relay UE in providing the relay service for the remote UE.

If the preamble in S910 indicates the reason for which the relay UE requests to enter the RRC connected state, or the RRC setup request message in S912 includes the reason information, S915 and S916 may not be performed. Therefore, both S915 and S916 are optional steps.

S917: The first network device sends second configuration information to the relay UE, and correspondingly, the relay UE receives the second configuration information from the first network device. For example, the first network device includes the second configuration information into an RRC reconfiguration message, and sends the RRC reconfiguration message to the relay UE.

The second configuration information may be used to configure the relay UE to provide a relay service for the remote UE. The second configuration information includes, for example, the configuration information of the second relay link. The second relay link includes, for example, an air interface link between the relay UE and the first network device, and may further include the sidelink between the relay UE and the remote UE. This may be understood as follows: The second configuration information includes configuration information of a Uu interface and configuration information of the sidelink, where the sidelink is a link between the remote UE and the relay UE, and the relay UE provides the relay service for the remote UE through the sidelink.

S918: The relay UE sends an RRC reconfiguration complete message to the first network device, and correspondingly, the first network device receives the RRC reconfiguration complete message from the relay UE. After receiving the second configuration information, the relay UE may send the RRC reconfiguration complete message to the first network device, to indicate that the relay UE has received the second configuration information. Alternatively, after completing configuration based on the second configuration information, the relay UE may send the RRC reconfiguration complete message to the first network device, to indicate that the relay UE has completed configuration.

S919: The relay UE sends a sixth message to the remote UE, and correspondingly, the remote UE receives the sixth message from the relay UE. After completing configuration based on the second configuration information, the relay UE may send the sixth message to the remote UE. The sixth message may indicate that the relay UE has completed configuration of a first relay link. In this process, the remote UE can learn that the relay UE has completed configuration of the first relay link, and the remote UE can determine that the relay UE can normally provide a relay service. For example, the fifth message is a DCR message, and the sixth message may be a DCR response message.

S920: The remote UE sends an RRC reconfiguration complete message to the relay UE, and correspondingly, the relay UE receives the RRC reconfiguration complete message from the remote UE; and the relay UE sends the RRC reconfiguration complete message to the first network device, and correspondingly, the first network device receives the RRC reconfiguration complete message from the relay UE. In other words, the remote UE sends the RRC reconfiguration complete message to the first network device by using the relay UE. The RRC reconfiguration complete message may indicate that the remote UE completes path switch.

According to the technical solutions provided in this embodiment of this application, the relay UE and the remote UE can learn of each other when configuration of each other is completed, to reduce a probability of a transmission loss caused when configuration of one UE is completed but configuration of the other UE is not completed.

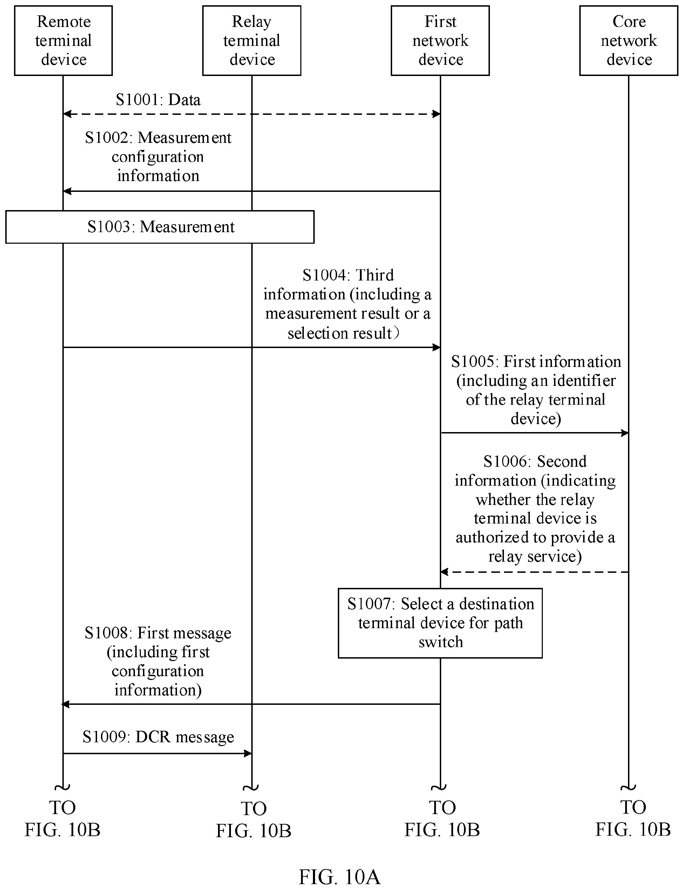

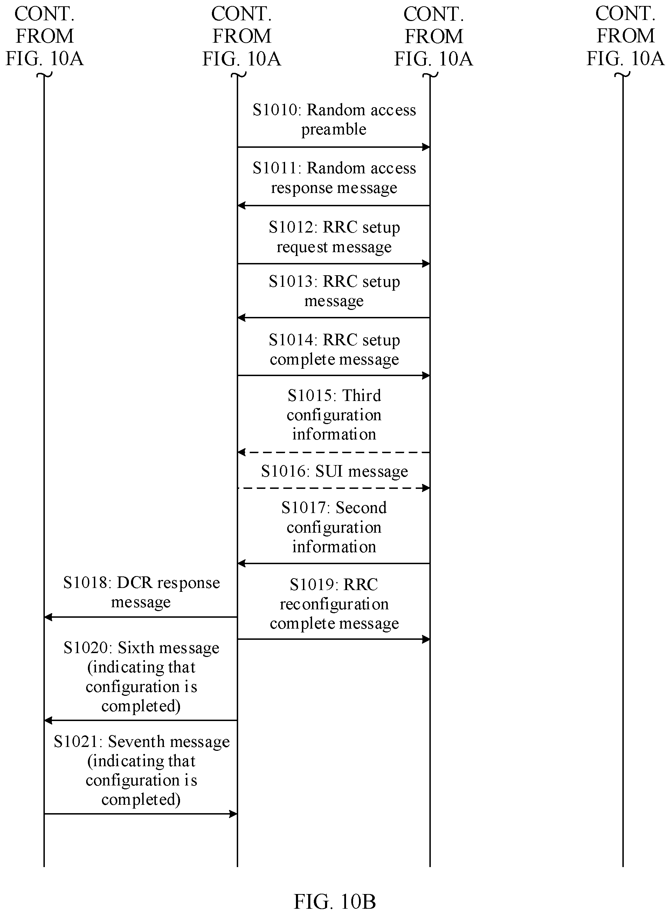

The following describes an eighth communication method according to an embodiment of this application. According to the method, remote UE may also send an RRC reconfiguration complete message to a first network device after learning that relay UE has completed configuration. The method relates to a process of switching from a direct link to an indirect link. FIG. 10A and FIG. 10B are a flowchart of the method.

The technical solution provided in this embodiment of this application may be applied to the network architecture shown in FIG. 1A. For a correspondence between each device described below and a device in the network architecture shown in FIG. 1A, refer to the description in the embodiment shown in FIG. 3.

S 1001: Remote UE performs data transmission with a first network device. For example, the third network device is a network device accessed by the remote UE, and a first network device is a network device on which relay UE camps. In this embodiment of this application, the first network device and the third network device are a same network device.

S1002: The first network device sends an RRC message to the remote UE, and correspondingly, the remote UE receives the RRC message from the first network device. For example, the RRC message includes measurement configuration information, and the measurement configuration information is used by the remote UE to measure another UE or select another UE.

For more content in S 1002, refer to S302 in the embodiment shown in FIG. 3.

S1003: The remote UE performs measurement or selection on one or more UEs. For example, the remote UE may trigger the one or more UEs to send a discovery message, so that the remote UE may measure the discovery message from the one or more UEs, to complete measurement or selection for the one or more UEs. In FIG. 10A and FIG. 10B, an example in which the remote UE performs measurement on the one or more UEs is used. In addition, the relay UE shown in FIG. 10A and FIG. 10B is, for example, one of the one or more UEs.

For more content in S1003, refer to S303 in the embodiment shown in FIG. 3.

S1004: The remote UE sends third information to the first network device, and correspondingly, the first network device receives the third information from the remote UE.

For more content in S1004, refer to S304 in the embodiment shown in FIG. 3.

S1005: The first network device sends first information to a second network device, and correspondingly, the second network device receives the first information from the first network device.

The first information is obtained by the first network device based on the third information, and the first information may include identifiers of the one or more UEs. The first network device may request the second network device to determine whether one or more UEs related to the third information are authorized to provide a relay service. For more content in S1005, refer to S305 in the embodiment shown in FIG. 3.

S1006: The second network device sends second information to the first network device, and correspondingly, the first network device receives the second information from the second network device. The second information may indicate whether the one or more UEs are authorized to provide a relay service.

For more content in S1006, refer to S306 in the embodiment shown in FIG. 3.

In this embodiment of this application, S 1005 and S 1006 are optional steps.

S 1007: The first network device selects the destination UE for path switch performed by the remote UE.

For more content in S1007, refer to S307 in the embodiment shown in FIG. 3.

S1008: The first network device sends a first message to the remote UE, and correspondingly, the remote UE receives the first message from the first network device. The first message is, for example, an RRC message. Therefore, the first message may alternatively be referred to as a first RRC message. For example, the first message is an RRC reconfiguration message.

The first message may include first indication information, and the first indication information may indicate to trigger the relay UE to enter the RRC connected state. The first network device learns that the relay UE is in the RRC non-connected state. However, if the remote UE needs to access a network by using the relay UE, the relay UE needs to enter the RRC connected state. Therefore, the first network device may indicate the remote UE to trigger the relay UE to enter the RRC connected state, so that the relay UE can normally provide a relay service.

However, in this embodiment of this application, the first message does not include first configuration information (for a description of the first configuration information, refer to the embodiment shown in FIG. 3). In other words, the remote UE cannot perform configuration based on the first message. In addition, the first message may not indicate the remote UE to be switched to the relay UE.

S1009: The remote UE sends a DCR message to the relay UE, and correspondingly, the relay UE receives the DCR message from the remote UE; the remote UE sends a security setup complete message to the relay UE, and correspondingly, the relay UE receives the security setup complete message from the remote UE. The DCR message or the security setup complete message may be used to trigger the relay UE to enter the RRC connected state. The first message in this embodiment of this application does not include the first configuration information. Therefore, neither the DCR message nor the security setup complete message can implicitly indicate that the remote UE has completed configuration.

S1010: The relay UE sends a preamble to a first network device, and correspondingly, the first network device receives the preamble from the relay UE.

For more content in S1010, refer to S803 in the embodiment shown in FIG. 8.

S1011: The first network device sends an RAR message to the relay UE, and correspondingly, the relay UE receives the RAR message from the first network device.

S1012: The relay UE sends an RRC setup request message to the first network device, and correspondingly, the first network device receives the RRC setup request message from the relay UE. Alternatively, the relay UE sends an RRC resume request message to the first network device, and correspondingly, the first network device receives the RRC resume request message from the relay UE. The RRC setup request message or the RRC resume request message is also an Msg3 in a random access process.

For more content in S1012, refer to S805 in the embodiment shown in FIG. 8.

S1013: If the relay UE sends the RRC setup request message to the first network device in S1012, the first network device sends an RRC setup message to the relay UE, and correspondingly, the relay UE receives the RRC setup message from the first network device. Alternatively, if the relay UE sends the RRC resume request message to the first network device in S1012, the first network device sends an RRC resume (RRC resume) message to the relay UE, and correspondingly, the relay UE receives the RRC resume message from the first network device. In FIG. 10A and FIG. 10B, an example in which the message is the RRC setup message is used. The RRC setup message or the RRC resume message may indicate that the RRC connection is successfully set up. If the first network device refuses to establish the RRC connection, S1006 may be replaced with the following: The first network device sends an RRC reject (RRC reject) message to the relay UE, and correspondingly, the relay UE receives the RRC reject message from the first network device, where the RRC reject message may indicate that the RRC connection fails to be set up, or indicate that setup of the RRC connection is rejected. If the relay UE receives the RRC reject message, it is determined that the RRC connection fails to be set up.

S1014: If the relay UE receives the RRC setup message from the first network device in S1013, the relay UE sends an RRC setup complete message to the first network device, and correspondingly, the first network device receives the RRC setup complete message from the relay UE. Alternatively, if the relay UE receives the RRC resume message from the first network device in S1013, the relay UE sends an RRC resume complete message to the first network device, and correspondingly, the first network device receives the RRC resume complete message from the relay UE. In FIG. 10A and FIG. 10B, an example in which the message is the RRC setup complete message is used. The RRC setup complete message may indicate that the RRC connection has been set up, or the RRC resume complete message may indicate that the RRC connection has been resumed. The RRC setup complete message or the RRC resume complete message may alternatively be understood as an Msg5 in the random access process.

S1015: The first network device sends third configuration information to the relay UE, and correspondingly, the relay UE receives the third configuration information from the first network device.

For more content in S1015, refer to S915 in the embodiment shown in FIG. 9B.

S1016: The relay UE sends an SUI message to the first network device, and correspondingly, the first network device receives the SUI message from the relay UE.

For more content in S 1016, refer to S916 in the embodiment shown in FIG. 9B.

S1017: The first network device sends second configuration information to the relay UE, and correspondingly, the relay UE receives the second configuration information from the first network device. For example, the first network device includes the second configuration information into an RRC reconfiguration message, and sends the RRC reconfiguration message to the relay UE.

For more content in S1017, refer to S917 in the embodiment shown in FIG. 9B.

S 1018: The relay UE sends a DCR response message to the remote UE, and correspondingly, the remote UE receives the DCR response message from the relay UE. That the remote UE sends the DCR message to the relay UE in S 1009 is used as an example. If the remote UE sends the security setup request message to the relay UE in S1009, S1018 may be replaced by the following: The relay UE sends a security setup complete message to the remote UE, and correspondingly, the remote UE receives the security setup complete message from the relay UE.

If the relay UE has, without entering the RRC connected state, a resource used to send the DCR response message (or the security setup complete message), S1018 may occur after S1009, and is not affected by the random access process initiated by the relay UE. However, if the relay UE can obtain, only after entering the RRC connected state, a resource used to send the DCR response message (or the security setup complete message), S1018 may occur after S1017.

S1019: The relay UE sends an RRC reconfiguration complete message to the first network device, and correspondingly, the first network device receives the RRC reconfiguration complete message from the relay UE. After receiving the second configuration information, the relay UE may send the RRC reconfiguration complete message to the first network device, to indicate that the relay UE has received the second configuration information. Alternatively, after completing configuration based on the second configuration information, the relay UE may send the RRC reconfiguration complete message to the first network device, to indicate that the relay UE has completed configuration.

S1020: The relay UE sends a sixth message to the remote UE, and correspondingly, the remote UE receives the sixth message from the relay UE. After completing configuration based on the second configuration information, the relay UE may send the sixth message to the remote UE. The sixth message may indicate that the relay UE has completed configuration of a first relay link. In this process, the remote UE can learn that the relay UE has completed configuration of the first relay link, and the remote UE can determine that the relay UE can normally provide a relay service. For example, the sixth message is a PC5-RRC message. After receiving the sixth message, the remote UE may reply to the relay UE with a message for acknowledging reception, or may not reply to the relay UE with a message for acknowledging reception.

S 1021: The remote UE sends a seventh message to the relay UE, and correspondingly, the relay UE receives the seventh message from the remote UE. The seventh message may indicate that the remote UE has completed configuration of a second relay link. For example, the seventh message is a PC5-RRC message.

In this embodiment of this application, the first message sent by the first network device in S1008 does not include the first configuration information. After S1008, the first network device may send the first configuration information to the remote UE. For example, the first network device may send the first configuration information to the remote UE by using an RRC configuration message or another message. After receiving the first configuration information, the remote UE may perform configuration based on the first configuration information. After completing configuration, the remote UE may send the seventh message to the relay UE, so that the relay UE can also determine that the remote UE has completed configuration.

After receiving the seventh message, the relay UE may reply to the remote UE with a message for acknowledging reception, or may not reply to the remote UE with a message for acknowledging reception. Optionally, the sixth message and the seventh message may be response messages to each other.

The remote UE may further send an RRC reconfiguration complete message to the relay UE, and correspondingly, the relay UE receives the RRC reconfiguration complete message from the remote UE. The relay UE sends the RRC reconfiguration complete message to the first network device, and correspondingly, the first network device receives the RRC reconfiguration complete message from the relay UE. In other words, the remote UE sends the RRC reconfiguration complete message to the first network device by using the relay UE. The RRC reconfiguration complete message may indicate that the remote UE completes path switch.

According to the technical solutions provided in this embodiment of this application, the relay UE and the remote UE can learn of each other when configuration of each other is completed, to reduce a probability of a transmission loss caused when configuration of one UE is completed but configuration of the other UE is not completed.

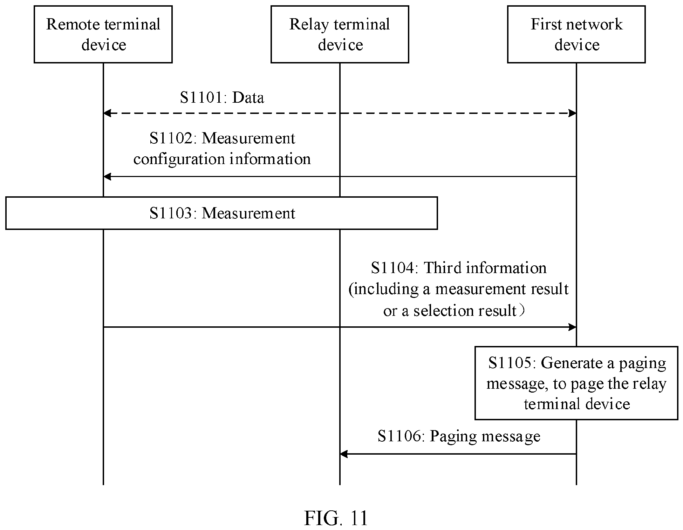

In the foregoing embodiments, the remote UE triggers the relay UE to enter the RRC connected state. The following describes a ninth communication method according to an embodiment of this application. According to the method, a network device may wake up relay UE, and remote UE does not need to trigger the relay UE to enter an RRC connected state. The method relates to a process of switching from a direct link to an indirect link. FIG. 11 is a flowchart of the method.

The technical solution provided in this embodiment of this application may be applied to the network architecture shown in FIG. 1A. For a correspondence between each device described below and a device in the network architecture shown in FIG. 1A, refer to the description in the embodiment shown in FIG. 3.

S 1101: Remote UE performs data transmission with a first network device. For example, the third network device is a network device accessed by the remote UE, and a first network device is a network device on which relay UE camps. In this embodiment of this application, the first network device and the third network device are a same network device.

S 1102: The first network device sends an RRC message to the remote UE, and correspondingly, the remote UE receives the RRC message from the first network device. For example, the RRC message includes measurement configuration information, and the measurement configuration information is used by the remote UE to measure another UE or select another UE.

For more content in S1102, refer to S302 in the embodiment shown in FIG. 3.

S1103: The remote UE performs measurement or selection on one or more UEs. For example, the remote UE may trigger the one or more UEs to send a discovery message, so that the remote UE may measure the discovery message from the one or more UEs, to complete measurement or selection for the one or more UEs. In FIG. 11, an example in which the remote UE performs measurement on the one or more UEs is used. In addition, the relay UE shown in FIG. 11 is, for example, one of the one or more UEs.

For more content in S1103, refer to S303 in the embodiment shown in FIG. 3.

S1104: The remote UE sends third information to the first network device, and correspondingly, the first network device receives the third information from the remote UE.

For more content in S1104, for example, content included in the third information, refer to S304 in the embodiment shown in FIG. 3. For example, in this embodiment of this application, the third information includes identifiers of cells in which one or more UEs related to the third information are located. For example, the third information includes an identifier of a cell in which the relay UE is located.

In addition, the first network device may obtain fourth information based on the third information. For example, the fourth information includes identifiers of some UEs (or all UEs) related to the third information, and may further include state information of some UEs (or all UEs) related to the third information. For example, the fourth information includes an identifier of the relay UE and state information of the relay UE. State information of one UE may indicate that a state of the UE is the RRC connected state or an RRC non-connected state. For example, the state information of the relay UE may indicate that the relay UE is in the RRC non-connected state. In this embodiment of this application, for example, the relay UE is in an RRC idle state or an RRC inactive state.

S1105: The first network device generates a paging message, where the paging message is used to page the relay UE. The first network device may page some UEs or all UEs related to the fourth information. Herein, paging the relay UE is used as an example.

In this embodiment of this application, regardless of whether the relay UE is in the RRC idle state or the RRC inactive state, the relay UE may be paged by the first network device, and does not need to be paged by a core network device. This reduces a process of interaction between the first network device and the core network device. The paging message may include the identifier of the relay UE, to page the relay UE. For example, if the relay UE is in the RRC idle state, the identifier of the relay UE included in the paging message may be a 5G-S-TMSI of the relay UE; or if the relay UE is in the RRC inactive state, the identifier of the relay UE included in the paging message may be an I-RNTI of the relay UE, to distinguish between different states of the relay UE.

Optionally, before generating the paging message, the first network device may first send first information to the core network device. The first information may be used to determine whether the relay UE is authorized to provide a relay service. The core network device may send second information to the first network device, to indicate whether the relay UE is authorized to provide a relay service. If the relay UE is authorized to provide a relay service, the first network device may generate a paging message to page the relay UE. However, if the relay UE is not authorized to provide a relay service, the first network device does not need to generate a paging message. For example, the first network device may indicate the remote UE to continue measurement, or the first network device may reselect destination UE for path switch performed by the remote UE, or the like. For descriptions of concepts such as the first information and the second information, refer to the embodiment shown in FIG. 3.

S1106: The first network device sends a paging message, and correspondingly, the relay UE receives the paging message. For example, the first network device sends the paging message in a cell on which the relay UE camps.

After receiving the paging message, the relay UE may initiate random access to the first network device, to enter the RRC connected state. If the first network device pages a plurality of UEs, the plurality of UEs may all enter the RRC connected state. After the plurality of UEs enter the RRC connected state, the first network device then selects one UE from the plurality of UEs as the destination UE for path switch performed by the remote UE.

In this embodiment of this application, the first network device can learn a cell in which the relay UE is located. In this case, regardless of whether the relay UE is in the RRC idle state or the RRC inactive state, the first network device may generate a paging message to perform paging in the cell. This is equivalent to changing a paging mechanism, so that a paging process of the core network device is reduced. In addition, the first network device may perform paging in the cell on which the relay UE camps, and does not need to perform paging within a larger range. In this way, a quantity of paging messages is reduced, transmission overheads are reduced, and paging efficiency is improved.

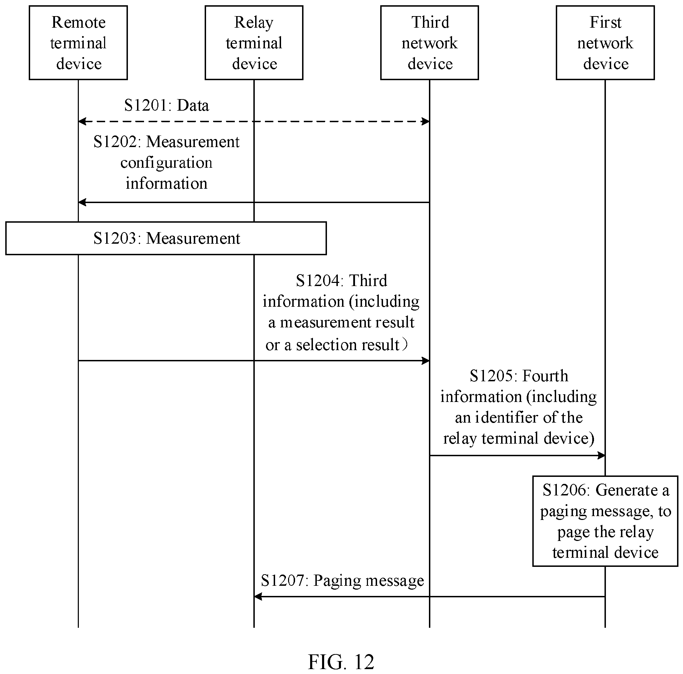

The following describes a tenth communication method according to an embodiment of this application. According to the method, a network device may also wake up relay UE, and remote UE does not need to trigger the relay UE to enter an RRC connected state. The method relates to a process of switching from a direct link to an indirect link. FIG. 12 is a flowchart of the method.

The technical solution provided in this embodiment of this application may be applied to the network architecture shown in FIG. 1C. For a correspondence between each device described below and a device in the network architecture shown in FIG. 1C, refer to the description in the embodiment shown in FIG. 4A and FIG. 4B.

S1201: The remote UE performs data transmission with a third network device. For example, the third network device is a network device accessed by the remote UE, and a first network device is a network device on which relay UE camps. In this embodiment of this application, the first network device and the third network device are different network devices.

S1202: The third network device sends an RRC message to the remote UE, and correspondingly, the remote UE receives the RRC message from the third network device. For example, the RRC message includes measurement configuration information, and the measurement configuration information is used by the remote UE to measure another UE or select another UE.

For more content in S1202, refer to S302 in the embodiment shown in FIG. 3.

S1203: The remote UE performs measurement or selection on one or more UEs. For example, the remote UE may trigger the one or more UEs to send a discovery message, so that the remote UE may measure the discovery message from the one or more UEs, to complete measurement or selection for the one or more UEs. In FIG. 12, an example in which the remote UE performs measurement on the one or more UEs is used. In addition, the relay UE shown in FIG. 12 is, for example, one of the one or more UEs.

For more content in S1203, refer to S303 in the embodiment shown in FIG. 3.

S1204: The remote UE sends third information to the third network device, and correspondingly, the third network device receives the third information from the remote UE.

For more content in S1204, for example, content included in the third information, refer to S304 in the embodiment shown in FIG. 3. For example, in this embodiment of this application, the third information includes identifiers of cells in which one or more UEs related to the third information are located. For example, the third information includes an identifier of a cell in which the relay UE is located.

S1205: The third network device sends fourth information to the first network device, and correspondingly, the first network device receives the fourth information from the third network device. For example, the third network device may send the fourth information to the first network device by using an Xn message between base stations.

For example, the fourth information includes identifiers of some UEs (or all UEs) related to the third information, and may further include state information of some UEs (or all UEs) related to the third information. For example, the fourth information includes an identifier of the relay UE and state information of the relay UE. State information of one UE may indicate that a state of the UE is the RRC connected state or an RRC non-connected state. For example, the state information of the relay UE may indicate that the relay UE is in the RRC non-connected state. In this embodiment of this application, for example, the relay UE is in an RRC idle state or an RRC inactive state. In addition, the fourth information may further include identifiers of some UEs (or all UEs) related to the third information, and may further include identifiers of cells in which the some UEs (or all the UEs) related to the third information are located. For example, the fourth information includes an ID of a cell on which the relay UE camps.

S1206: The first network device generates a paging message, where the paging message is used to page the relay UE. The first network device may page some UEs or all UEs related to the fourth information. Herein, paging the relay UE is used as an example.

In this embodiment of this application, regardless of whether the relay UE is in the RRC idle state or the RRC inactive state, the relay UE may be paged by the first network device on which the relay UE camps, and does not need to be paged by a core network device. This reduces a process of interaction between the first network device and the core network device. The paging message may include the identifier of the relay UE, to page the relay UE. For example, if the relay UE is in the RRC idle state, the identifier of the relay UE included in the paging message may be a 5G-S-TMSI of the relay UE; or if the relay UE is in the RRC inactive state, the identifier of the relay UE included in the paging message may be an I-RNTI of the relay UE, to distinguish between different states of the relay UE.

S1207: The first network device sends a paging message, and correspondingly, the relay UE receives the paging message. For example, the first network device sends the paging message in a cell on which the relay UE camps.

After receiving the paging message, the relay UE may initiate random access to the first network device, to enter the RRC connected state. If the first network device pages a plurality of UEs, the plurality of UEs may all enter the RRC connected state. After the plurality of UEs enter the RRC connected state, the first network device or the third network device then selects one UE from the plurality of UEs as the destination UE for path switch performed by the remote UE.

Optionally, before generating the paging message, the first network device may first determine, based on a context of the relay UE, whether the relay UE is authorized to provide a relay service. If the relay UE is authorized to provide a relay service, the first network device may generate the paging message to page the relay UE. However, if the relay UE is not authorized to provide a relay service, the first network device does not need to generate the paging message. For example, the first network device may send failure information to the third network device, to indicate that the relay UE cannot be paged, or indicate a reason for which the relay UE cannot be paged.

In this embodiment of this application, the first network device can learn a cell in which the relay UE is located. In this case, regardless of whether the relay UE is in the RRC idle state or the RRC inactive state, the first network device may generate a paging message to perform paging in the cell. This is equivalent to changing a paging mechanism, so that a paging process of the core network device is reduced. In addition, the first network device may perform paging in the cell on which the relay UE camps, and does not need to perform paging within a larger range. In this way, a quantity of paging messages is reduced, transmission overheads are reduced, and paging efficiency is improved.

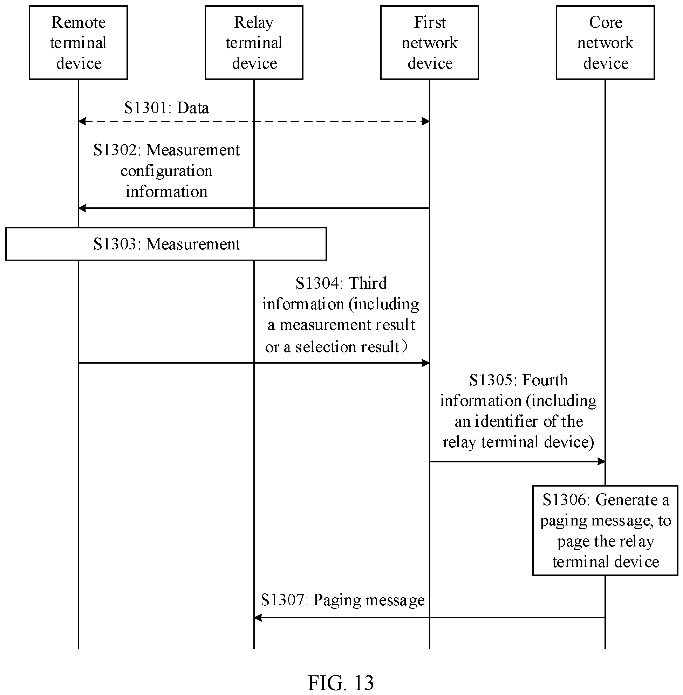

In the embodiment shown in FIG. 11 or FIG. 12, regardless of whether the relay UE is in the RRC idle state or the RRC inactive state, paging is performed by an access network device. This is equivalent to changing a paging mechanism to some extent. The following describes an eleventh communication method according to an embodiment of this application. According to the method, a network device may wake up relay UE, and remote UE does not need to trigger the relay UE to enter an RRC connected state. In addition, according to the method, a paging mechanism does not need to be changed. The method relates to a process of switching from a direct link to an indirect link. FIG. 13 is a flowchart of the method.

The technical solution provided in this embodiment of this application may be applied to the network architecture shown in FIG. 1A. For a correspondence between each device described below and a device in the network architecture shown in FIG. 1A, refer to the description in the embodiment shown in FIG. 3.

S1301: The remote UE performs data transmission with a third network device. For example, the third network device is a network device accessed by the remote UE. In addition, this embodiment of this application further relates to a first network device. The first network device is a core network device, for example, an AMF, an SMF, or a PCF.

S1302: The third network device sends an RRC message to the remote UE, and correspondingly, the remote UE receives the RRC message from the third network device. For example, the RRC message includes measurement configuration information, and the measurement configuration information is used by the remote UE to measure another UE or select another UE.

For more content in S1302, refer to S302 in the embodiment shown in FIG. 3.

S1303: The remote UE performs measurement or selection on one or more UEs. For example, the remote UE may trigger the one or more UEs to send a discovery message, so that the remote UE may measure the discovery message from the one or more UEs, to complete measurement or selection for the one or more UEs. In FIG. 13, an example in which the remote UE performs measurement on the one or more UEs is used. In addition, the relay UE shown in FIG. 13 is, for example, one of the one or more UEs.

For more content in S1303, refer to S303 in the embodiment shown in FIG. 3.

S1304: The remote UE sends third information to the third network device, and correspondingly, the third network device receives the third information from the remote UE.

For more content in S1304, for example, content included in the third information, refer to S304 in the embodiment shown in FIG. 3. For example, in this embodiment of this application, the third information includes identifiers of cells in which one or more UEs related to the third information are located. For example, the third information includes an identifier of a cell in which the relay UE is located.

S1305: The third network device sends fourth information to the first network device, and correspondingly, the first network device receives the fourth information from the third network device. For example, the third network device may send the fourth information to the first network device by using an Xn message between base stations. The fourth information may be used to indicate (or request) to page one or more UEs. The one or more UEs include some or all UEs related to the third information, and the one or more UEs are in an RRC idle state. For example, the one or more UEs include the relay UE.

For example, the fourth information includes identifiers of some UEs (or all UEs) related to the third information, and may further include state information of some UEs (or all UEs) related to the third information. For example, the fourth information includes an identifier of the relay UE and state information of the relay UE. State information of one UE may indicate that a state of the UE is the RRC connected state or an RRC non-connected state. For example, the state information of the relay UE may indicate that the relay UE is in the RRC non-connected state. In this embodiment of this application, for example, the relay UE is in an RRC idle state or an RRC inactive state. Optionally, the fourth information may further include identifiers of cells in which the some UEs (or all the UEs) related to the third information are located. For example, the fourth information includes an ID of a cell on which the relay UE camps.

S1306: The first network device generates a paging message, where the paging message is used to page the relay UE. The first network device may page some UEs or all UEs related to the fourth information. Herein, paging the relay UE is used as an example.

In this embodiment of this application, UE in the RRC idle state may be paged by the core network device. In this way, a current paging mechanism does not need to be changed, so that the technical solution in this embodiment of this application is more easily compatible with a current technology. The paging message may include the identifier of the relay UE, to page the relay UE.

Optionally, before generating the paging message, the first network device may first determine, based on a context of the relay UE, whether the relay UE is authorized to provide a relay service. If the relay UE is authorized to provide a relay service, the first network device may generate the paging message to page the relay UE. However, if the relay UE is not authorized to provide a relay service, the first network device does not need to generate the paging message. For example, the first network device may send failure information to the third network device, to indicate that the relay UE cannot be paged, or indicate a reason for which the relay UE cannot be paged.

S1307: The first network device sends a paging message, and correspondingly, the relay UE receives the paging message. For example, the first network device sends the paging message in a cell on which the relay UE camps.

After receiving the paging message, the relay UE may initiate random access to the first network device, to enter the RRC connected state. If the first network device pages a plurality of UEs, the plurality of UEs may all enter the RRC connected state. After the plurality of UEs enter the RRC connected state, the first network device then selects one UE from the plurality of UEs as the destination UE for path switch performed by the remote UE.

In this embodiment of this application, the first network device can learn a cell in which the relay UE is located. In this case, the first network device may page the relay UE in the cell, and does not need to page the relay UE in a larger range. In this way, a quantity of paging messages is reduced, transmission overheads are reduced, and paging efficiency is improved.

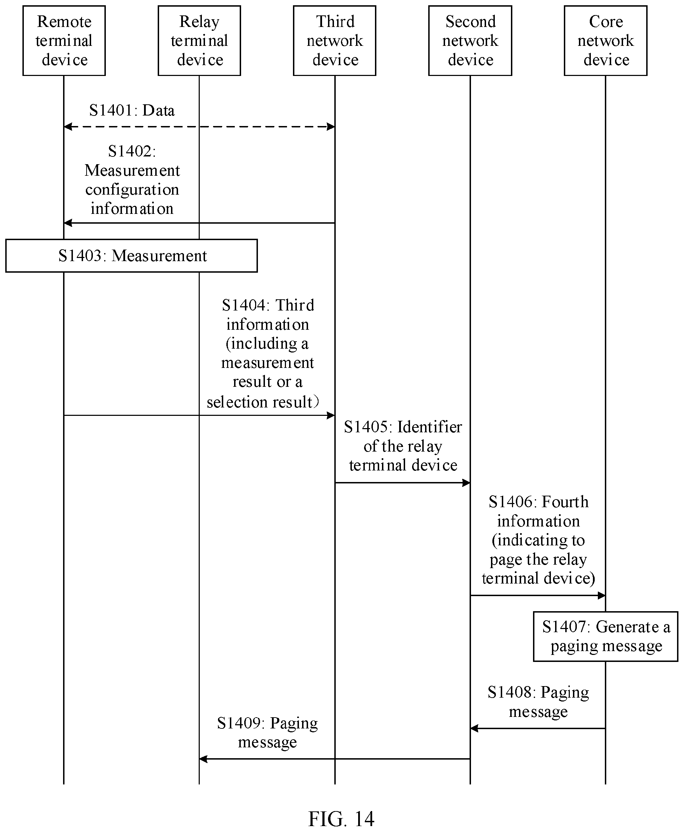

The following describes a twelfth communication method according to an embodiment of this application. According to the method, a network device may wake up relay UE, and remote UE does not need to trigger the relay UE to enter an RRC connected state. In addition, according to the method, a paging mechanism does not need to be changed. The method relates to a process of switching from a direct link to an indirect link. FIG. 14 is a flowchart of the method.

The technical solution provided in this embodiment of this application may be applied to the network architecture shown in FIG. 1C. For a correspondence between each device described below and a device in the network architecture shown in FIG. 1C, refer to the description in the embodiment shown in FIG. 4A and FIG. 4B.

S1401: The remote UE performs data transmission with a third network device. For example, the third network device is a network device accessed by the remote UE. In addition, this embodiment of this application further relates to a first network device and a second network device. The first network device is a core network device, for example, an AMF, an SMF, or a PCF. The second network device is a network device on which the relay UE camps.

S1402: The third network device sends an RRC message to the remote UE, and correspondingly, the remote UE receives the RRC message from the third network device. For example, the RRC message includes measurement configuration information, and the measurement configuration information is used by the remote UE to measure another UE or select another UE.

For more content in S1402, refer to S302 in the embodiment shown in FIG. 3.

S1403: The remote UE performs measurement or selection on one or more UEs. For example, the remote UE may trigger the one or more UEs to send a discovery message, so that the remote UE may measure the discovery message from the one or more UEs, to complete measurement or selection for the one or more UEs. In FIG. 14, an example in which the remote UE performs measurement on the one or more UEs is used. In addition, the relay UE shown in FIG. 14 is, for example, one of the one or more UEs.

For more content in S1403, refer to S303 in the embodiment shown in FIG. 3.

S1404: The remote UE sends third information to the third network device, and correspondingly, the third network device receives the third information from the remote UE.

For more content in S1404, for example, content included in the third information, refer to S304 in the embodiment shown in FIG. 3. For example, in this embodiment of this application, the third information includes identifiers of cells in which one or more UEs related to the third information are located. For example, the third information includes an identifier of a cell in which the relay UE is located.

S1405: The third network device sends an identifier of the relay UE to the second network device, and correspondingly, the second network device receives the identifier of the relay UE from the third network device. For example, the third network device may send the identifier of the relay UE to the second network device by using an Xn message between base stations. Optionally, the third network device may further send, to the second network device, an identifier of a cell on which the relay UE camps. The third network device is not a network device on which the relay UE camps. Therefore, the third network device may send the identifier of the relay UE to the second network device on which the relay UE camps.

S1406: The second network device sends fourth information to the first network device, and correspondingly, the first network device receives the fourth information from the second network device. The fourth information may be used to indicate (or request) to page the relay UE.

For example, the fourth information includes the identifier of the relay UE, and may further include state information of the relay UE. State information of one UE may indicate that a state of the UE is the RRC connected state or an RRC non-connected state. For example, the state information of the relay UE may indicate that the relay UE is in the RRC non-connected state. In this embodiment of this application, for example, the relay UE is in the RRC idle state. Optionally, the fourth information may further include the identifier of the cell in which the relay UE is located. For example, the fourth information includes an ID of a cell on which the relay UE camps.

S1407: The first network device generates a paging message, where the paging message is used to page the relay UE.

For more content in S1407, refer to S1306 in the embodiment shown in FIG. 13.

S1408: The first network device sends the paging message, and correspondingly, the second network device receives the paging message from the first network device. The first network device is the core network device. Therefore, the core network device first sends the paging message to the second network device on which the relay UE camps.

S1409: The second network device sends a paging message, and correspondingly, the relay UE receives the paging message from the second network device. For example, the first network device sends the paging message in a cell on which the relay UE camps. For example, the first network device sends the paging message in a cell on which the relay UE camps.

For more content in S1409, refer to S1307 in the embodiment shown in FIG. 13.

In this embodiment of this application, the first network device can learn a cell in which the relay UE is located. In this case, the first network device may page the relay UE in the cell, and does not need to page the relay UE in a larger range. In this way, a quantity of paging messages is reduced, transmission overheads are reduced, and paging efficiency is improved.

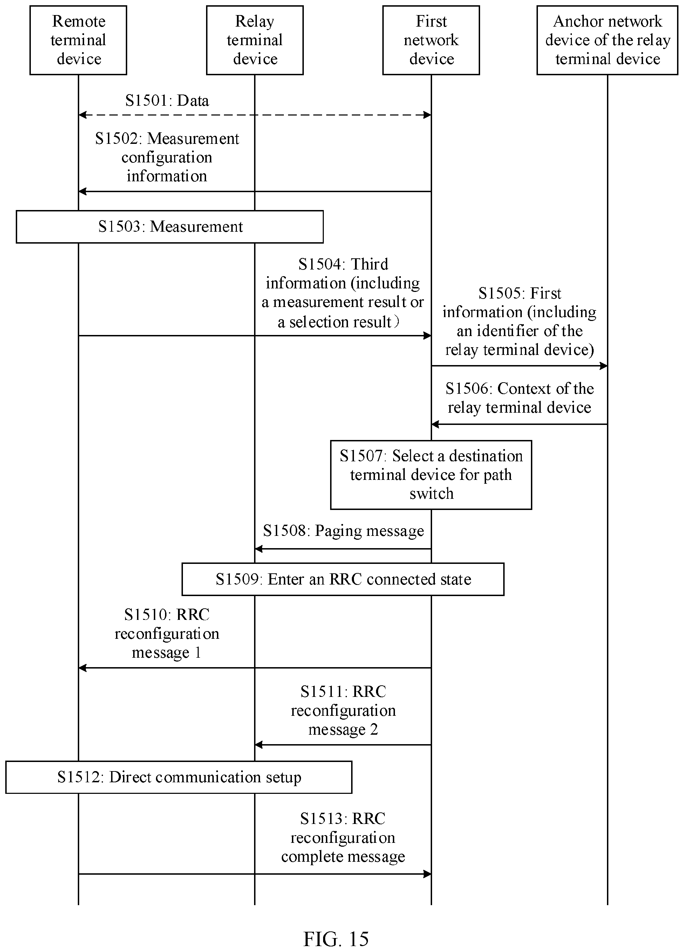

In the embodiment shown in FIG. 13 or FIG. 14, the relay UE is in the RRC idle state. The following describes a thirteenth communication method according to an embodiment of this application. In the method, relay UE is in an RRC inactive state, and an anchor network device of the relay UE may page the relay UE. In other words, according to the method, a paging mechanism does not need to be changed either. The method relates to a process of switching from a direct link to an indirect link. FIG. 15 is a flowchart of the method.

The technical solution provided in this embodiment of this application may be applied to the network architecture shown in FIG. 1A. For a correspondence between each device described below and a device in the network architecture shown in FIG. 1A, refer to the description in the embodiment shown in FIG. 3.

S1501: Remote UE performs data transmission with a first network device. For example, the first network device is a network device accessed by the remote UE, and is also a network device on which the relay UE camps. In addition, this embodiment of this application further relates to a third network device, and the third network device is an anchor network device of the relay UE. In this embodiment of this application, the first network device and the third network device are different network devices.

S1502: The first network device sends an RRC message to the remote UE, and correspondingly, the remote UE receives the RRC message from the first network device. For example, the RRC message includes measurement configuration information, and the measurement configuration information is used by the remote UE to measure another UE or select another UE.

For more content in S1502, refer to S302 in the embodiment shown in FIG. 3.

S1503: The remote UE performs measurement or selection on one or more UEs. For example, the remote UE may trigger the one or more UEs to send a discovery message, so that the remote UE may measure the discovery message from the one or more UEs, to complete measurement or selection for the one or more UEs. In FIG. 15, an example in which the remote UE performs measurement on the one or more UEs is used. In addition, the relay UE shown in FIG. 15 is, for example, one of the one or more UEs.

For more content in S1503, refer to S303 in the embodiment shown in FIG. 3.

S1504: The remote UE sends third information to the first network device, and correspondingly, the first network device receives the third information from the remote UE.

For more content in S1504, for example, content included in the third information, refer to S304 in the embodiment shown in FIG. 3. For example, in this embodiment of this application, the third information includes information about one or more UEs related to the third information. Information about one UE may include one or more of the following items: a resume ID of the UE, an I-RNTI of the UE, or a short-I-RNTI of the UE. For example, the third information includes information about the relay UE, and the information about the relay UE includes one or more of the following items: a resume ID of the relay UE, an I-RNTI of the relay UE, or a short-I-RNTI of the relay UE.

In addition, the first network device may obtain fourth information based on the third information. For example, the fourth information includes identifiers of some UEs (or all UEs) related to the third information, and may further include state information of some UEs (or all UEs) related to the third information. For example, the fourth information includes an identifier of the relay UE and state information of the relay UE. State information of one UE may indicate that a state of the UE is the RRC connected state or an RRC non-connected state. For example, the state information of the relay UE may indicate that the relay UE is in the RRC non-connected state. In this embodiment of this application, for example, the relay UE is in an RRC idle state or an RRC inactive state.

S1505: The first network device sends first information to the third network device, and correspondingly, the third network device receives the first information from the first network device. The first information may be used to determine whether the relay UE is authorized to provide a relay service. Alternatively, the first information may request to obtain a context of the relay UE, to perform context transfer.

If the first network device is not the anchor network device of the relay UE, the first network device may determine the anchor network device of the relay UE based on one or more of the resume ID of the relay UE, the I-RNTI of the relay UE, or the short-I-RNTI of the relay UE. For example, the anchor network device is the third network device. In this way, the first network device sends the first information to the third network device. For example, the first information includes the identifier of the relay UE. For the one or more UEs related to the third information, if the first network device is not an anchor network device of the UEs, the first network device may correspondingly send first information to anchor network devices of the UEs. The first information sent to different anchor network devices may be different. Herein, an example in which the first network device sends the first information to the third network device is used.

S1506: The third network device determines whether the relay UE is authorized to provide a relay service.

The third network device may determine, based on the context of the relay UE, whether the relay UE is authorized to provide a relay service. If the relay UE is authorized to provide a relay service, S1506 may be performed. However, if the relay UE is not authorized to provide a relay service, S1506 and subsequent steps do not need to be performed. For example, the third network device may send reject information to the first network device, to indicate that the third network device refuses to provide the context of the relay UE, or indicate a reason for which the third network device refuses to provide the context of the relay UE.

S1506: The third network device sends the context of the relay UE to the first network device, and correspondingly, the first network device receives the context of the relay UE from the third network device.

It should be noted that if the third network device sends the context of the relay UE to the first network device, the third network device may further trigger a core network device (for example, an AMF) to perform path switch. The path switch herein means that the core network device switches a path for sending data to the relay UE from the third network device to the first network device. After the core network device performs path switch, if the core network device has downlink data that needs to be sent to the relay UE, the core network device no longer sends the downlink data to the third network device, but sends the downlink data to the first network device.

S1507: The first network device selects the destination UE for path switch performed by the remote UE. In other words, the first network device determines UE to which the remote UE needs to be switched.

For example, the destination UE selected by the first network device is the relay UE.

S1508: The first network device sends a paging message, and correspondingly, the relay UE receives the paging message. The paging message is used to page the relay UE. The first network device may page some UEs or all UEs related to the fourth information. Herein, paging the relay UE is used as an example. For example, the first network device sends the paging message in a cell on which the relay UE camps.

S1509: The relay UE enters the RRC connected state.

After receiving the paging message, the relay UE may initiate random access to the first network device, to enter the RRC connected state. If the first network device pages a plurality of UEs, the plurality of UEs may all enter the RRC connected state. After the plurality of UEs enter the RRC connected state, the first network device then selects one UE from the plurality of UEs as the destination UE for path switch performed by the remote UE. For example, the destination UE determined by the first network device is the relay UE.

S1510: The first network device sends an RRC reconfiguration message to the remote UE, and correspondingly, the remote UE receives the RRC reconfiguration message from the first network device. For ease of differentiation, the RRC reconfiguration message is referred to as an RRC reconfiguration message 1.

The RRC reconfiguration message 1 may include first configuration information. The first configuration information may configure the remote UE to access a network by using the relay UE. For example, the first configuration information may include configuration information of a second relay link. The second relay link is, for example, a sidelink between the remote UE and the relay UE. The remote UE is connected to the relay UE through the sidelink, to access a network by using the relay UE. After receiving the RRC reconfiguration message 1, the remote UE may perform configuration based on the first configuration information.

S1511: The first network device sends an RRC reconfiguration message to the relay UE, and correspondingly, the relay UE receives the RRC reconfiguration message from the first network device. For ease of differentiation, the RRC reconfiguration message is referred to as an RRC reconfiguration message 2.

The RRC reconfiguration message 2 may include second configuration information, and the second configuration information may be used to configure the relay UE to provide the relay service for the remote UE. The second configuration information includes, for example, configuration information of a first relay link. The first relay link includes, for example, an air interface link between the relay UE and the first network device, and may further include the sidelink between the remote UE and the relay UE. This may be understood as follows: The configuration information of the first relay link includes configuration information of a Uu interface and configuration information of the sidelink, where the sidelink is a link between the remote UE and the relay UE, and the relay UE provides the relay service for the remote UE through the sidelink. After receiving the RRC reconfiguration message 2, the relay UE may perform configuration based on the second configuration information.

For example, S1510 may occur before S1511, or S1510 may occur after S1511, or S1510 and S1511 may simultaneously occur.

S1512: The remote UE sets up direct communication with the relay UE.

If the remote UE selects the relay UE, S1512 may alternatively occur before S1504.

S1513: The remote UE sends an RRC reconfiguration complete message to the relay UE, and correspondingly, the relay UE receives the RRC reconfiguration complete message from the remote UE; and the relay UE sends the RRC reconfiguration complete message to the first network device, and correspondingly, the first network device receives the RRC reconfiguration complete message from the relay UE. In other words, the remote UE sends the RRC reconfiguration complete message to the first network device by using the relay UE. The RRC reconfiguration complete message may indicate that the remote UE completes path switch.

In this embodiment of this application, the first network device can learn a cell in which the relay UE is located. In this case, the first network device may page the relay UE in the cell, and does not need to page the relay UE in a larger range. In this way, a quantity of paging messages is reduced, transmission overheads are reduced, and paging efficiency is improved.

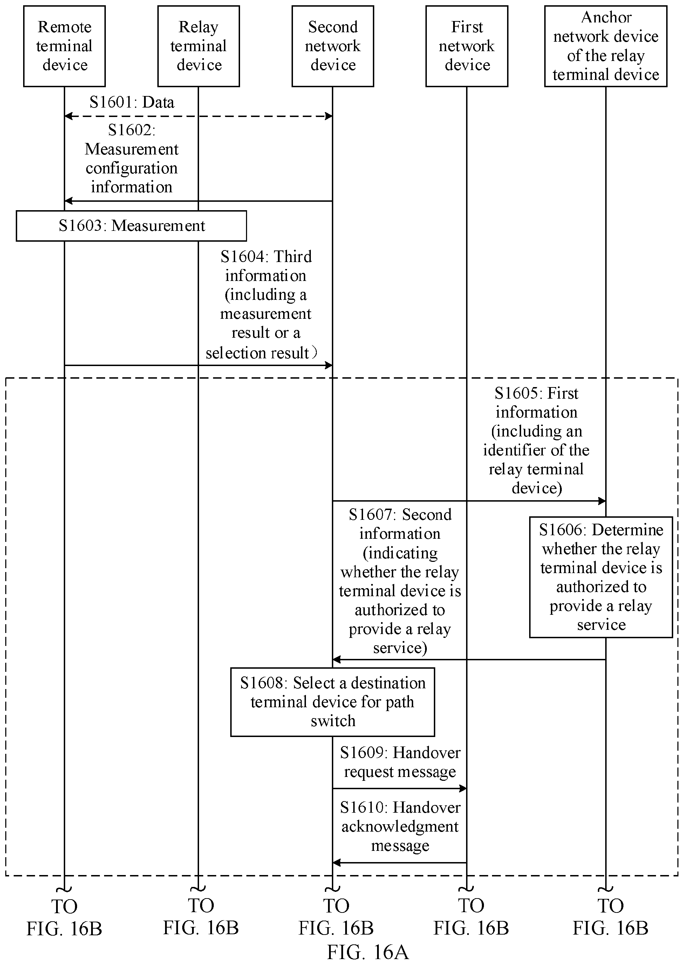

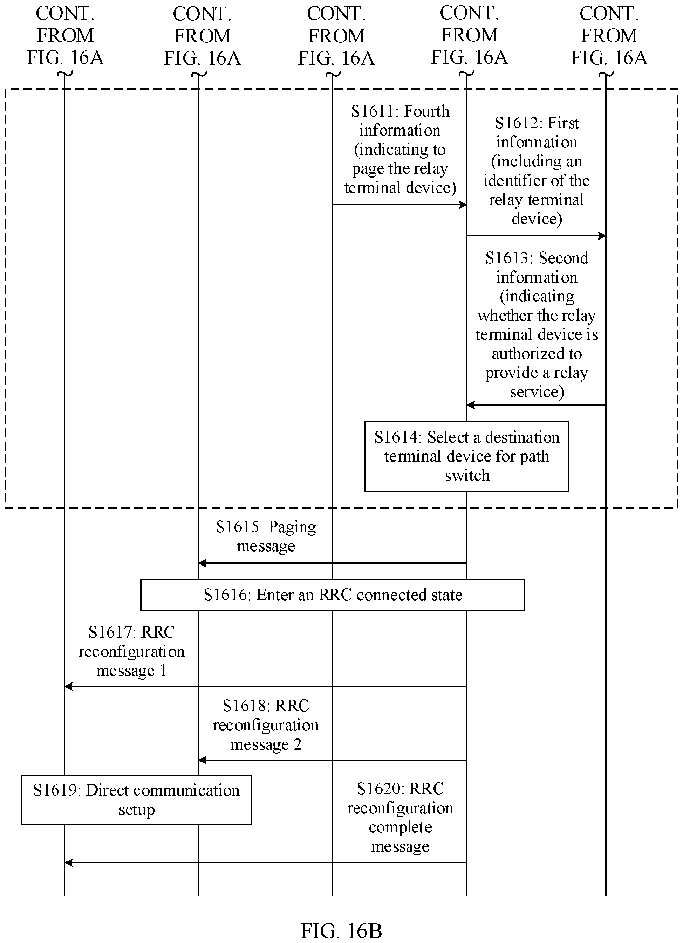

The following describes a fourteenth communication method according to an embodiment of this application. In the method, relay UE is in an RRC inactive state, and an anchor network device of the relay UE may page the relay UE. In other words, according to the method, a paging mechanism does not need to be changed either. The method relates to a process of switching from a direct link to an indirect link. FIG. 16A and FIG. 16B are a flowchart of the method.

The technical solution provided in this embodiment of this application may be applied to the network architecture shown in FIG. 1C. For a correspondence between each device described below and a device in the network architecture shown in FIG. 1C, refer to the description in the embodiment shown in FIG. 4A and FIG. 4B.

S1601: Remote UE performs data transmission with a second network device. For example, the second network device is a network device accessed by the remote UE. In addition, this embodiment of this application further relates to a first network device and a third network device. The first network device is a network device on which the relay UE camps, and the third network device is an anchor network device of the relay UE. In this embodiment of this application, the first network device, the second network device, and the third network device are respectively different network devices.

S1602: The second network device sends an RRC message to the remote UE, and correspondingly, the remote UE receives the RRC message from the second network device. For example, the RRC message includes measurement configuration information, and the measurement configuration information is used by the remote UE to measure another UE or select another UE.

For more content in S1602, refer to S302 in the embodiment shown in FIG. 3.

S1603: The remote UE performs measurement or selection on one or more UEs. For example, the remote UE may trigger the one or more UEs to send a discovery message, so that the remote UE may measure the discovery message from the one or more UEs, to complete measurement or selection for the one or more UEs. In FIG. 16A and FIG. 16B, an example in which the remote UE performs measurement on the one or more UEs is used. In addition, the relay UE shown in FIG. 16A and FIG. 16B is, for example, one of the one or more UEs.

For more content in S1603, refer to S303 in the embodiment shown in FIG. 3.

S1604: The remote UE sends third information to the second network device, and correspondingly, the second network device receives the third information from the remote UE.

For more content in S1604, for example, content included in the third information, refer to S304 in the embodiment shown in FIG. 3. For example, in this embodiment of this application, the third information includes information about one or more UEs related to the third information. Information about one UE may include one or more of the following items: a resume ID of the UE, an I-RNTI of the UE, or a short-I-RNTI of the UE. For example, the third information includes information about the relay UE, and the information about the relay UE includes one or more of the following items: a resume ID of the relay UE, an I-RNTI of the relay UE, or a short-I-RNTI of the relay UE.

Optionally, the second network device may obtain fourth information based on the third information. For example, the fourth information includes identifiers of some UEs (or all UEs) related to the third information, and may further include state information of some UEs (or all UEs) related to the third information. For example, the fourth information includes an identifier of the relay UE and state information of the relay UE. State information of one UE may indicate that a state of the UE is the RRC connected state or an RRC non-connected state. For example, the state information of the relay UE may indicate that the relay UE is in the RRC non-connected state. In this embodiment of this application, for example, the relay UE is in an RRC idle state or an RRC inactive state.

S1605: The second network device sends first information to the third network device, and correspondingly, the third network device receives the first information from the second network device. The first information may be used to determine whether the relay UE is authorized to provide a relay service.

If the second network device is not the anchor network device of the relay UE, the second network device may determine the anchor network device of the relay UE based on the resume ID and/or the I-RNTI of the relay UE. For example, the anchor network device is the third network device. In this way, the second network device sends the first information to the third network device. For example, the first information includes the identifier of the relay UE. For the one or more UEs related to the third information, if the second network device is not an anchor network device of the UEs, the second network device may correspondingly send first information to anchor network devices of the UEs. The first information sent to different anchor network devices may be different. Herein, an example in which the second network device sends the first information to the third network device is used.

S1606: The third network device determines whether the relay UE is authorized to provide a relay service.

The third network device may determine, based on the context of the relay UE, whether the relay UE is authorized to provide a relay service. If the relay UE is authorized to provide a relay service, S1606 may be performed. However, if the relay UE is not authorized to provide a relay service, S1606 and subsequent steps do not need to be performed. For example, the third network device may send reject information to the second network device, to indicate that the third network device refuses to provide the context of the relay UE, or indicate a reason for which the third network device refuses to provide the context of the relay UE.

S1607: The third network device sends second information to the second network device, and correspondingly, the first network device receives the second information from the third network device.

The second information may indicate that the relay UE is authorized to provide a relay service, or indicate that the relay UE is not authorized to provide a relay service. For example, the second information is indication information. The indication information may be used to indicate that the relay UE is authorized to provide a relay service, or indicate that the relay UE is not authorized to provide a relay service.

S1608: The second network device selects the destination UE for path switch performed by the remote UE; or the second network device determines the UE to which the remote UE needs to be switched.

For more content in S1608, refer to S307 in the embodiment shown in FIG. 3.

S1609: The second network device sends a handover request message to the first network device, and correspondingly, the first network device receives the handover request message from the second network device. The handover request message may be used to request to switch the remote UE to the first network device. Certainly, the handover request message is actually used to switch the remote UE to the relay UE served by the first network device.

S1610: The first network device sends a handover acknowledgment message to the third network device, and correspondingly, the third network device receives the handover acknowledgment message from the first network device. The handover acknowledgment message may be used to acknowledge that the remote UE is switched to the first network device.

Optionally, the handover acknowledgment message may further include configuration information. For example, the configuration information is referred to as first configuration information. The first configuration information may configure the remote UE to access a network by using the relay UE. For example, the first configuration information may include configuration information of a second relay link. The second relay link includes a sidelink between the relay UE and the remote UE. The remote UE is connected to the relay UE through the sidelink, to access a network by using the relay UE.

S1611: The second network device sends fourth information to the first network device, and correspondingly, the first network device receives the fourth information from the second network device. The fourth information may be used to indicate (or request) to page the relay UE. For example, the second network device may send a handover request message to the first network device, and add the fourth information to the handover request message. The handover request message may be used to request to switch the remote UE to the first network device, or may be used to request to switch the remote UE to the relay UE served by the first network device.

For example, the fourth information includes the identifier of the relay UE, for example, the resume ID and/or the I-RNTI of the relay UE. In addition, the fourth information may further include the state information of the relay UE. State information of one UE may indicate that a state of the UE is the RRC connected state or an RRC non-connected state. For example, the state information of the relay UE may indicate that the relay UE is in the RRC non-connected state. In this embodiment of this application, for example, the relay UE is in the RRC idle state. Optionally, the fourth information may further include the identifier of the cell in which the relay UE is located. For example, the fourth information includes an ID of a cell on which the relay UE camps.

The second network device may determine network devices on which the one or more UEs related to the third information camp, and send information about the one or more UEs to the network devices on which the UEs camp, so that the network devices on which the UEs camp page corresponding UEs. If the network devices on which the one or more UEs camp are a same network device, the second network device may send the fourth information to the network device. However, if the network devices on which the one or more UEs camp are different network devices, the second network device needs to respectively send the information about the one or more UEs to the network devices on which the one or more UEs camp.

For example, if the relay UE camps on the first network device, the second network device may send the fourth information to the first network device.

S1612: The first network device sends first information to the third network device, and correspondingly, the third network device receives the first information from the first network device. The first information may be used to determine whether the relay UE is authorized to provide a relay service. Alternatively, the first information may request to obtain the context of the relay UE.

The first network device may determine the anchor network device of the relay UE based on the resume ID and/or the I-RNTI of the relay UE. For example, the anchor network device is the third network device. In this way, the first network device sends the first information to the third network device. For example, the first information includes the identifier of the relay UE. The identifier of the relay UE is, for example, a 5G-S-TMSI or a 5G-GUTI of the relay UE.

S1613: The third network device sends second information to the first network device, and correspondingly, the first network device receives the second information from the third network device.

The second information may indicate that the relay UE is authorized to provide a relay service, or indicate that the relay UE is not authorized to provide a relay service. For example, the second information includes the context of the relay UE, and the context of the relay UE indicates whether the relay UE is provided with an authorization service.

S1614: The second network device or the first network device selects the destination UE for path switch performed by the remote UE; or the second network device or the first network device determines the UE to which the remote UE needs to be switched. In FIG. 16A and FIG. 16B, an example in which the first network device selects the destination UE for path switch performed by the remote UE is used.

If the second network device selects the destination UE, the first network device may send, to the second network device, information used to indicate whether the relay UE is authorized to provide a relay service. The second network device may receive the information from one or more first network devices, so that the second network device may select one UE from UEs authorized to provide a relay service as the destination UE. For content such as a selection manner, refer to S307 in the embodiment shown in FIG. 3. If the first network device selects the destination UE, similarly, for content such as a selection manner, refer to S307 in the embodiment shown in FIG. 3.

S1605 to S1610 and S1611 to S1614 are two optional solutions, and only one of the two solutions needs to be performed. In other words, whether the relay UE is authorized to provide a relay service may be determined by the third network device accessed by the remote UE, or may be determined by the second network device on which the relay UE camps.

S1615: The first network device sends a paging message, and correspondingly, the relay UE receives the paging message. The paging message is used to page the relay UE. The first network device may page some UEs or all UEs related to the fourth information. Herein, paging the relay UE is used as an example. For example, the first network device sends the paging message in a cell on which the relay UE camps.

If the second network device selects the destination UE, after selecting the destination UE, the second network device may send an identifier of the destination UE to the first network device, so that the first network device may page the destination UE.

S1616: The relay UE enters the RRC connected state.

After receiving the paging message, the relay UE may initiate random access to the first network device, to enter the RRC connected state. If the first network device pages a plurality of UEs, the plurality of UEs may all enter the RRC connected state. After the plurality of UEs enter the RRC connected state, the first network device then selects one UE from the plurality of UEs as the destination UE for path switch performed by the remote UE. For example, the destination UE determined by the first network device is the relay UE.

S1617: The first network device sends an RRC reconfiguration message to the remote UE, and correspondingly, the remote UE receives the RRC reconfiguration message from the first network device. For ease of differentiation, the RRC reconfiguration message is referred to as an RRC reconfiguration message 1.

For more content in S1617, refer to S1509 in the embodiment shown in FIG. 15.

S1618: The first network device sends an RRC reconfiguration message to the relay UE, and correspondingly, the relay UE receives the RRC reconfiguration message from the first network device. For ease of differentiation, the RRC reconfiguration message is referred to as an RRC reconfiguration message 2.

For more content in S1618, refer to S1510 in the embodiment shown in FIG. 15.

S1619: The remote UE sets up direct communication with the relay UE.

If the remote UE selects the relay UE, S 1619 may alternatively occur before S1604.

S1620: The remote UE sends an RRC reconfiguration complete message to the relay UE, and correspondingly, the relay UE receives the RRC reconfiguration complete message from the remote UE; and the relay UE sends the RRC reconfiguration complete message to the first network device, and correspondingly, the first network device receives the RRC reconfiguration complete message from the relay UE. In other words, the remote UE sends the RRC reconfiguration complete message to the first network device by using the relay UE. The RRC reconfiguration complete message may indicate that the remote UE completes path switch.

In this embodiment of this application, the first network device can learn a cell in which the relay UE is located. In this case, the first network device may page the relay UE in the cell, and does not need to page the relay UE in a larger range. In this way, a quantity of paging messages is reduced, transmission overheads are reduced, and paging efficiency is improved.

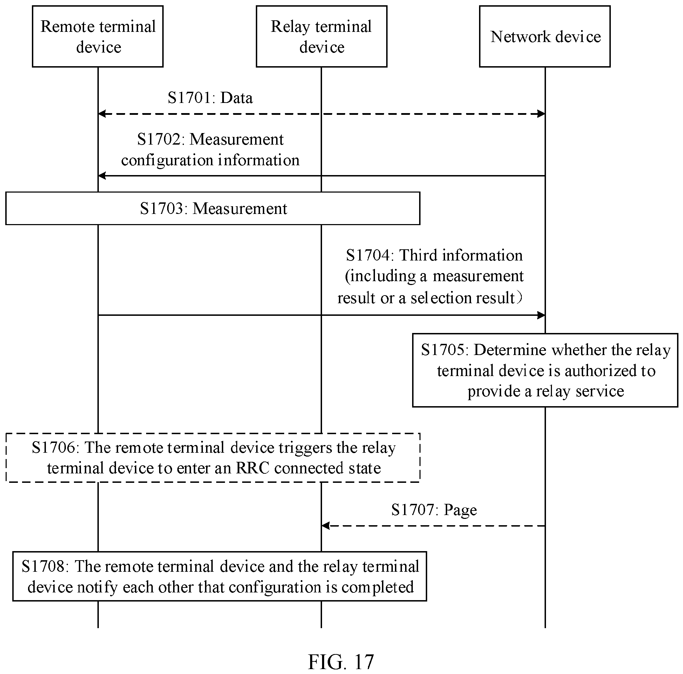

The following describes a fifteenth communication method according to an embodiment of this application. The method may include some or all steps in any one or more of the embodiments shown in FIG. 3 to FIG. 16A and FIG. 16B. In other words, by using the method, how one or more of the embodiments shown in FIG. 3 to FIG. 16A and FIG. 16B may be applied in combination may be described. FIG. 17 is a flowchart of the method.

S1701: Remote UE performs data transmission with a network device. For example, the network device is a network device accessed by the remote UE.

S1702: The network device sends an RRC message to the remote UE, and correspondingly, the remote UE receives the RRC message from the network device. For example, the RRC message includes measurement configuration information, and the measurement configuration information is used by the remote UE to measure another UE or select another UE.

For more content in S1702, refer to S302 in the embodiment shown in FIG. 3.

S1703: The remote UE performs measurement or selection on one or more UEs. For example, the remote UE may trigger the one or more UEs to send a discovery message, so that the remote UE may measure the discovery message from the one or more UEs, to complete measurement or selection for the one or more UEs. In FIG. 17, an example in which the remote UE performs measurement on the one or more UEs is used. In addition, the relay UE shown in FIG. 17 is, for example, one of the one or more UEs.

For more content in S1703, refer to S303 in the embodiment shown in FIG. 3.

S1704: The remote UE sends third information to the network device, and correspondingly, the network device receives the third information from the remote UE.

For more content in S1704, refer to S304 in the embodiment shown in FIG. 3.

S1705: The network device determines whether the relay UE is authorized to provide a relay service.

If the relay UE is in an RRC idle state, for more content in S1705, refer to S305 to S306 in the embodiment shown in FIG. 3, or refer to S405 to S408 in the embodiment shown in FIG. 4A, or refer to S409 to S412 in the embodiment shown in FIG. 4B. Alternatively, if the relay UE is in an RRC inactive state, for more content in S1705, refer to S505 to S506 in the embodiment shown in FIG. 5, or refer to S605 to S608 in the embodiment shown in FIG. 6A, or refer to S609 to S612 in the embodiment shown in FIG. 6B.

It can be learned from the description in the foregoing embodiments that the network device that determines whether the relay UE is authorized to provide a relay service may be a network device accessed by the remote UE, or may not be a network device accessed by the remote UE. In FIG. 17, an example in which the network device that determines whether the relay UE is authorized to provide a relay service is a network device accessed by the remote UE is used. Actually, for a specific network device that the network device should be, refer to the description in any one of the embodiments shown in FIG. 3 to FIG. 6A and FIG. 6B.

S1706: The remote UE triggers the relay UE to enter the RRC connected state.

For more content in S1706, refer to S705 to S707 in the embodiment shown in FIG. 7. In addition, for content such as a process in which the relay UE enters the RRC connected state, refer to S802 to S810 in the embodiment shown in FIG. 8.

S1707: The network device pages the relay UE.

For more content in S1707, refer to descriptions of some or all steps in any one of the embodiments shown in FIG. 11 to FIG. 16A and FIG. 16B.

S1706 and S1707 are two optional solutions, and only one of the two solutions needs to be performed.

In addition, it can be learned from the description in the foregoing embodiments that the network device that pages the relay UE may be a network device accessed by the remote UE, or may not be a network device accessed by the remote UE. In FIG. 17, an example in which the network device that pages the relay UE is a network device accessed by the remote UE is used. Actually, for a specific network device that the network device should be, refer to the description in any one of the embodiments shown in FIG. 11 to FIG. 16A and FIG. 16B.

S1708: The remote UE and the relay UE notify each other that the configuration is completed.

To be specific, if the remote UE completes configuration of a second relay link, the remote UE may notify the relay UE; and if the relay UE completes configuration of a first relay link, the relay UE may also notify the remote UE. For specific content in S 1708, refer to S908 to S920 in the embodiment shown in FIG. 9A and FIG. 9B, or refer to S1008 to S1021 in the embodiment shown in FIG. 10A and FIG. 10B.

In addition, S1708 may alternatively occur in a process of performing S1706, or may occur after S1706 is performed, or may occur after S1707 is performed.

One or more of the embodiments shown in FIG. 3 to FIG. 16A and FIG. 16B may be applied in combination. For example, in this embodiment of this application, an example in which the embodiments shown in FIG. 3 to FIG. 16A and FIG. 16B are applied in combination is provided. Alternatively, the embodiments shown in FIG. 3 to FIG. 16A and FIG. 16B may not be combined, but are applied separately and individually.

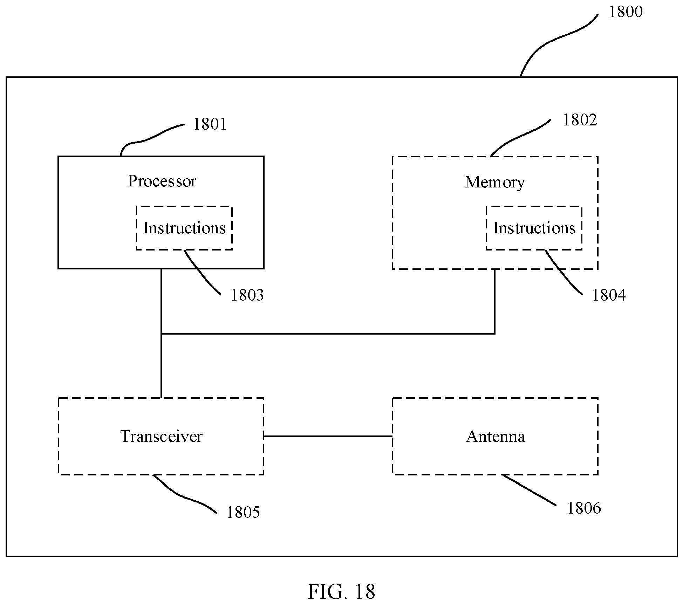

FIG. 18 is a schematic diagram of a structure of a communication apparatus according to an embodiment of this application. A communication apparatus 1800 may be the relay UE described in any one of the embodiments shown in FIG. 3 to FIG. 17, and is configured to implement the method performed by the relay UE in the foregoing method embodiments. Alternatively, a communication apparatus 1800 may be the remote UE described in any one of the embodiments shown in FIG. 3 to FIG. 17, and is configured to implement the method performed by the remote UE in the foregoing method embodiments. Alternatively, the communication apparatus may be the network device (for example, the first network device) described in any one of the embodiments shown in FIG. 3 to FIG. 17, and is configured to implement the method corresponding to the network device (for example, the first network device) in the foregoing method embodiments. For a specific function, refer to the descriptions in the foregoing method embodiments.

The communication apparatus 1800 includes one or more processors 1801. The processor 1801 may also be referred to as a processing unit, and may implement a specific control function. The processor 1801 may be a general-purpose processor, a dedicated processor, or the like. For example, the processor 1801 includes: a baseband processor, a central processing unit, an application processor, a modem processor, a graphics processor, an image signal processor, a digital signal processor, a video codec processor, a controller, a memory, a neural network processor, and/or the like. The baseband processor may be configured to process a communication protocol and communication data. The central processing unit may be configured to control the communication apparatus 1800, execute a software program, and/or process data. Different processors may be independent devices, or may be integrated into one or more processors, for example, integrated into one or more application-specific integrated circuits.

Optionally, the communication apparatus 1800 includes one or more memories 1802, and the memory 1802 is configured to store instructions 1804. The instructions may be run on the processor, to enable the communication apparatus 1800 to perform the methods described in the foregoing method embodiments. Optionally, the memory 1802 may further store data. The processor and the memory may be separately disposed, or may be integrated together.

Optionally, the communication apparatus 1800 may include instructions 1803 (which may also be referred to as code or a program in some cases). The instructions 1803 may be run on the processor, so that the communication apparatus 1800 performs the methods described in the foregoing embodiments. The processor 1801 may store data.

Optionally, the communication apparatus 1800 may further include a transceiver 1805 and an antenna 1806. The transceiver 1805 may be referred to as a transceiver unit, a transceiver machine, a transceiver circuit, a transceiver, an input/output interface, or the like, and is configured to implement a transceiver function of the communication apparatus 1800 by using the antenna 1806.

Optionally, the communication apparatus 1800 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1800 may include more or fewer components, or some components are integrated, or some components are split. These components may be implemented by hardware, software, or a combination of software and hardware.

The processor 1801 and the transceiver 1805 described in this embodiment of this application may be implemented on an integrated circuit (integrated circuit, IC), an analog IC, a radio frequency integrated circuit (radio frequency identification, RFID), a hybrid signal IC, an application-specific integrated circuit (application-specific integrated circuit, ASIC), a printed circuit board (printed circuit board, PCB), an electronic device, or the like. The communication apparatus described in this specification may be an independent device (for example, an independent integrated circuit or a mobile phone), or may be a part (for example, a module that may be embedded in another device) of a large device. For details, refer to the foregoing descriptions of the terminal device and the network device. Details are not described herein again.

An embodiment of this application provides a terminal device. The terminal device (referred to as UE for ease of description) may be used in the foregoing embodiments. The terminal device includes corresponding means (means), units, and/or circuits configured to implement the functions of the UE in any one or more embodiments shown in FIG. 3 to FIG. 17. For example, the terminal device includes a transceiver module and a processing module. The transceiver module is configured to support the terminal device in implementing a transceiver function, and the processing module is configured to support the terminal device in processing a signal.

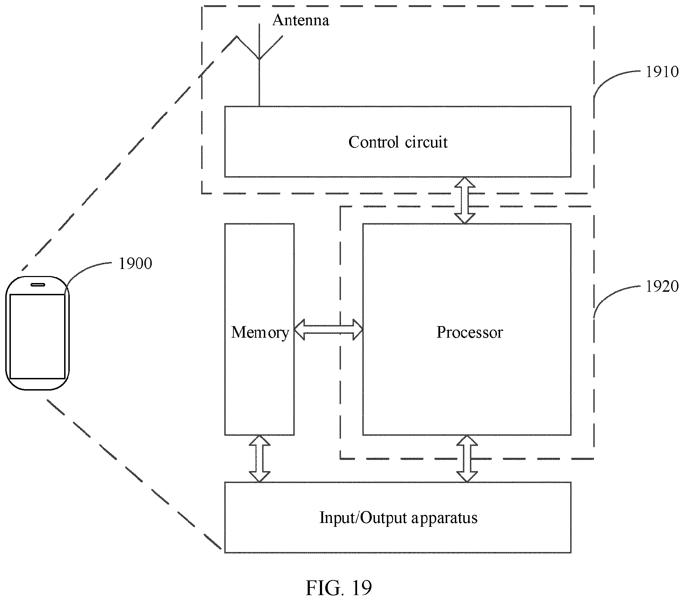

FIG. 19 shows a schematic diagram of a structure of a terminal device according to an embodiment of this application.

A terminal device 1900 may be applicable to any architecture shown in FIG. 1A to FIG. 1D. For ease of description, FIG. 19 shows only main components of the terminal device 1900. As shown in FIG. 19, the terminal device 1900 includes a processor, a memory, a control circuit, an antenna, and an input/output apparatus. The processor is mainly configured to: process a communication protocol and communication data, control the entire terminal device 1900, execute a software program, and process data of the software program. The memory is mainly configured to store the software program and data. The control circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, a microphone, or a keyboard, is mainly configured to receive data input by a user and output data to the user.

For example, the terminal device 1900 is a mobile phone. After the terminal device 1900 is powered on, the processor may read a software program in a storage unit, interpret and execute instructions of the software program, and process data of the software program. When data needs to be sent in a wireless manner, after performing baseband processing on the to-be-sent data, the processor outputs a baseband signal to the control circuit. After performing radio frequency processing on the baseband signal, the control circuit sends a radio frequency signal in a form of an electromagnetic wave through the antenna. When data is sent to the terminal device 1900, the control circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 19 shows only one memory and one processor. In some embodiments, the terminal device 1900 may include a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to control the entire terminal device 1900, execute the software program, and process the data of the software program. Functions of the baseband processor and the central processing unit are integrated into the processor in FIG. 19. A person skilled in the art may understand that the baseband processor and the central processing unit each may be an independent processor, and are interconnected by using technologies such as a bus. The terminal device 1900 may include a plurality of baseband processors to adapt to different network standards, the terminal device 1900 may include a plurality of central processing units to enhance a processing capability of the terminal device 1900, and components of the terminal device 1900 may be connected by using various buses. The baseband processor may alternatively be represented as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a transceiver function may be considered as a transceiver unit 1910 of the terminal device 1900, and the processor having a processing function may be considered as a processing unit 1920 of the terminal device 1900. As shown in FIG. 19, the terminal device 1900 includes the transceiver unit 1910 and the processing unit 1920. A transceiver unit may alternatively be referred to as a transceiver, a transceiver machine, a transceiver apparatus, or the like. Optionally, a component that is in the transceiver unit 1910 and that is configured to implement a receiving function may be considered as a receiving unit, and a component that is in the transceiver unit 1910 and that is configured to implement a sending function may be considered as a sending unit. In other words, the transceiver unit 1910 includes the receiving unit and the sending unit. For example, the receiving unit may alternatively be referred to as a receiver machine, a receiver, or a receiving circuit; and the sending unit may be referred to as a transmitter machine, a transmitter, or a transmit circuit.

An embodiment of this application further provides a network device. The network device may be used in the foregoing embodiments. The network device includes means (means), units, and/or circuits configured to implement functions of the network device (for example, the first network device) in any one or more embodiments shown in FIG. 3 to FIG. 17. For example, the network device includes a transceiver module and a processing module. The transceiver module is configured to support the network device in implementing a transceiver function, and the processing module is configured to support the network device in processing a signal.

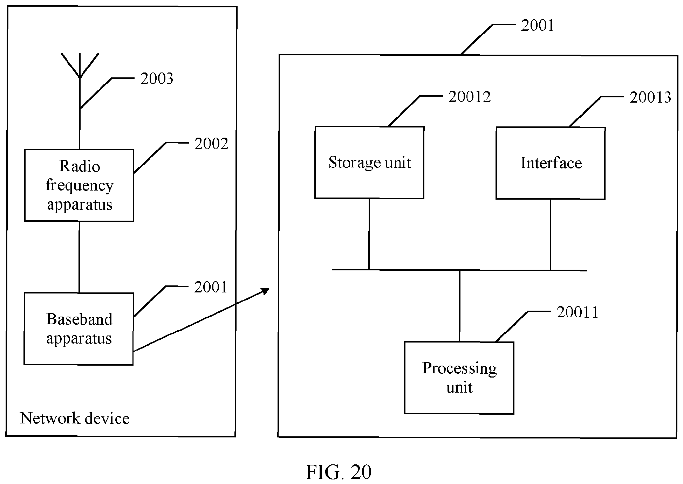

FIG. 20 shows a schematic diagram of a structure of a network device according to an embodiment of this application. As shown in FIG. 20, the network device may be applicable to any architecture shown in FIG. 1A to FIG. 1D. The network device includes a baseband apparatus 2001, a radio frequency apparatus 2002, and an antenna 2003. In an uplink direction, the radio frequency apparatus 2002 receives, through the antenna 2003, information sent by a terminal device, and sends, to the baseband apparatus 2001, the information sent by the terminal device for processing. In a downlink direction, the baseband apparatus 2001 processes the information from the terminal device, and sends processed information to the radio frequency apparatus 2002. The radio frequency apparatus 2002 processes the information from the terminal device, and then sends processed information to the terminal device through the antenna 2003.

The baseband apparatus 2001 includes one or more processing units 20011, one or more storage units 20012, and one or more interfaces 20013. The processing unit 20011 is configured to support the network device in performing functions of the network device in the foregoing method embodiments. The storage unit 20012 is configured to store a software program and/or data. The interface 20013 is configured to exchange information with the radio frequency apparatus 2002. The interface includes an interface circuit, configured to input and output information. In an implementation, the processing unit is an integrated circuit, for example, one or more ASICs, one or more DSPs, one or more FPGAs, or a combination of these types of integrated circuits. These integrated circuits may be integrated together to form a chip. The storage unit 20012 and the processing unit 20011 may be located in a same chip, that is, an on-chip storage element. Alternatively, the storage unit 20012 and the processing unit 20011 may be located on different chips, that is, an off-chip storage element. The storage unit 20012 may be one memory, or may be a general term of a plurality of memories or storage elements.

The network device may implement some or all of the steps in the foregoing method embodiments in a form of scheduling a program by one or more processing units. For example, corresponding functions of the network device in any one or more embodiments shown in FIG. 3 to FIG. 17 are implemented. The one or more processing units may support radio access technologies of a same standard, or may support radio access standards of different standards.

A person of ordinary skill in the art may be aware that, in combination with the examples described in embodiments disclosed in this specification, units and methods may be implemented by electronic hardware or a combination of computer software and electronic hardware. Whether the functions are executed by hardware or software depends on a particular application and a design constraint condition that are of the technical solutions. A person skilled in the art may use different methods to implement the described functions for each particular application, but it should not be considered that the implementation goes beyond the scope of this application.

In several embodiments provided in this application, it should be understood that the disclosed system, apparatus and method may be implemented in another manner. For example, the described apparatus embodiment is merely an example. For example, the unit division is merely logical function division. The units described as separate parts may or may not be physically separate, and parts displayed as units may or may not be physical units. In other words, the parts may be located in one location, or may be distributed on a plurality of network units. Some or all of the units may be selected based on an actual requirement to achieve the objectives of the solutions of embodiments.

When the functions are implemented in a form of a software functional unit and sold or used as an independent product, the functions may be stored in a computer-readable storage medium. Based on such an understanding, the technical solutions of this application essentially, or the part contributing to a current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing computer-readable storage medium may be any usable medium that can be accessed by a computer. By way of example but not limitation, the computer-readable medium may include a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read only memory, EEPROM), a compact disc read-only memory (compact disc read-only memory, CD-ROM), a universal serial bus flash disk (universal serial bus flash disk), a removable hard disk, or another compact disc storage, a magnetic disk storage medium or another magnetic storage device, or any other medium that can be used to carry or store expected program code in a form of instructions or a data structure and that can be accessed by a computer. In addition, by way of example rather than limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), or a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

With reference to the foregoing descriptions, this application further provides the following embodiments.

Embodiment 1: A communication method is provided, including the following.

A first network device receives first information from a second terminal device or a third network device, where the first information includes an identifier of a first terminal device, and the third network device is a network device on which the second terminal device camps.

The first network device sends the identifier of the first terminal device to a second network device, where the identifier of the first terminal device is used to determine whether the first terminal device is authorized to provide a relay service.

The first network device receives second information from the second network device, where the second information is used to indicate that the first terminal device is authorized to provide a relay service, or indicate that the first terminal device is not authorized to provide a relay service.

Embodiment 2: According to the method in Embodiment 1, the first information further includes state information of the first terminal device, and the state information of the first terminal device is used to indicate that the first terminal device is in an RRC inactive state or an RRC idle state.

Embodiment 3: According to the method in Embodiment 1 or Embodiment 2, when the second information is used to indicate that the first terminal device is authorized to provide a relay service, the method further includes the following.

The first network device sends a first RRC message, where the first RRC message includes first configuration information, and the first configuration information is used to configure the second terminal device to access a network by using the first terminal device.

Embodiment 4: According to the method in Embodiment 3, the first RRC message further includes first indication information, and the first indication information is used to indicate to trigger the first terminal device to enter the RRC connected state.

Embodiment 5: According to the method in any one of Embodiment 1 to Embodiment 4, the second information is a context of the first terminal device, or the second information is information used to indicate whether the first terminal device is authorized to provide a relay service.

Embodiment 6: According to the method in any one of Embodiment 1 to Embodiment 5, the method includes the following.

When the first terminal device is in the RRC inactive state, the second network device is an anchor network device of the first terminal device.

When the first terminal device is in the RRC idle state, the second network device is a core network device.

Embodiment 7: According to the method in any one of Embodiment 1 to Embodiment 3, the method further includes the following.

The first network device generates a paging message, where the paging message is used to page the first terminal device.

The first network device sends the paging message.

Embodiment 8: According to the method in Embodiment 7, the method includes the following.

When a state of the first terminal device is the RRC inactive state, the paging message includes an I-RNTI of the first terminal device.

When the state of the first terminal device is the RRC idle state, the paging message includes a 5G-S-TMSI of the first terminal device.

Embodiment 9: According to the method in Embodiment 7 or Embodiment 8, the first information further includes an identifier of a cell in which the first terminal device is located, and that the first network device sends the paging message includes the following.

The first network device sends the paging message in the cell corresponding to the identifier of the cell.

Embodiment 10: A communication method is provided, including the following.

A second terminal device measures a first terminal device and determines a state of the first terminal device, where the state of the first terminal device is an RRC connected state, an RRC inactive state, or an RRC idle state.

The second terminal device sends third information to a third network device, where the third information includes state information of the first terminal device, and the state information of the first terminal device is used to indicate the state of the first terminal device.

The second terminal device receives a first RRC message from the third network device, where the first RRC message includes first configuration information, and the first configuration information is used to configure the second terminal device to access a network by using the first terminal device.

Embodiment 11: According to the method in Embodiment 10, the first RRC message further includes first indication information, and the first indication information is used to indicate to trigger the first terminal device to enter the RRC connected state.

Embodiment 12: According to the method in Embodiment 10 or Embodiment 11, the third information further includes a measurement report of the first terminal device, or the third information further includes an identifier of the first terminal device.

Embodiment 13: According to the method in any one of Embodiment 10 to Embodiment 12, the method further includes the following.

The second terminal device receives a discovery message from the first terminal device, where the discovery message includes the state information of the first terminal device.

Embodiment 14: According to the method in Embodiment 13, the state information of the first terminal device is included in a message body or a message header of the discovery message, or the state information of the first terminal device is indicated by using a layer-2 destination identifier included in the discovery message.

Embodiment 15: According to the method in any one of Embodiment 10 to Embodiment 12, the method further includes the following.

The second terminal device receives a discovery message from the first terminal device.

The second terminal device determines the state of the first terminal device based on the identifier of the first terminal device included in the discovery message.

Embodiment 16: According to the method in Embodiment 15, that the second terminal device determines the state of the first terminal device based on the identifier of the first terminal device included in the discovery message includes the following.

When the identifier of the first terminal device included in the discovery message is a C-RNTI, the second terminal device determines that the state of the first terminal device is the RRC connected state.

When the identifier of the first terminal device included in the discovery message is a resume identifier or an I-RNTI, the second terminal device determines that the state of the first terminal device is the RRC inactive state.

When the discovery message does not include the identifier of the first terminal device or the identifier of the first terminal device included in the discovery message is a 5G-S-TMSI, the second terminal device determines that the state of the first terminal device is the RRC idle state.

Embodiment 17: According to the method in any one of Embodiment 10 to Embodiment 12, the method further includes the following.

The second terminal device receives a discovery message from the first terminal device by using a first resource pool, where the first resource pool is used by a terminal device in the RRC inactive state or the RRC idle state.

The second terminal device determines, based on the first resource pool, whether the first terminal device is in an RRC active state or the RRC idle state.

Embodiment 18: According to the method in any one of Embodiment 10 to Embodiment 12, the method further includes the following.

The second terminal device receives a system message from the first terminal device, where the system message includes the state information of the first terminal device.

Embodiment 19: A communication method is provided, including the following.

A first terminal device sends a second message, where the second message is used to indicate a state of the first terminal device, and the state of the first terminal device is an RRC connected state, an RRC inactive state, or an RRC idle state.

Embodiment 20: According to the method in Embodiment 19, that a first terminal device sends a second message includes the following.

The first terminal device broadcasts the second message.

Alternatively, the first terminal device sends the second message to a second terminal device.

Embodiment 21: According to the method in Embodiment 19 or Embodiment 20, the second message is a discovery message, and the discovery message includes state information of the first terminal device.

Embodiment 22: According to the method in Embodiment 21, the state information of the first terminal device is included in a message body or a message header of the discovery message, or the state information of the first terminal device is indicated by using a layer-2 destination identifier included in the discovery message.

Embodiment 23: According to the method in Embodiment 19 or Embodiment 20, the second message is a discovery message, and the discovery message indicates the state of the first terminal device based on an identifier of the first terminal device included in the discovery message.

Embodiment 24: According to the method in Embodiment 23, the method includes the following.

When the identifier of the first terminal device included in the discovery message is a C-RNTI, it indicates that the state of the first terminal device is the RRC connected state.

When the identifier of the first terminal device included in the discovery message is a resume identifier or an I-RNTI, it indicates that the state of the first terminal device is the RRC inactive state.

When the discovery message does not include the identifier of the first terminal device or the identifier of the first terminal device included in the discovery message is a 5G-S-TMSI, it indicates that the state of the first terminal device is the RRC idle state.

Embodiment 25: According to the method in Embodiment 19 or Embodiment 20, the second message is a discovery message, and the discovery message indicates the state of the first terminal device by using a resource pool used for sending the discovery message.

Embodiment 26: According to the method in Embodiment 19 or Embodiment 20, the second message is a system message, and the system message includes state information of the first terminal device.

Embodiment 27: A communication method is provided, including the following.

A second terminal device sends a third message, where the third message is used to indicate a first terminal device to enter an RRC connected state, and the second terminal device requests the first terminal device to provide a relay service.

Embodiment 28: According to the method in Embodiment 27, that a second terminal device sends a third message includes the following.

The second terminal device broadcasts the third message.

Alternatively, the second terminal device sends the third message to the first terminal device.

Embodiment 29: According to the method in Embodiment 27 or Embodiment 28, the method further includes the following.

The second terminal device receives a fourth message from the first terminal device, where the fourth message is used to indicate that the first terminal device enters the RRC connected state, or indicated that the first terminal device fails to enter the RRC connected state.

Embodiment 30: According to the method in Embodiment 27 or Embodiment 28, the third information further includes a reason for which the second terminal device requests to establish a connection to the first terminal device.

Embodiment 31: According to the method in Embodiment 30, the reason for which the second terminal device requests to establish a connection to the first terminal device is as follows.

The second terminal device requests to access a network for the first time by using the first terminal device.

Alternatively, the second terminal device requests to be switched to a path for accessing a network by using the first terminal device.

Alternatively, the second terminal device requests to monitor paging by using the first terminal device.

Embodiment 32: According to the method in any one of Embodiment 27 to Embodiment 31, the third message is a discovery message, a DCR message, or a security setup complete message.

Embodiment 33: According to the method in Embodiment 32, that the third message is used to indicate to enter the RRC connected state includes the following.

The third message includes the second indication information, where the second indication information is used to indicate to enter the RRC connected state.

Alternatively, the third message does not include the second indication information, to indicate to enter the RRC connected state.

Embodiment 34: According to the method in Embodiment 32, that the third message is used to indicate to enter the RRC connected state includes the following.

When the third message includes a C-RNTI of the first terminal device, or the third message does not include an identifier of the second terminal device, the third message indicates the first terminal device to enter the RRC connected state.

Embodiment 35: According to the method in any one of Embodiment 27 to Embodiment 31, the third information is a PC5-RRC message transmitted after the second terminal device establishes a PC5-S connection to the first terminal device.

Embodiment 36: According to the method in any one of Embodiment 27 to Embodiment 31, the third information is the first RRC message that is used to establish a connection to the first network device and that is transmitted after the second terminal device establishes a PC5-S connection to the first terminal device.

Embodiment 37: According to the method in any one of Embodiment 27 to Embodiment 36, the fourth message is a discovery message, a DCR response message, or a PC5-RRC message; or the fourth message is a data packet.

Embodiment 38: According to the method in any one of Embodiment 27 to Embodiment 37, when the fourth message is used to indicate that the first terminal device fails to enter the RRC connected state, the method further includes the following.

The second terminal device initiates an RRC reestablishment process.

After the RRC reestablishment succeeds or in the RRC reestablishment process, the second terminal device sends a failure reason to a fourth network device, where the failure reason is used to indicate a reason for which the second terminal device fails to perform path switch, and the path switch means that the second terminal device is switched to a path on which relay is performed by using the first terminal device.

Embodiment 39: According to the method in any one of Embodiment 27 to Embodiment 38, before the second terminal device sends the third message, the method further includes the following.

The second terminal device receives a first RRC message from the third network device, where the first RRC message includes first indication information, and the first indication information is used to indicate to trigger the first terminal device to enter the RRC connected state.

Embodiment 40: A communication method is provided, including the following.

A first terminal device receives a third message from a second terminal device, where the third message is used to indicate to enter an RRC connected state, and the second terminal device needs to request the first terminal device to provide a relay service.

The first terminal device performs a random access process, to enter the RRC connected state.

Embodiment 41: According to the method in Embodiment 40, the method further includes the following.

The first terminal device receives a fourth message to the second terminal device, where the fourth message is used to indicate that the first terminal device enters the RRC connected state, or indicated that the first terminal device fails to enter the RRC connected state.

Embodiment 42: According to the method in Embodiment 40 or Embodiment 41, the third information further includes a reason for which the second terminal device requests to establish a connection to the first terminal device.

Embodiment 43: According to the method in any one of Embodiment 40 to Embodiment 42, the method further includes the following.

The first terminal device skips performing a UAC process before the first terminal device performs the random access process.

Embodiment 44: According to the method in any one of Embodiment 40 to Embodiment 43, that the first terminal device performs a random access process includes the following.

The first terminal device sends a random access preamble to a first network device.

The first terminal device receives a random access response message from the first network device.

The first terminal device sends an RRC setup request message to the first network device.

The first terminal device receives an RRC setup complete message from the first network device, where the RRC setup complete message is used to indicate that an RRC connection is successfully set up, or is used to indicate that an RRC connection is refused.

Embodiment 45: According to the method in Embodiment 44, the method includes the following.

The random access preamble is preconfigured, and the random access preamble is used to indicate that a reason for which the first terminal device enters the RRC connected state is for another terminal device to perform path switch.

The RRC setup request message includes reason information for which the first terminal device enters the RRC connected state.

Embodiment 46: According to the method in any one of Embodiment 40 to Embodiment 45, the third message is a discovery message, a DCR message, or a security setup complete message.

Embodiment 47: According to the method in Embodiment 46, that the third message is used to indicate to enter the RRC connected state includes the following.

The third message includes the second indication information, where the second indication information is used to indicate to enter the RRC connected state.

Alternatively, the third message does not include the second indication information, and is used to indicate to enter the RRC connected state.

Embodiment 48: According to the method in Embodiment 46, that the third message is used to indicate to enter the RRC connected state includes the following.

When the third message includes a C-RNTI of the first terminal device, or the third message does not include an identifier of the first terminal device, the third message indicates the first terminal device to enter the RRC connected state.

Embodiment 49: According to the method in any one of Embodiment 40 to Embodiment 45, the third information is a PC5-RRC message transmitted after the second terminal device establishes a PC5-S connection to the first terminal device.

Embodiment 50: According to the method in any one of Embodiment 40 to Embodiment 45, the third information is the first RRC message that is used to establish a connection to the first network device and that is transmitted after the second terminal device establishes a PC5-S connection to the first terminal device.

Embodiment 51: According to the method in any one of Embodiment 40 to Embodiment 50, the fourth message is a discovery message, a DCR response message, or a PC5-RRC message; or the fourth message is a data packet.

Embodiment 52: A communication method is provided, including the following.

A second terminal device sends a fifth message to a first terminal device, where the fifth message is used to indicate to enter an RRC connected state, and the second terminal device requests the first terminal device to provide a relay service.

The second terminal device receives a sixth message from the first terminal device, where the sixth message is used to indicate that the first terminal device has completed configuration of a first relay link, and the first relay link is used to provide the relay service for the second terminal device.

Embodiment 53: According to the method in Embodiment 52, the method further includes the following.

The second terminal device receives a first RRC message from the third network device, where the first RRC message includes first indication information, and the first indication information is used to indicate to trigger the first terminal device to enter the RRC connected state.

Embodiment 54: According to the method in Embodiment 52 or Embodiment 53, the first RRC message further includes first configuration information, and the first configuration information is used to configure the second terminal device to access a network by using the first terminal device.

Embodiment 55: According to the method in Embodiment 54, the fifth message is further used to indicate that the second terminal device has completed configuration of a second relay link, and the second relay link is used to access a network by using the first terminal device.

Embodiment 56: According to the method in any one of Embodiment 52 to Embodiment 55, the method includes the following.

The fifth message is a PC5-S message, a DCR message, or a security setup complete message.

Embodiment 57: According to the method in any one of Embodiment 52 to Embodiment 56, the method includes the following.

The sixth message is a DCR response message.

Embodiment 58: According to the method in Embodiment 52 or Embodiment 53, the method further includes the following.

The second terminal device receives first configuration information from the third network device, and the first configuration information is used to configure the second terminal device to access a network by using the first terminal device.

The second terminal device performs configuration based on the first configuration information.

After completing configuration, the second terminal device sends a seventh message to the first terminal device, where the seventh message is used to indicate that the second terminal device has completed configuration of a second relay link, and the second relay link is used to access a network by using the first terminal device.

Embodiment 59: According to the method in Embodiment 58, the method includes the following.

The sixth message is a PC5-RRC message.

Embodiment 60: According to the method in Embodiment 58 or Embodiment 59, the method includes the following.

The seventh message is a PC5-RRC message.

Embodiment 61: A communication method is provided, including the following.

A first terminal device receives a fifth message from a second terminal device, where the fifth message is used to indicate to enter an RRC connected state.

The first terminal device performs configuration based on second configuration information from s third network device, and the second configuration information is used to configure the first terminal device to provide a relay service for the second terminal device.

After completing configuration, the first terminal device sends a sixth message to the second terminal device, where the sixth message is used to indicate that the first terminal device has completed configuration of a first relay link, and the first relay link is used to provide the relay service for the second terminal device.

Embodiment 62: According to the method in Embodiment 61, the fifth message is further used to indicate that the second terminal device has completed configuration of a second relay link, and the second relay link is used to access a network by using the first terminal device.

Embodiment 63: According to the method in Embodiment 62, the method includes the following.

The fifth message is a PC5-S message, a DCR message, or a security setup complete message.

Embodiment 64: According to the method in Embodiment 62 or Embodiment 63, the sixth message is a DCR response message.

Embodiment 65: According to the method in Embodiment 61, the method further includes the following.

The first terminal device receives a seventh message from the second terminal device, where the seventh message is used to indicate that the second terminal device has completed configuration of a second relay link, and the second relay link is used to access a network by using the first terminal device.

Embodiment 66: According to the method in Embodiment 65, the method includes the following.

The sixth message is a PC5-RRC message.

Embodiment 67: According to the method in Embodiment 65 or Embodiment 66, the method includes the following.

The seventh message is a PC5-RRC message.

Embodiment 68: A communication method is provided, including the following.

A first network device obtains fourth information, where the fourth information includes an identifier of a first terminal device, and the fourth information further includes state information of the first terminal device, or the fourth information is further used to indicate to page the first terminal device; and the state information of the first terminal device is used to indicate that a state of the first terminal device is an RRC inactive state or an RRC idle state.

The first network device generates a paging message, where the paging message is used to page the first terminal device.

The first network device sends the paging message.

Embodiment 69: According to the method in Embodiment 68, that a first network device obtains fourth information includes the following.

The first network device receives third information from the second terminal device and obtains the fourth information based on the third information, where the third information includes the state information of the first terminal device and includes the identifier of the first terminal device or a measurement report of the first terminal device, and the second terminal device requests the first terminal device to provide a relay service.

Alternatively, the first network device receives the fourth information from a second network device.

Embodiment 70: According to the method in Embodiment 68 or Embodiment 69, the method includes the following.

When the state of the first terminal device is the RRC inactive state, the paging message includes an I-RNTI of the first terminal device.

When the state of the first terminal device is the RRC idle state, the paging message includes a 5G-S-TMSI of the first terminal device.

Embodiment 71: According to the method in any one of Embodiment 68 to Embodiment 70, the method further includes the following.

The first network device sends first information to a third network device, where the first information is used to determine whether the first terminal device is authorized to provide a relay service.

The first network device receives second information from the third network device, where the second information is used to indicate that the first terminal device is authorized to provide a relay service.

Embodiment 72: According to the method in Embodiment 71, the second information is a context of the first terminal device.

Embodiment 73: According to the method in Embodiment 68 or Embodiment 69, the fourth information further includes an identifier of a cell in which the first terminal device is located, and that the first network device sends the paging message includes the following.

The first network device sends the paging message in the cell corresponding to the identifier of the cell.

Embodiment 74: According to the method in Embodiment 68, Embodiment 69, or Embodiment 73, the method further includes the following.

The first network device determines, based on the context of the first terminal device, that the first terminal device is authorized to provide a relay service.

Embodiment 75: A communication apparatus is provided. The communication apparatus includes a processing unit and a transceiver unit. The processing unit and the transceiver unit are coupled, to perform the method according to any one of Embodiment 1 to Embodiment 9 or the method according to any one of Embodiment 68 to Embodiment 74.

Embodiment 76: A communication apparatus is provided. The communication apparatus includes a processing unit and a transceiver unit. The processing unit and the transceiver unit are coupled, to perform the method according to any one of Embodiment 10 to Embodiment 18, the method according to any one of Embodiment 19 to Embodiment 26, the method according to any one of Embodiment 27 to Embodiment 39, the method according to any one of Embodiment 40 to Embodiment 51, the method according to any one of Embodiment 52 to Embodiment 60, or the method according to any one of Embodiment 61 to Embodiment 67.

Embodiment 77: A communication apparatus is provided. The communication apparatus includes a processor and a transceiver. The processor and the transceiver are coupled, to perform the method according to any one of Embodiment 1 to Embodiment 9 or the method according to any one of Embodiment 68 to Embodiment 74.

Embodiment 78: A communication apparatus is provided. The communication apparatus includes a processor and a transceiver. The processor and the transceiver are coupled, to perform the method according to any one of Embodiment 10 to Embodiment 18, the method according to any one of Embodiment 19 to Embodiment 26, the method according to any one of Embodiment 27 to Embodiment 39, the method according to any one of Embodiment 40 to Embodiment 51, the method according to any one of Embodiment 52 to Embodiment 60, or the method according to any one of Embodiment 61 to Embodiment 67.

Embodiment 79: A chip is provided. The chip includes a processor. When the processor executes instructions, the processor is configured to perform the method according to any one of Embodiment 1 to Embodiment 9 or the method according to any one of Embodiment 68 to Embodiment 74.

Embodiment 80: A chip is provided. The chip includes a processor. When the processor executes instructions, the processor is configured to perform the method according to any one of Embodiment 10 to Embodiment 18, the method according to any one of Embodiment 19 to Embodiment 26, the method according to any one of Embodiment 27 to Embodiment 39, the method according to any one of Embodiment 40 to Embodiment 51, the method according to any one of Embodiment 52 to Embodiment 60, or the method according to any one of Embodiment 61 to Embodiment 67.

Embodiment 81: A communication system is provided. The communication system includes the communication apparatus according to Embodiment 75, the communication apparatus according to Embodiment 77, or the communication apparatus according to Embodiment 79, and includes the communication apparatus according to Embodiment 76, the communication apparatus according to Embodiment 78, or the communication apparatus according to Embodiment 80.

Embodiment 82: A computer-readable storage medium is provided. The computer-readable storage medium stores a computer program. When the computer program is run on a computer, the computer is enabled to perform the method according to any one of Embodiment 1 to Embodiment 9 or the method according to any one of Embodiment 68 to Embodiment 74.

Embodiment 83: A computer-readable storage medium is provided. The computer-readable storage medium stores a computer program. When the computer program is run on a computer, the computer is enabled to perform the method according to any one of Embodiment 10 to Embodiment 18, the method according to any one of Embodiment 19 to Embodiment 26, the method according to any one of Embodiment 27 to Embodiment 39, the method according to any one of Embodiment 40 to Embodiment 51, the method according to any one of Embodiment 52 to Embodiment 60, or the method according to any one of Embodiment 61 to Embodiment 67.

Embodiment 84: A computer program product is provided. The computer program product is configured to store a computer program. When the computer program is run on a computer, the computer is enabled to implement the method according to any one of Embodiment 1 to Embodiment 9, or perform the method according to any one of Embodiment 68 to Embodiment 74.

Embodiment 85: A computer program product is provided. The computer program product is configured to store a computer program. When the computer program is executed by a computer, the computer can implement the method according to any one of Embodiment 10 to Embodiment 18, or perform the method according to any one of Embodiment 19 to Embodiment 26, the method according to any one of Embodiment 27 to Embodiment 39, the method according to any one of Embodiment 40 to Embodiment 51, the method according to any one of Embodiment 52 to Embodiment 60, or the method according to any one of Embodiment 61 to Embodiment 67.

Although this application is described with reference to embodiments herein, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of "a plurality of". A single processor or another unit may implement several functions enumerated in the claims. Some measures are recorded in dependent claims that are different from each other, but this does not mean that these measures cannot be combined to produce a better effect.

## Claims

1. A communication method, comprising:
receiving, by a first network device, first information from a second terminal device or a third network device, wherein the first information comprises an identifier of a first terminal device, and the third network device is a network device on which the second terminal device camps;
sending, by the first network device, the identifier of the first terminal device to a second network device, wherein the identifier of the first terminal device is used to determine whether the first terminal device is authorized to provide a relay service; and
receiving, by the first network device, second information from the second network device, wherein the second information is used to indicate that the first terminal device is authorized to provide a relay service, or indicate that the first terminal device is not authorized to provide a relay service.

2. The method according to claim 1, wherein the first information further comprises state information of the first terminal device, and the state information of the first terminal device is used to indicate that the first terminal device is in an RRC inactive state or an RRC idle state.

3. The method according to claim 1 or 2, wherein when the second information is used to indicate that the first terminal device is authorized to provide a relay service, the method further comprises:
sending, by the first network device, a first RRC message, wherein the first RRC message comprises first configuration information, and the first configuration information is used to configure the second terminal device to access a network by using the first terminal device.

4. The method according to claim 3, wherein the first RRC message further comprises first indication information, and the first indication information is used to indicate to trigger the first terminal device to enter an RRC connected state.

5. The method according to any one of claims 1 to 4, wherein the second information is a context of the first terminal device, or the second information is information used to indicate whether the first terminal device is authorized to provide a relay service.

6. The method according to any one of claims 1 to 5, wherein
when the first terminal device is in the RRC inactive state, the second network device is an anchor network device of the first terminal device; or
when the first terminal device is in the RRC idle state, the second network device is a core network device.

7. The method according to any one of claims 1 to 3, wherein the method further comprises:
generating, by the first network device, a paging message, wherein the paging message is used to page the first terminal device; and
sending, by the first network device, the paging message.

8. The method according to claim 7, wherein
when a state of the first terminal device is the RRC inactive state, the paging message comprises an I-RNTI of the first terminal device; or
when a state of the first terminal device is the RRC idle state, the paging message comprises a 5G-S-TMSI of the first terminal device.

9. The method according to claim 7 or 8, wherein the first information further comprises an identifier of a cell in which the first terminal device is located, and the sending, by the first network device, the paging message comprises:
sending, by the first network device, the paging message in the cell corresponding to the identifier of the cell.

10. A communication method, comprising:
measuring, by a second terminal device, a first terminal device, and determining a state of the first terminal device, wherein the state of the first terminal device is an RRC connected state, an RRC inactive state, or an RRC idle state;
sending, by the second terminal device, third information to a third network device, wherein the third information comprises state information of the first terminal device, and the state information of the first terminal device is used to indicate the state of the first terminal device; and
receiving, by the second terminal device, a first RRC message from the third network device, wherein the first RRC message comprises first configuration information, and the first configuration information is used to configure the second terminal device to access a network by using the first terminal device.

11. The method according to claim 10, wherein the first RRC message further comprises first indication information, and the first indication information is used to indicate to trigger the first terminal device to enter the RRC connected state.

12. The method according to claim 10 or 11, wherein the third information further comprises a measurement report of the first terminal device, or the third information further comprises an identifier of the first terminal device.

13. The method according to any one of claims 10 to 12, wherein the method further comprises:
receiving, by the second terminal device, a discovery message from the first terminal device, wherein the discovery message comprises the state information of the first terminal device.

14. The method according to claim 13, wherein the state information of the first terminal device is comprised in a message body or a message header of the discovery message, or the state information of the first terminal device is indicated by using a layer-2 destination identifier comprised in the discovery message.

15. The method according to any one of claims 10 to 12, wherein the method further comprises:
receiving, by the second terminal device, a discovery message from the first terminal device; and
determining, by the second terminal device, the state of the first terminal device based on the identifier of the first terminal device comprised in the discovery message.

16. The method according to claim 15, wherein the determining, by the second terminal device, the state of the first terminal device based on the identifier of the first terminal device comprised in the discovery message comprises:
determining, by the second terminal device when the identifier of the first terminal device comprised in the discovery message is a C-RNTI, that the state of the first terminal device is the RRC connected state;
determining, by the second terminal device when the identifier of the first terminal device comprised in the discovery message is a resume identifier or an I-RNTI, that the state of the first terminal device is the RRC inactive state; or
determining, by the second terminal device when the discovery message does not comprise the identifier of the first terminal device or the identifier of the first terminal device comprised in the discovery message is a 5G-S-TMSI, that the state of the first terminal device is the RRC idle state.

17. The method according to any one of claims 10 to 12, wherein the method further comprises:
receiving, by the second terminal device, a discovery message from the first terminal device by using a first resource pool, wherein the first resource pool is used by a terminal device in the RRC inactive state or the RRC idle state; and
determining, by the second terminal device based on the first resource pool, whether the first terminal device is in an RRC active state or the RRC idle state.

18. The method according to any one of claims 10 to 12, wherein the method further comprises:
receiving, by the second terminal device, a system message from the first terminal device, wherein the system message comprises the state information of the first terminal device.

19. A communication method, comprising:
sending, by a first terminal device, a second message, wherein the second message is used to indicate a state of the first terminal device, and the state of the first terminal device is an RRC connected state, an RRC inactive state, or an RRC idle state.

20. The method according to claim 19, wherein the sending, by a first terminal device, a second message comprises:
broadcasting, by the first terminal device, the second message; or
sending, by the first terminal device, the second message to a second terminal device.

21. The method according to claim 19 or 20, wherein the second message is a discovery message, and the discovery message comprises state information of the first terminal device.

22. The method according to claim 21, wherein the state information of the first terminal device is comprised in a message body or a message header of the discovery message, or the state information of the first terminal device is indicated by using a layer-2 destination identifier comprised in the discovery message.

23. The method according to claim 19 or 20, wherein the second message is a discovery message, and the discovery message indicates the state of the first terminal device based on an identifier of the first terminal device comprised in the discovery message.

24. The method according to claim 23, wherein
when the identifier of the first terminal device comprised in the discovery message is a C-RNTI, it indicates that the state of the first terminal device is the RRC connected state;
when the identifier of the first terminal device comprised in the discovery message is a resume identifier or an I-RNTI, it indicates that the state of the first terminal device is the RRC inactive state; or
when the discovery message does not comprise the identifier of the first terminal device or the identifier of the first terminal device comprised in the discovery message is a 5G-S-TMSI, it indicates that the state of the first terminal device is the RRC idle state.

25. The method according to claim 19 or 20, wherein the second message is a discovery message, and the discovery message indicates the state of the first terminal device by using a resource pool used for sending the discovery message.

26. The method according to claim 19 or 20, wherein the second message is a system message, and the system message comprises state information of the first terminal device.

27. A communication apparatus, comprising a transceiver unit and a processing unit, wherein the transceiver unit is coupled to the processing unit, to perform the method according to any one of claims 1 to 9, or perform the method according to any one of claims 10 to 18, or perform the method according to any one of claims 19 to 26.

28. A computer-readable storage medium, wherein the computer-readable storage medium is configured to a computer program, and when the computer program is run on a computer, the computer is enabled to perform the method according to any one of claims 1 to 9, or the computer is enabled to perform the method according to any one of claims 10 to 18, or the computer is enabled to perform the method according to any one of claims 19 to 26.
